# EUROPEAN PATENT APPLICATION

(11) **EP 4 819 739 A1**
(43) Date of publication of application: **07.10.2026**
(21) Application number: 24902673.3
(22) Date of filing: 04.12.2024
(51) Int. Cl.: H04W 72/23

(54) **INFORMATION TRANSMISSION METHOD AND COMMUNICATION APPARATUS**

(30) Priority: 15.12.2023 CN 202311739076
(71) Applicant: Huawei Technologies Co., Ltd., Shenzhen, Guangdong 518129 (CN)
(72) Inventor: GAO, Xiang, Shenzhen, Guangdong 518129 (CN); CAI, Shijie, Shenzhen, Guangdong 518129 (CN); HU, Chen, Shenzhen, Guangdong 518129 (CN); JIANG, Jiyan, Shenzhen, Guangdong 518129 (CN); ZHANG, Zhening, Shenzhen, Guangdong 518129 (CN); LIU, Kunpeng, Shenzhen, Guangdong 518129 (CN)
(74) Representative: Goddar, Heinz J.
(86) International application number: PCT/CN2024/136702
(87) International publication number: WO 2025/124252

(57) **Abstract**

Embodiments of this application provide an information transmission method and a communication apparatus. The method includes: generating configuration information for a sounding reference signal SRS; and sending the configuration information. The configuration information indicates a first orthogonal cover code OCC sequence corresponding to a first SRS resource. A repetition factor corresponding to the first SRS resource is R. The first OCC sequence is a time domain OCC sequence determined from at least two candidate sequence sets. The at least two candidate sequence sets include T1 mutually orthogonal time domain OCC sequences each having a sequence length of M1 and T2 mutually orthogonal time domain OCC sequences each having a sequence length of M2, where 1<T1≤M1≤R, 1<T2≤M2≤R, and M1 is different from M2. In this way, because the sequence lengths of the time domain OCC sequences in different candidate sequence sets are different, time domain OCC sequences with different sequence lengths may be flexibly superimposed in the time domain, so that a plurality of SRS resources can be efficiently multiplexed on the same time-frequency resource.

## Description

This application claims priority to Chinese Patent Application No. 202311739076.1, filed with the China National Intellectual Property Administration on December 15, 2023 and entitled "INFORMATION TRANSMISSION METHOD AND COMMUNICATION APPARATUS", which is incorporated herein by reference in its entirety.

### TECHNICAL FIELD

This application relates to the communication field, and in particular, to an information transmission method and a communication apparatus.

### BACKGROUND

A sounding reference signal (sounding reference signal, SRS) is a critical signal for obtaining channel state information (channel state information, CSI). The network side may configure a repetition factor (repetition factor) for an SRS resource of a terminal apparatus, enabling the terminal apparatus to repeatedly transmit the SRS on a plurality of consecutive orthogonal frequency division multiplexing (orthogonal frequency division multiplexing, OFDM) symbols. This increases the equivalent signal-to-noise ratio (signal-to-noise ratio, SNR) of the SRS, thereby improving channel estimation accuracy.

However, repeated transmission of the SRS reduces the multiplexing efficiency of SRS resources. That is, under the same resource overhead, only a limited quantity of SRS resources can be allocated to different terminal apparatuses in a cell. Therefore, how to design and configure the SRS resource sequence and time-frequency resource mapping to improve the multiplexing efficiency of SRS resources during repeated transmission of the SRS remains an urgent problem.

### SUMMARY

Embodiments of this application provide an information transmission method and a communication apparatus to improve the multiplexing efficiency of SRS resources during repeated transmission of an SRS.

To achieve the foregoing objective, the following technical solutions are used in embodiments of this application.

According to a first aspect, an information transmission method is provided. The method may be performed by a network apparatus. The network apparatus herein may be the network apparatus, or may be a processor, a module, a chip, a chip system, or the like for implementing the method in the network apparatus. An example in which the method is performed by the network apparatus is used below for description. The method includes: generating configuration information for a sounding reference signal SRS; and sending the configuration information. The configuration information indicates a first orthogonal cover code OCC sequence corresponding to a first SRS resource. A repetition factor corresponding to the first SRS resource is R. The first OCC sequence is a time domain OCC sequence determined from at least two candidate sequence sets. The at least two candidate sequence sets include a first candidate sequence set and a second candidate sequence set. The first candidate sequence set includes T1 mutually orthogonal time domain OCC sequences each having a sequence length of M1. The second candidate sequence set includes T2 mutually orthogonal time domain OCC sequences each having a sequence length of M2. 1<T1≤M1≤R, 1<T2≤M2≤R, M1 is different from M2, R is an integer greater than 2, and T1, T2, M1, and M2 are integers.

In this embodiment of this application, the first OCC sequence is a time domain OCC sequence determined from the at least two candidate sequence sets, and different time domain OCC sequences in each of the at least two candidate sequence sets are orthogonal. Therefore, the network apparatus configures the first OCC sequence for the first SRS resource by using the configuration information for the SRS, to use orthogonality between different time domain OCC sequences in each candidate sequence set, so that more SRS resources can be superimposed and sent on R time domain resources for repeatedly sending the SRS, that is, an SRS resource multiplexing capability is improved. Further, because sequence lengths of time domain OCC sequences included in different candidate sequence sets are different, when R is greater than 2, time domain OCC sequences with different sequence lengths may be flexibly superimposed on the R time domain resources, so that different SRS resources can be efficiently multiplexed on a same time-frequency resource. Therefore, based on the information transmission method provided in this embodiment of this application, the multiplexing efficiency of SRS resources can be improved during repeated transmission of the SRS.

According to a second aspect, an information method is provided. The method may be performed by a terminal apparatus. The terminal apparatus herein may be the terminal apparatus, or may be a processor, a module, a chip, a chip system, or the like for implementing the method in the terminal apparatus. An example in which the method is performed by the terminal apparatus is used below for description. The method includes: receiving configuration information for a sounding reference signal SRS; and determining a first orthogonal cover code OCC sequence based on the configuration information. The configuration information indicates the first orthogonal cover code OCC sequence corresponding to a first SRS resource. A repetition factor corresponding to the first SRS resource is R. The first OCC sequence is a time domain OCC sequence determined from at least two candidate sequence sets. The at least two candidate sequence sets include a first candidate sequence set and a second candidate sequence set. The first candidate sequence set includes T1 mutually orthogonal time domain OCC sequences each having a sequence length of M1. The second candidate sequence set includes T2 mutually orthogonal time domain OCC sequences each having a sequence length of M2. 1<T1≤M1≤R, 1<T2≤M2≤R, M1 is different from M2, R is an integer greater than 2, and T1, T2, M1, and M2 are integers.

For technical effects of the second aspect, refer to the first aspect. Details are not described.

With reference to the first aspect or the second aspect, in a possible implementation, the first OCC sequence corresponds to each of R/M time domain resource groups, M consecutive time domain units included in each time domain resource group correspond to M elements included in the first OCC sequence, and the R/M time domain resource groups are time domain resource groups for repeated transmission of the SRS. Alternatively, M elements included in the first OCC correspond to R consecutive time domain units, and the R consecutive time domain units are time domain units for repeated transmission of the SRS. M is equal to M1 or M2. That is, the first OCC sequence configured by the network apparatus for the first SRS resource may enable the M-length time domain OCC sequence to be mapped to the R time domain units occupied by the first SRS resource, so that orthogonality of the TD-OCC can be ensured to a maximum extent, to ensure channel estimation performance of the SRS. In addition, when the repetition factor R is greater than M, the R time domain units may be grouped into a plurality of time domain resource groups (each resource group includes M time domain units) through time domain unit grouping and mapping, so that SRS resources configured with different time domain OCC lengths or repetition factors R can be multiplexed on a same time-frequency resource.

With reference to the first aspect or the second aspect, in a possible implementation, the first SRS resource includes at least one port, and an SRS sequence corresponding to each of the at least one port in an *l*'^{th} time domain unit of N time domain units is determined based on a k^{th} element in the first OCC sequence and a first SRS sequence corresponding to each port. The first SRS sequence corresponding to each port is determined based on an SRS base sequence and a cyclic shift CS value that correspond to each port. The N time domain units are time domain units occupied by each port, k=*l*' mod *M*, and M is equal to M1 or M2. That is, the SRS sequence corresponding to the *l*'^{th} time domain unit in the first SRS resource may be determined by using the k^{th} element in the first OCC sequence and the first SRS sequence corresponding to each port. In this way, by using orthogonality between the first OCC sequence and another time domain OCC sequence, more SRS resources can be superimposed and sent on the R time domain resources, for repeatedly sending the SRS, corresponding to the first SRS resource.

With reference to the first aspect or the second aspect, in a possible implementation, the at least one port includes a port pi, and an SRS sequence *r*^{(*pi*)}(*n, l*') corresponding to the port *pᵢ* in the *l*'^{th} time domain unit is ${r}^{\left({p}_{i}\right)} \left(n,l′\right) = {w}_{t}^{\left(l′ mod M\right)} {r}^{\left({α}_{i}, δ\right)} \left(n\right) , 0 \leq n < {M}_{sc}^{SRS} - 1$. Herein, *n* is an index of an element in the SRS sequence, ${M}_{sc}^{SRS} = {mN}_{sc}^{RB} / {2}^{δ}$, *m* is a quantity of resource blocks RBs occupied for frequency-hopping transmission of the SRS, ${N}_{sc}^{RB}$ is a quantity of subcarriers SCs included in one RB, δ = log₂(K_{TC}), *K*_{TC} is a comb spacing corresponding to the port *pᵢ,* ${w}_{t}^{\left(l′ mod M\right)}$ is an (*l' mod M*)^{th} element in the first OCC sequence, M is equal to M1 or M2, *r*^{(α*i,δ*)}(*n*) is a first SRS sequence corresponding to the port *pᵢ, r*^{(α*i,δ*)}=*e^{jαin}r̅*(*n*), *αᵢ* is a CS value corresponding to the port *pᵢ,* and *r̅*(*n*) is an SRS base sequence corresponding to the port *pᵢ*. That is, the terminal apparatus may determine, by multiplying the (*l' mod M*)^{th} element in the first OCC sequence by the first SRS sequence *r*^{(α*i,δ*)}(*n*) corresponding to the port *pᵢ,* an SRS sequence on which the first OCC sequence is superimposed in the time domain. This can reduce implementation complexity of determining the SRS sequence corresponding to the port *pᵢ* in the *l*'^{th} time domain unit, and facilitate deployment.

According to a third aspect, an information transmission method is provided. The method may be performed by a network apparatus. The network apparatus herein may be the network apparatus, or may be a processor, a module, a chip, a chip system, or the like for implementing the method in the network apparatus. An example in which the method is performed by the network apparatus is used below for description. The method includes: generating configuration information for a sounding reference signal SRS; and sending the configuration information. The configuration information indicates a first orthogonal cover code OCC sequence corresponding to a first SRS resource. The first OCC sequence is determined based on a frequency domain OCC sequence and a time domain OCC sequence. The frequency domain OCC sequence and the time domain OCC sequence are determined from at least one candidate sequence set. The at least one candidate sequence set includes a first candidate sequence set. The first candidate sequence set is determined based on T1 mutually orthogonal frequency domain OCC sequences and T2 mutually orthogonal time domain OCC sequences. A first frequency domain OCC sequence in the T1 mutually orthogonal frequency domain OCC sequences corresponds to A time domain OCC sequences in the T2 mutually orthogonal time domain OCC sequences, or a first time domain OCC sequence in the T2 mutually orthogonal time domain OCC sequences corresponds to A frequency domain OCC sequences in the T1 mutually orthogonal frequency domain OCC sequences. A is an integer greater than or equal to 2, and T1 and T2 are positive integers.

In this embodiment of this application, the first OCC sequence is determined based on the time domain OCC sequence and the frequency domain OCC sequence in the first candidate sequence set, and the first frequency domain OCC sequence in the T1 mutually orthogonal frequency domain OCC sequences corresponds to the A time domain OCC sequences in the T2 mutually orthogonal time domain OCC sequences, or the first time domain OCC sequence in the T2 mutually orthogonal time domain OCC sequences corresponds to the A frequency domain OCC sequences in the T1 mutually orthogonal frequency domain OCC sequences, to construct the first candidate sequence set. In this way, SRS resource multiplexing at different time-frequency granularities can be supported to adapt to different channel conditions, thereby meeting diversified SRS resource quantity multiplexing requirements and diversified channel estimation requirements.

According to a fourth aspect, an information transmission method is provided. The method may be performed by a terminal apparatus. The terminal apparatus herein may be the terminal apparatus, or may be a processor, a module, a chip, a chip system, or the like for implementing the method in the terminal apparatus. An example in which the method is performed by the terminal apparatus is used below for description. The method includes: receiving configuration information for a sounding reference signal SRS; and determining a first OCC sequence based on the configuration information. The configuration information indicates the first orthogonal cover code OCC sequence corresponding to a first SRS resource. The first OCC sequence is determined based on a frequency domain OCC sequence and a time domain OCC sequence. The frequency domain OCC sequence and the time domain OCC sequence are determined from at least one candidate sequence set. The at least one candidate sequence set includes a first candidate sequence set. The first candidate sequence set is determined based on T1 mutually orthogonal frequency domain OCC sequences and T2 mutually orthogonal time domain OCC sequences. A first frequency domain OCC sequence in the T1 mutually orthogonal frequency domain OCC sequences corresponds to A time domain OCC sequences in the T2 mutually orthogonal time domain OCC sequences, or a first time domain OCC sequence in the T2 mutually orthogonal time domain OCC sequences corresponds to A frequency domain OCC sequences in the T1 mutually orthogonal frequency domain OCC sequences. A is an integer greater than or equal to 2, and T1 and T2 are positive integers.

For technical effects of the fourth aspect, refer to the third aspect. Details are not described.

With reference to the third aspect or the fourth aspect, in a possible implementation, the first candidate sequence set includes T2 sequences, each of the T2 sequences includes a frequency domain OCC sequence having a sequence length of S1 and a time domain OCC sequence having a sequence length of M1, S1<M1, T1≤S1, and T2≤M1. Alternatively, the first candidate sequence set includes T1 sequences, each of the T1 sequences includes a frequency domain OCC sequence having a sequence length of S1 and a time domain OCC sequence having a sequence length of M1, S1>M1, T2≤M1, and T1≤S1. S1 and M1 are positive integers. That is, when the first frequency domain OCC sequence in the T1 mutually orthogonal frequency domain OCC sequences corresponds to the A time domain OCC sequences in the T2 mutually orthogonal time domain OCC sequences, S1<M1, T1≤S1, and T2≤M1 are set, so that utilization of a quantity of orthogonal sequences between OCC sequences can be maximized, to increase a capacity of the SRS, that is, increase a quantity of SRS resources that can be multiplexed on a same time-frequency resource. Similarly, when the first time domain OCC sequence in the T2 mutually orthogonal time domain OCC sequences corresponds to the A frequency domain OCC sequences in the T1 mutually orthogonal frequency domain OCC sequences, S1>M1, T2≤M1, and T1≤S1 are set, so that utilization of a quantity of orthogonal sequences between OCC sequences can be maximized, to increase a capacity of the SRS.

With reference to the third aspect or the fourth aspect, in a possible implementation, the first candidate sequence set includes T2 sequences, and each of the T2 sequences includes a frequency domain OCC sequence having a sequence length of S1 and a time domain OCC sequence having a sequence length of M1. The frequency domain OCC sequence having a sequence length of S1 is ${w}_{f} = \left[{w}_{f}^{0},{w}_{f}^{1},…,{w}_{f}^{S 1 - 1}\right]$, and the time domain OCC sequence having a sequence length of M1 is ${w}_{t} = \left[{w}_{t}^{0},{w}_{t}^{1},…,{w}_{t}^{M 1 - 1}\right]$. An OCC sequence corresponding to each of the T2 sequences is an OCC sequence ${w}_{OCC} = \left[{w}_{f}^{0}{w}_{t}^{0},{w}_{f}^{0}{w}_{t}^{1},…,{w}_{f}^{0}{w}_{t}^{M 1 - 1},…,{w}_{f}^{S 1 - 1}{w}_{t}^{0},{w}_{f}^{S 1 - 1}{w}_{t}^{1},…,{w}_{f}^{S 1 - 1}{w}_{t}^{M 1 - 1}\right]$ having a sequence length of S1×M1. The OCC sequence corresponding to each sequence includes S1 subsequences, and a (j+qZ)^{th} subsequence in the S1 subsequences is ${s}_{j + qZ} =$ $\left[{w}_{f}^{Zq}{w}_{t}^{\frac{M 1}{Z} j},{w}_{f}^{Zq}{w}_{t}^{\frac{M 1}{Z} j + 1},…,{w}_{f}^{Zq}{w}_{t}^{\frac{M 1}{Z} \left(j+1\right) - 1},…,{w}_{f}^{Z \left(q+1\right) - 1}{w}_{t}^{\frac{M 1}{Z} j},{w}_{f}^{Z \left(q+1\right) - 1}{w}_{t}^{\frac{M 1}{Z} j + 1},…,{w}_{f}^{Z \left(q+1\right) - 1}{w}_{t}^{\frac{M 1}{Z} \left(j+1\right) - 1}\right]$. First subsequences with an index of j+qZ included in OCC sequences corresponding to the respective sequences are mutually orthogonal. Z is a non-negative integer power of 2 and is less than M1, 0≤j<Z, $0 \leq q < \frac{S 1}{Z}$, and j and q are integers. That is, based on a combination of different elements in the time domain OCC sequence and different elements in the frequency domain OCC sequence, the OCC sequence corresponding to each sequence is divided into a maximum of log₂ *M*1 element combination manners. Each combination manner corresponds to S1 first subsequences, and first subsequences with an index of j+qZ corresponding to the T2 sequences are mutually orthogonal. In this way, the first candidate sequence set can support SRS resource multiplexing and channel estimation at a maximum of log₂ M1 time-frequency granularities, thereby further meeting diversified SRS resource quantity multiplexing requirements and diversified channel estimation requirements.

With reference to the third aspect or the fourth aspect, in a possible implementation, the at least one candidate sequence set further includes a second candidate sequence set. The second candidate sequence set is determined based on T3 mutually orthogonal frequency domain OCC sequences and T4 mutually orthogonal time domain OCC sequences. A second frequency domain OCC sequence in the T3 mutually orthogonal frequency domain OCC sequences corresponds to A time domain OCC sequences in the T4 mutually orthogonal time domain OCC sequences, or a second time domain OCC sequence in the T4 mutually orthogonal time domain OCC sequences corresponds to A frequency domain OCC sequences in the T3 mutually orthogonal frequency domain OCC sequences. A sequence length of the T4 mutually orthogonal time domain OCC sequences is different from that of the T2 mutually orthogonal time domain OCC sequences. That is, because sequence lengths of time domain OCC sequences included in different candidate sequence sets are different, time domain OCC sequences with different sequence lengths may be flexibly superimposed on a time domain resource for repeatedly sending the SRS, so that different SRS resources can be efficiently multiplexed on a same time-frequency resource, thereby improving the multiplexing efficiency of SRS resources.

With reference to the third aspect or the fourth aspect, in a possible implementation, the second candidate sequence set includes T4 sequences, each of the T4 sequences includes a frequency domain OCC sequence having a sequence length of S2 and a time domain OCC sequence having a sequence length of M2, S2<M2, T3≤S2, T4≤M2, and M1 is different from M2. Alternatively, the second candidate sequence set includes T3 sequences, each of the T3 sequences includes a frequency domain OCC sequence having a sequence length of S2 and a time domain OCC sequence having a sequence length of M2, S2>M2, T3≤S2, and T4≤M2. S2 and M2 are positive integers. That is, when the second frequency domain OCC sequence in the T3 mutually orthogonal frequency domain OCC sequences corresponds to the A time domain OCC sequences in the T4 mutually orthogonal time domain OCC sequences, S2<M2, T3≤S2, and T4≤M2 are set, so that utilization of a quantity of orthogonal sequences between OCC sequences can be maximized, to increase a capacity of the SRS, that is, increase a quantity of SRS resources that can be multiplexed on a same time-frequency resource. Similarly, when the second time domain OCC sequence in the T4 mutually orthogonal time domain OCC sequences corresponds to the A frequency domain OCC sequences in the T3 mutually orthogonal frequency domain OCC sequences, S2>M2, T3≤S2, and T4≤M2 are set, so that utilization of a quantity of orthogonal sequences between OCC sequences can also be maximized, to increase a capacity of the SRS.

With reference to the third aspect or the fourth aspect, in a possible implementation, the frequency domain OCC sequence corresponds to each of N1/S frequency domain resource groups, and S adjacent frequency domain units included in each frequency domain resource group correspond to S elements included in the frequency domain OCC sequence. The N1/S frequency domain resource groups are frequency domain resource groups for repeated transmission of the SRS, N1 is a quantity of frequency domain units occupied by the first SRS resource, S is equal to S1 or S2, and N1 is an integer greater than or equal to S. The time domain OCC sequence corresponds to each of R/M time domain resource groups, M consecutive time domain units included in each time domain resource group correspond to M elements included in the time domain OCC sequence, and the R/M time domain resource groups are time domain resource groups for repeated transmission of the SRS. Alternatively, M elements in the time domain OCC sequence correspond to R consecutive time domain units, and the R consecutive time domain units are time domain units for repeated transmission of the SRS. R is a repetition factor corresponding to the first SRS resource, R is an integer greater than or equal to 2, and M is equal to M1 or M2. That is, the first OCC sequence configured by the network apparatus for the first SRS resource may enable the M-length time domain OCC sequence corresponding to the first OCC sequence to be mapped to the R time domain units occupied by the first SRS resource, and enable the S-length frequency domain OCC sequence corresponding to the first OCC sequence to be cyclically mapped to the N1 frequency domain units occupied by the first SRS resource, so that orthogonality of mapping to M time-frequency units can be ensured to a maximum extent, to ensure channel estimation performance of the SRS. In addition, when the repetition factor R is greater than M, time domain unit grouping and mapping may be performed, so that SRS resources configured with different time domain OCC lengths or repetition factors R can be multiplexed on a same time-frequency resource.

With reference to the third aspect or the fourth aspect, in a possible implementation, the first SRS resource includes at least one port, and an SRS sequence corresponding to each of the at least one port in an *l*'^{th} time domain unit in N2 time domain units is determined based on a k1^{th} element in the time domain OCC sequence, the frequency domain OCC sequence, and a first SRS sequence corresponding to each port. The first SRS sequence corresponding to each port is determined based on an SRS base sequence and a cyclic shift CS value that correspond to each port, and an *n*^{th} element in the SRS sequence corresponding to the *l*'^{th} time domain unit corresponds to a k2^{th} element in the frequency domain OCC sequence. The N2 time domain units are time domain units occupied by each port, k1=l' mod *M*, k2=*n mod S*, M is equal to M1 or M2, and S is equal to S1 or S2. That is, the SRS sequence corresponding to the *l*'^{th} time domain unit in the first SRS resource may be determined by using the k1^{th} element in the time domain OCC sequence corresponding to the first OCC sequence, cyclic mapping between a plurality of elements in the frequency domain OCC sequence corresponding to the first OCC sequence and the SRS sequence, and the first SRS sequence corresponding to each port. In this way, by using orthogonality between the first OCC sequence and another OCC sequence, more SRS resources can be superimposed and sent on R time-frequency resources, for repeatedly sending the SRS, corresponding to the first SRS resource.

With reference to the third aspect or the fourth aspect, in a possible implementation, the at least one port includes a port *pᵢ,* and an SRS sequence *r*^{(*pi*)}(*n, l*') corresponding to the port *pᵢ* in the *l*'^{th} time domain unit is ${r}^{\left({p}_{i}\right)} \left(n,l′\right) = {w}_{t}^{\left(l′ mod M\right)} {w}_{f}^{\left(n mod S\right)} {r}^{\left({α}_{i}, δ\right)} \left(n\right) , 0 \leq n < {M}_{sc}^{SRS} - 1$ . Herein, *n* is an index of an element in the SRS sequence, ${M}_{sc}^{SRS} = {mN}_{sc}^{RB} / {2}^{δ}$, m is a quantity of resource blocks RBs occupied for frequency-hopping transmission of the SRS, ${N}_{sc}^{RB}$ is a quantity of subcarriers SCs included in one RB, δ = log₂(K_{TC}), *K*_{TC} is a comb spacing corresponding to the port *pᵢ,* ${w}_{t}^{\left(l′ mod M\right)}$ is an (*l' mod M*)^{th} element in the time domain OCC sequence, ${w}_{f}^{\left(n mod S\right)}$ is an *(n mod S*)^{th} element in the frequency domain OCC sequence, *r*^{(*αi,δ*)}(*n*) is a first SRS sequence corresponding to the port *pᵢ, r*^{(α*i,δ*)}*=e^{jαin}r̅*(*n*), *αᵢ* is a CS value corresponding to the port *pᵢ, r̅*(*n*) is an SRS base sequence corresponding to the port *pᵢ,* M is equal to M1 or M2, and S is equal to S1 or S2. That is, the terminal apparatus may determine, by multiplying the (*l' mod M*)^{th} element in the time domain OCC sequence corresponding to the first OCC sequence by the first SRS sequence *r*^{(α*i,δ*)}(*n*) corresponding to the port *pᵢ* and multiplying the *(n mod S*)^{th} element in the frequency domain OCC sequence corresponding to the first OCC sequence by an n^{th} element in *r*^{(*αi,δ*)}(*n*)*,* an SRS sequence on which the first OCC sequence is superimposed in the time domain and frequency domain. This can reduce implementation complexity of determining the SRS sequence corresponding to the port *pᵢ* in the *l*'^{th} time domain unit, and facilitate deployment.

With reference to the first aspect to the fourth aspect, in a possible implementation, the configuration information includes index information of the first OCC sequence, and the index information is used to determine the OCC sequence from the at least one candidate sequence set. That is, indication overheads of indicating the first OCC sequence by using the configuration information can be reduced by using the index information, and reliability of the configuration information can be improved.

With reference to the first aspect to the fourth aspect, in a possible implementation, the first OCC sequence is determined based on a time domain OCC sequence and a frequency domain OCC sequence, and the index information includes index information of the time domain OCC sequence and/or index information of the frequency domain OCC sequence. That is, the network apparatus may further separately indicate an index of the time domain OCC sequence corresponding to the first OCC sequence in the candidate sequence set and an index of the frequency domain OCC sequence corresponding to the first OCC sequence in the candidate sequence set, so that the terminal apparatus can determine the first OCC sequence. This can improve flexibility of indicating the first OCC sequence by the network apparatus.

With reference to the first aspect to the fourth aspect, in a possible implementation, the configuration information further includes indication information of the at least one candidate sequence set. That is, the network apparatus may configure the at least one candidate sequence set for the terminal apparatus, to indicate, to the terminal apparatus, a candidate sequence set that corresponds to the first SRS resource and that is expected by the network apparatus in a next period of time, so as to subsequently indicate the first OCC sequence by using an index in the candidate sequence set.

With reference to the first aspect to the fourth aspect, in a possible implementation, the first OCC sequence is any one of the following: a Walsh sequence, a Hadamard (Hadamard) sequence, a discrete Fourier transform (discrete Fourier transform, DFT) sequence, or an inverse discrete Fourier transform (inverse discrete Fourier transform, IDFT) sequence. That is, the OCC sequence in the candidate sequence set is a Walsh sequence, a DFT sequence, or the like, which can meet that any two OCC sequences in the candidate sequence set are orthogonal, thereby minimizing mutual interference between SRS resources multiplexed together and ensuring channel estimation quality of the SRS.

According to a fifth aspect, a communication apparatus is provided to implement the foregoing methods. The communication apparatus may be the network apparatus in any one of the foregoing aspects or any implementation of the foregoing aspects, an apparatus including the network apparatus, or an apparatus included in the network apparatus, for example, a chip. Alternatively, the communication apparatus may be the terminal apparatus in any one of the foregoing aspects or any implementation of the foregoing aspects, an apparatus including the terminal apparatus, or an apparatus included in the terminal apparatus, for example, a chip. The communication apparatus includes a corresponding module, unit, or means (means) for implementing the foregoing methods. The module, unit, or means may be implemented by hardware, by software, or by executing corresponding software by hardware. The hardware or the software includes one or more modules or units corresponding to the foregoing functions.

In some possible designs, the communication apparatus may include a processing module and a transceiver module. The transceiver module may also be referred to as a transceiver unit, and is configured to implement a sending function and/or a receiving function in any one of the foregoing aspects and any possible implementation of the foregoing aspects. The transceiver module may include a transceiver circuit, a transceiver machine, a transceiver, or a communication interface. The processing module may be configured to implement a processing function in any one of the foregoing aspects and any possible implementation of the foregoing aspects.

In some possible designs, the transceiver module includes a sending module and a receiving module, respectively configured to implement the sending function and the receiving function in any one of the foregoing aspects and any possible implementation of the foregoing aspects.

According to a sixth aspect, a communication apparatus is provided, including at least one processor. The processor is configured to execute a computer program or instructions, to enable the communication apparatus to perform the method in any one of the foregoing aspects.

In a possible implementation, the communication apparatus further includes a memory. Optionally, the memory is coupled to the processor. The memory may be integrated with the processor, or the memory may be independent of the processor. Optionally, the processor is configured to execute a computer program or instructions stored in the memory.

In a possible implementation, the memory is independent of the communication apparatus.

In a possible implementation, the communication apparatus further includes a communication interface. The communication interface is configured to communicate with a module other than the communication apparatus.

The communication apparatus may be the network apparatus in any one of the foregoing aspects or any implementation of the foregoing aspects, an apparatus including the network apparatus, or an apparatus included in the network apparatus, for example, a chip. Alternatively, the communication apparatus may be the terminal apparatus in any one of the foregoing aspects or any implementation of the foregoing aspects, an apparatus including the terminal apparatus, or an apparatus included in the terminal apparatus, for example, a chip.

According to a seventh aspect, a computer-readable storage medium is provided. The computer-readable storage medium stores a computer program or instructions. When the computer program or the instructions are run on a communication apparatus, the communication apparatus is enabled to perform the method in any one of the foregoing aspects or any implementation of the foregoing aspects.

According to an eighth aspect, a computer program product including instructions is provided. When the computer program product is run on a communication apparatus, the communication apparatus is enabled to perform the method in any one of the foregoing aspects or any implementation of the foregoing aspects.

According to a ninth aspect, a communication apparatus is provided (for example, the communication apparatus may be a chip or a chip system). The communication apparatus includes a processor, configured to implement the functions in any one of the foregoing aspects or any implementation of the foregoing aspects.

In some possible designs, the communication apparatus includes a memory. The memory is configured to store necessary program instructions and data.

In some possible designs, when the apparatus is a chip system, the apparatus may include a chip, or may include a chip and another discrete device.

It may be understood that when the communication apparatus provided in any one of the fifth aspect to the ninth aspect is a chip, the foregoing sending action/function may be understood as an output, and the foregoing receiving action/function may be understood as an input.

For technical effects brought by any design manner of the fifth aspect to the ninth aspect, refer to the technical effects brought by different design manners of any one of the foregoing aspects. Details are not described herein.

According to a tenth aspect, a communication system is provided. The communication system includes the network apparatus in any one of the foregoing aspects or any implementation of the foregoing aspects and the terminal apparatus in any one of the foregoing aspects or any implementation of the foregoing aspects.

### BRIEF DESCRIPTION OF DRAWINGS

FIG. 1 is a diagram of subcarrier positions occupied by an SRS resource in a case of different comb spacings according to an embodiment of this application;
FIG. 2 is a diagram of distribution, in a delay domain, of channel responses of four ports corresponding to an SRS resource according to an embodiment of this application;
FIG. 3 is a diagram of a time domain resource occupied for repeatedly sending an SRS according to an embodiment of this application;
FIG. 4 is a diagram of a structure of a communication system according to an embodiment of this application;
FIG. 5 is a schematic flowchart of an information transmission method according to an embodiment of this application;
FIG. 6A to FIG. 6C are diagrams of multiplexing a plurality of SRS resources based on an OCC sequence according to an embodiment of this application;
FIG. 7 is a schematic flowchart of another information transmission method according to an embodiment of this application;
FIG. 8 is a diagram 1 of a mapping relationship between a sequence in a candidate set and a time-frequency resource according to an embodiment of this application;
FIG. 9 is a diagram 2 of a mapping relationship between a sequence in a candidate set and a time-frequency resource according to an embodiment of this application;
FIG. 10 is a diagram 1 of a structure of a communication apparatus according to an embodiment of this application; and
FIG. 11 is a diagram 2 of a structure of a communication apparatus according to an embodiment of this application.

### DESCRIPTION OF EMBODIMENTS

For ease of understanding of technical solutions provided in embodiments of this application, technologies related to embodiments of this application are first briefly described. The brief descriptions are as follows:

### I. Configuration information for a sounding reference signal (sounding reference signal, SRS)

A network apparatus may configure an SRS resource for a terminal apparatus by using the configuration information for the SRS, to manage and configure sending of the SRS by the terminal apparatus. For example, for a new radio (new radio, NR) system, the configuration information for the SRS may include one or more SRS resource sets (SRS resource sets). One SRS resource set may include one or more SRS resources (SRS resources). One SRS resource may indicate a plurality of the following: a quantity of antenna ports, a frequency domain configuration parameter, a time domain configuration parameter, and an SRS sequence configuration parameter.

The following separately describes the quantity of antenna ports, a transmission comb configuration parameter, the time domain configuration parameter, and the SRS sequence configuration parameter.

1. Quantity ${N}_{ap}^{SRS}$ of antenna ports

An antenna port corresponding to the SRS resource may be referred to as an SRS port. One, two, four, or eight ports may be configured for one SRS resource, and a specific frequency domain resource, code domain resource, and time domain resource may be configured for each port, so that frequency division multiplexing (frequency division multiplexing, FDM), code division multiplexing (code division multiplexing, CDM), time division multiplexing (time division multiplexing, TDM), or the like can be implemented between different ports, to reduce interference between the different ports. It may be understood that each port may correspond to a physical antenna or a virtual antenna (or referred to as a logical antenna) of the terminal apparatus.

For example, an index of an (i+1)^{th} port in ${N}_{ap}^{SRS}$ ports corresponding to the SRS may be expressed as ${\left\{{p}_{i}\right\}}_{i = 0}^{{N}_{ap}^{SRS} - 1}$. Herein, pᵢ = 1000 + *i*, that is, the port index corresponding to the SRS may start from a number 1000.

### 2. Transmission comb configuration parameter

The transmission comb configuration parameter (for example, a higher-layer parameter *transmissionComb* in the SRS resource) is used to configure a parameter related to a comb (comb) and a parameter related to a cyclic shift (cyclic shift, CS) corresponding to a port. The following separately describes the comb and the CS.

### 2.1. Comb

For different ports, the terminal apparatus may send the SRS on different subcarriers (subcarriers, SCs) through frequency division multiplexing. The comb may be used to group a plurality of subcarriers in the frequency domain into a plurality of groups. In a plurality of subcarriers corresponding to each group, there is a fixed frequency domain spacing between two adjacent subcarriers, that is, the plurality of subcarriers corresponding to each group are extracted at an equal interval in the frequency domain. The extraction interval may be referred to as a comb spacing *K*_{TC}, and a value of the comb spacing *K*_{TC} may be 2, 4, or 8. In addition, a comb offset (comb offset, CO) may be used to distinguish between the foregoing different groups, that is, different COs may represent corresponding groups or subcarrier positions.

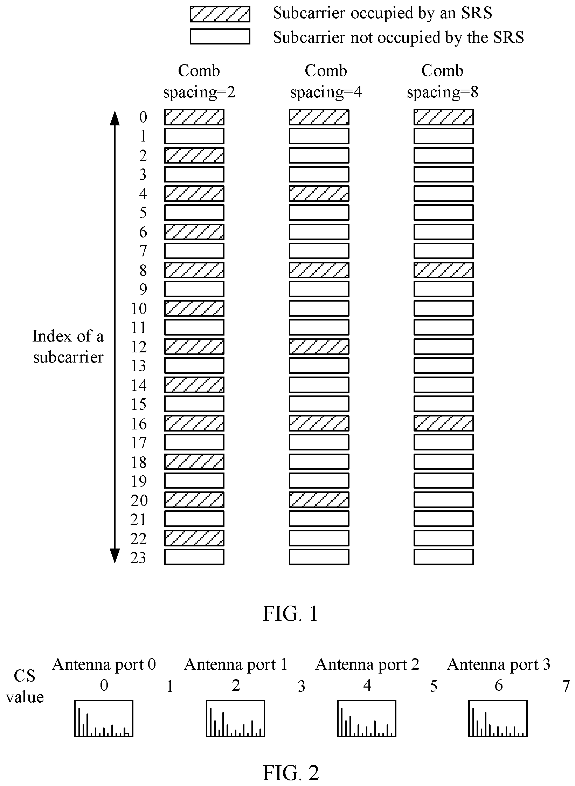

For example, FIG. 1 is a diagram of subcarrier positions occupied by an SRS resource in a case of different comb spacings according to an embodiment of this application. As shown in FIG. 1, for 24 subcarriers (indexes of the subcarriers are 0 to 23) in the frequency domain, when the value of the comb spacing *K*_{TC} is 2, it may indicate that the SRS resource fixedly occupies one subcarrier with a smaller or larger subcarrier index value for every two subcarriers. That is, the SRS resource may occupy 12 subcarriers, and a spacing between any two adjacent subcarriers in the 12 subcarriers is fixed at one subcarrier.

It may be understood that when the value of the comb spacing *K*_{TC} is 2, the 24 subcarriers in FIG. 1 may be grouped into two groups (or referred to as two combs). In this way, frequency division multiplexing may be performed between two ports. The example in which the value of the comb spacing *K*_{TC} is 2 in FIG. 1 is an example of a subcarrier position occupied by the SRS resource when the CO is 0.

Similarly, when the value of the comb spacing *K*_{TC} is 4, it may indicate that the SRS resource occupies one subcarrier for every four subcarriers, and a spacing between two adjacent subcarriers is fixed at three subcarriers. In this way, the 24 subcarriers may be grouped into four groups (each group includes six subcarriers), and frequency division multiplexing may be performed between four ports. When the value of the comb spacing K_{TC} is 8, it may indicate that the SRS resource occupies one subcarrier for every eight subcarriers, and a spacing between two adjacent subcarriers is fixed at seven subcarriers. In this way, the 24 subcarriers may be grouped into eight groups (each group includes three subcarriers), and frequency division multiplexing may be performed between eight ports.

### 2.2. CS

For different ports, the terminal apparatus may send the SRS on a same time-frequency resource (including a time domain resource and a frequency domain resource) through code division multiplexing. A specific implementation of code division multiplexing is as follows: The terminal apparatus multiplies an SRS sequence by a phase offset value in the frequency domain, which is equivalent to generating a cyclic shift offset for the SRS sequence in the time domain, that is, equivalent to offsetting a signal in a delay domain. In addition, by using a feature that a maximum delay of a channel is usually limited, when offsets between different signals are different, multiplexing effect can be achieved.

For example, a phase offset value corresponding to a port *pᵢ* may be expressed as *e^{jαin},* and *αᵢ* is a CS value corresponding to the port pᵢ. Herein, *αᵢ* may be determined based on Formula (1) and Formula (2). ${α}_{i} = 2 π \frac{{n}_{SRS}^{cs , i}}{{n}_{SRS}^{cs , max}}$ Formula (1) ${n}_{SRS}^{cs , i} = \left\{\begin{matrix}\left({n}_{SRS}^{cs}+\frac{{n}_{SRS}^{cs , max} \left⌊\left({p}_{i}-1000\right)/2\right⌋}{{N}_{ap}^{SRS} / 2}\right) mod {n}_{SRS}^{cs , max} & if {N}_{ap}^{SRS} = 4 and {n}_{SRS}^{cs , max} = 6 \\ \left({n}_{SRS}^{cs}+\frac{{n}_{SRS}^{cs , max} \left({p}_{i}-1000\right)}{{N}_{ap}^{SRS}}\right) mod {n}_{SRS}^{cs , max} & otherwise\end{matrix}\right.$ Formula (2)

Herein, ${N}_{ap}^{SRS}$ is a quantity of antenna ports configured for the SRS resource, the parameter ${n}_{SRS}^{cs , i}$ represents a CS parameter corresponding to the port *pᵢ* in the SRS resource, and is used to determine the CS value corresponding to the port, the parameter ${n}_{SRS}^{cs}$ represents a reference value of a CS parameter corresponding to one or more ports corresponding to the SRS resource, or represents a value position of a CS parameter of a reference port corresponding to the SRS resource, the parameter ${n}_{SRS}^{cs}$ is configured by using the higher-layer parameter *transmission Comb,* ${n}_{SRS}^{cs} ∈ \left\{0,1,…,{n}_{SRS}^{cs , max}-1\right\}$, and the parameter ${n}_{SRS}^{cs , max}$ represents a maximum quantity of CS values (or a maximum quantity of CS values that can be configured). Currently, for the NR system, the parameter ${n}_{SRS}^{cs , max}$ and the comb spacing K_{TC} may be jointly configured. A correspondence between the parameter ${n}_{SRS}^{cs , max}$ and the comb spacing K_{TC} is shown in Table 1.

**Table 1**

| *K*_{TC} | ${n}_{SRS}^{cs , max}$ |
|---|---|
| 2 | 8 |
| 4 | 12 |
| 8 | 6 |

For example, it is assumed that the network apparatus configures, for the terminal apparatus, a quantity ${N}_{ap}^{SRS} = 4$ of ports, a comb spacing *K*_{TC} = 2, a maximum CS value ${n}_{SRS}^{cs , max} = 8$ , and a CS reference value ${n}_{SRS}^{cs} = 0$ that correspond to an SRS resource 1, and distribution of channel responses corresponding to the four ports corresponding to the SRS resource 1 in the delay domain is shown in FIG. 2. As shown in FIG. 2, the four ports of the SRS resource 1 respectively correspond to CS parameter values 0, 2, 4, and 6. A cluster of vertical lines in a rectangular box in FIG. 2 represents a delay domain channel response corresponding to one port. It may be understood that when a CS value for a port is allocated, the CS value for the port may be configured through even allocation as much as possible based on a maximum spacing within a length of ${n}_{SRS}^{cs , max}$, to ensure minimum interference between a plurality of ports configured for one SRS resource.

In addition, one port *pᵢ* may correspond to one CO, and the CO may be represented by using a parameter ${k}_{TC}^{\left({p}_{i}\right)}$*.* A start frequency domain position ${k}_{0}^{\left({p}_{i}\right)}$ of the port *pᵢ* may be determined based on the CO and other parameters. For details, refer to Formula (3). ${k}_{0}^{\left({p}_{i}\right)} = {\overline{k}}_{0}^{\left({p}_{i}\right)} + {n}_{offset}^{FH} + {n}_{offset}^{RPFS}$ Formula (3)

Herein, ${n}_{offset}^{FH}$ represents a frequency domain offset caused due to sending of the SRS through frequency hopping, ${n}_{offset}^{RPFS}$ represents a corresponding frequency domain offset when partial SRS (partial SRS) sending is configured, and the parameter ${\overline{k}}_{0}^{\left({p}_{i}\right)}$ may be determined based on Formula (4). ${\overline{k}}_{0}^{\left({p}_{i}\right)} = {n}_{shift} {N}_{sc}^{RB} + \left({k}_{TC}^{\left({p}_{i}\right)}+{k}_{offset}^{l ′}\right) mod {K}_{TC}$ Formula (4)

In Formula (4), ${n}_{shift} {N}_{sc}^{RB}$ represents a quantity of resource blocks (resource blocks, RBs) that are offset relative to a reference frequency domain position, the parameter *n*_{shift} is configured by using a higher-layer parameter, and ${N}_{sc}^{RB}$ represents a quantity of subcarriers included in each RB. One RB may include 12 consecutive subcarriers.

In Formula (4), $\left({k}_{TC}^{\left({p}_{i}\right)}+{k}_{offset}^{l ′}\right) mod {K}_{TC}$ may represent the CO, that is, a subcarrier offset of a start frequency domain position occupied by the SRS resource within one RB, with a first subcarrier of the RB as a reference. Herein, *K*_{TC} represents a comb spacing corresponding to the port *pᵢ,* ${k}_{offset}^{l ′}$ represents a subcarrier offset or a comb offset corresponding to an *l*'^{th} orthogonal frequency division multiplexing (orthogonal frequency division multiplexing, OFDM) symbol in OFDM symbols to which the SRS resource is mapped in one slot, and ${k}_{TC}^{\left({p}_{i}\right)}$ may be determined based on Formula (5). $\begin{matrix}{k}_{TC}^{\left({p}_{i}\right)} = \\ \left\{\begin{matrix}\left({\overline{k}}_{TC}+{K}_{TC}/2\right) mod {K}_{TC} & if {N}_{ap}^{SRS} = 4 , {p}_{i} ∈ \left\{1001, 1003\right\} , and {n}_{SRS}^{cs , max} = 6 \\ \left({\overline{k}}_{TC}+{K}_{TC}/2\right) mod {K}_{TC} & if {N}_{ap}^{SRS} = 4 , {p}_{i} ∈ \left\{1001, 1003\right\} , and {n}_{SRS}^{cs} ∈ \left\{{n}_{SRS}^{cs , max}/2,…,{n}_{SRS}^{cs , max}-1\right\} \\ {\overline{k}}_{TC} & otherwise\end{matrix}\right.\end{matrix}$ Formula (5)

Herein, the parameter *k̅*_{TC} is configured by using the higher-layer parameter *transmissionComb,* and *k̅*_{TC} ∈ {0,1, ..., *K*_{TC} - 1 }. For details of the parameter ${n}_{SRS}^{cs , max}$, refer to Table 1.

It may be understood that based on Formula (5), it may be learned that for different quantities ${N}_{ap}^{SRS}$ of ports and CS start positions ${n}_{SRS}^{cs}$, a plurality of ports of one SRS resource may be distributed on a same comb, or may be distributed on two combs.

### 3. Time domain configuration parameter

The time domain configuration parameter may be used to configure a time domain resource for sending the SRS. One SRS resource may occupy ${N}_{symb}^{SRS} ∈ \left\{1, 2, 4, 8, 10, 12, 14\right\}$ consecutive OFDM symbols. A specific quantity of symbols may be configured by using a higher-layer parameter *nrofSymbols.*

In addition, the network apparatus may further configure a start symbol position *l*₀ of the SRS in one slot (slot) by using a higher-layer parameter *startPosition,* ${l}_{0} = {N}_{symb}^{slot} - 1 - {l}_{offset}$, and l_{offset} ∈ {0, 1, ..., 13}.

It may be understood that for different ports, the terminal apparatus may send the SRS on different OFDM symbols through time division multiplexing.

### 4. SRS sequence configuration parameter

An SRS sequence is determined based on an SRS base sequence and a CS value. The SRS base sequence *r̅_{u,v}*(*n*) may be a Zadoff-Chu (ZC) sequence, and *r̅_{u,v}*(*n*) may be determined based on a length of the SRS sequence. For example, for different SRS sequence lengths, at least 30 base sequences may be set to be used. The at least 30 base sequences may be grouped into 30 base sequence groups, and *u* may represent an index (*u* ∈ {0, 1, ..., 29}) of the base sequence group. Further, each base sequence group may include one or two base sequences, and v may represent an index (*v*=0 or 1) of a base sequence in each base sequence group.

It may be understood that the SRS sequence configuration parameter may include parameters used to determine *u* and *v.* For example, the SRS sequence configuration parameter may include a higher-layer parameter *groupOrSequenceHopping,* and the higher-layer parameter is used to determine *v*. Further, the SRS sequence configuration parameter further includes a higher-layer parameter *sequenceId,* the higher-layer parameter indicates a sequence identifier ${n}_{ID}^{SRS}$, and ${n}_{ID}^{SRS} ∈ \left\{0,1,…,1023\right\}$. The parameter *u* may be determined based on ${n}_{ID}^{SRS}$ and the higher-layer parameter *groupOrSequenceHopping.* For a specific determining manner, refer to related descriptions of the SRS resource in the 3rd generation partnership project (3rd generation partnership project, 3GPP) technical specification (technical specification, TS) 38.211. Details are not described.

For example, an SRS sequence *r^{(pi)}(n)* corresponding to a port *pᵢ* may be determined by using Formula (6). ${r}^{\left({p}_{i}\right)} \left(n\right) = {r}_{u , v}^{\left({α}_{i}, δ\right)} \left(n\right) , 0 \leq n \leq {M}_{sc , b}^{SRS} - 1$ Formula (6)

In Formula (6), n is an index of an element in the SRS sequence, the SRS sequence includes ${M}_{sc , b}^{SRS}$ elements (that is, a length of the SRS sequence is ${M}_{sc , b}^{SRS}$), ${M}_{sc , b}^{SRS} = {mN}_{sc}^{RB} / {2}^{δ}$, *m* is a quantity of RBs occupied for frequency-hopping transmission of the SRS, δ = log₂ (K_{TC}), and *K*_{TC} is a comb spacing. For details of ${N}_{sc}^{RB}$, refer to the related descriptions of Formula (4). Details are not described.

In addition, in Formula (6), ${r}_{u , v}^{\left({α}_{i}, δ\right)} \left(n\right) = {e}^{{jα}_{i} n} {\overline{r}}_{u , v} \left(n\right)$, *r̅_{u,v}*(*n*) is an SRS base sequence, and *αᵢ* is a CS value. For details of *αᵢ*, refer to Formula (1) and Formula (2). Details are not described.

It may be understood that a start frequency domain position ${k}_{0}^{\left({p}_{i}\right)}$ of the port *pᵢ* may be determined by using Formula (3) to Formula (5). Details are not described.

### II. Repeated transmission of an SRS

Transmit power for sending the SRS by a terminal apparatus may be adjusted based on a path loss. However, the transmit power for the SRS is limited by maximum transmit power of the terminal apparatus. Therefore, in a scenario with a large path loss (for example, a scenario in which a wireless transmission path is blocked, or a scenario in which the terminal apparatus is located at a cell edge), received power of the SRS arriving at a network apparatus is still low, resulting in poor channel estimation quality of the SRS.

To enhance a coverage capability of the SRS and ensure that good received quality of the SRS can still be ensured in some scenarios with a large path loss, the terminal apparatus may repeatedly send (repetition) the SRS a plurality of times, to improve the received quality of the SRS. Specifically, the network apparatus may configure a repetition factor R for an SRS resource of the terminal apparatus. A value of R may be a value in {1, 2, 3, 4, 5, 6, 7, 8, 10, 12, 14}, and $R \leq {N}_{symb}^{SRS}$. When R>1, it indicates that the terminal apparatus may repeatedly send the SRS in R consecutive OFDM symbols by using a same frequency domain resource and SRS sequence. In this way, the network apparatus may process the repeatedly sent SRSs, for example, perform combination processing. This increases an equivalent signal-to-noise ratio (signal-to-noise ratio, SNR) of the SRS, thereby improving channel estimation accuracy.

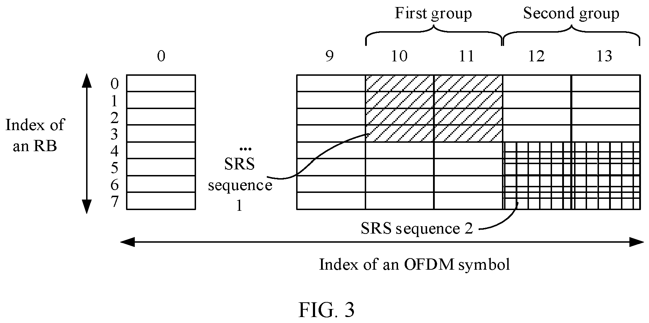

For example, if the network apparatus configures a start symbol position *l*₀ = 10, ${N}_{symb}^{SRS} = 4$, and R=2 for an SRS resource, it indicates that the SRS resource occupies four consecutive OFDM symbols in one slot, and the terminal apparatus repeatedly sends the SRS in every two consecutive OFDM symbols. As shown in FIG. 3, the four consecutive OFDM symbols are an OFDM symbol 10 to an OFDM symbol 13 in one slot. The four OFDM symbols may be grouped into two groups. The OFDM symbol 10 and the OFDM symbol 11 are a first group, and the OFDM symbol 12 and the OFDM symbol 13 are a second group. Frequency domain resources and SRS sequences corresponding to the two OFDM symbols in the first group are the same. The frequency domain resource is an RB 0 to an RB 3, and the SRS sequence is an SRS sequence 1. Frequency domain resources and SRS sequences corresponding to the two OFDM symbols in the second group are the same. The frequency domain resource is an RB 4 to an RB 7, and the SRS sequence is an SRS sequence 2.

That is, on a time domain resource for repeatedly sending the SRS, the terminal apparatus sends the SRS by using a same SRS resource (namely, a resource other than the time domain resource, for example, a frequency domain resource or an SRS sequence).

It should be understood that FIG. 3 is merely an example. Frequency domain resources and/or SRS sequences corresponding to the first group and the second group may be the same. This is not specifically limited in embodiments of this application.

It may be understood that as the repetition factor R increases, a performance gain brought by combining the repeatedly sent SRSs is more significant. However, resource overheads for repeatedly sending the SRS are exponentially increased. In other words, as the repetition factor R increases, a quantity of SRS resources that can be multiplexed on a same time-frequency resource is exponentially decreased. Consequently, in a case of same time-frequency resource overheads, many terminal apparatuses in a cell cannot perform SRS measurement in a timely manner, or SRS overheads need to be exponentially increased, to ensure that a plurality of terminal apparatuses in the cell can perform SRS measurement in a timely manner.

For example, it is assumed that one OFDM symbol may support multiplexing of N SRS resources through frequency division multiplexing (a comb offset CO) and code division multiplexing (a cyclic shift CS value). In this case, when the SRS is not repeatedly sent, R OFDM symbols may support multiplexing of N×R SRS resources. However, when the SRS is repeatedly sent, SRS resources (for example, frequency domain resources or SRS sequences) corresponding to all of the R OFDM symbols are the same. Consequently, the R OFDM symbols can support multiplexing of only N SRS resources. That is, the multiplexing efficiency of SRS resources is reduced during repeated transmission of the SRS.

Further, to adapt to different channel propagation environments, the repetition factor R may support a plurality of values, for example, 2, 4, or 8. However, how to improve the multiplexing efficiency of SRS resources based on a plurality of values of the repetition factor R is an urgent problem to be resolved currently.

Based on this, embodiments of this application provide an information transmission method, to improve the multiplexing efficiency of SRS resources during repeated transmission of an SRS.

The following describes the technical solutions in embodiments of this application with reference to the accompanying drawings in embodiments of this application.

For ease of understanding of embodiments of this application, the following descriptions are provided before embodiments of this application are described.
1. In embodiments of this application, for ease of description, when numbering or indexing is involved, consecutive numbering may be performed starting from 1, consecutive numbering may be performed starting from 0, or numbering may be performed starting from any parameter. This is not specifically limited.
2. When elements in a sequence or a resource group (for example, a time domain resource group or a frequency domain resource group) are counted, counting may be performed starting from a zeroth (zeroth) element, or counting may be performed starting from a first (first) element. For example, elements in a sequence [1, -1, 1, -1] may be counted as a zeroth element, a first element, a second element, and a third element. For another example, elements in a sequence [1, -1, 1, -1] may be counted as a first element, a second element, a third element, and a fourth element.
3. "Predefined", "pre-defined", "preconfigured (or pre-configured)", and "agreed on in a protocol" may be replaced with each other, and "predefined" may be implemented by prestoring corresponding code, a table, or another manner that may indicate related information in an apparatus (for example, a terminal apparatus or a network apparatus). A specific implementation of "predefined" is not limited in embodiments of this application. "Stored" may mean "stored in one or more memories".
4. The "protocol" in embodiments of this application may be a standard protocol in the communication field, for example, may include a long term evolution (long term evolution, LTE) protocol, an NR protocol, wireless fidelity (wireless fidelity, Wi-Fi), and a related protocol applied to a future communication system (for example, a 6th generation (6th generation, 6G) communication system). This is not limited in embodiments of this application.
5. In embodiments of this application, descriptions such as "when", "in a case of", and "if" all mean that a device (for example, a terminal apparatus or a network apparatus) performs corresponding processing in an objective case, are not intended to limit time, do not require the device to necessarily perform a determining action during implementation, and do not mean that there is another limitation.
6. In this embodiment of this application, "sending information to... (a terminal apparatus)" may be understood as that a destination end of the information is the terminal apparatus, and may include directly or indirectly sending the information to the terminal apparatus; and "receiving information from... (a network apparatus)" or "receiving information that is from... (a network apparatus)" may be understood as that a source end of the information is the network apparatus, and may include directly or indirectly receiving the information from the network apparatus. Necessary processing, for example, a format change, may be performed on the information between the source end and the destination end during information sending. However, the destination end can understand valid information from the source end. A similar expression in this application may be understood similarly. Details are not described herein.
7. In the descriptions of embodiments of this application, unless otherwise specified, "and/or" in embodiments of this application indicates that three relationships may exist. For example, A and/or B may indicate the following three cases: Only A exists, both A and B exist, and only B exists, where A and B may be singular or plural. In addition, "at least one of the following" or a similar expression thereof indicates any combination of these items, including a single item or any combination of a plurality of items. In addition, to clearly describe the technical solutions in embodiments of this application, words such as "first" and "second" are used in embodiments of this application to distinguish between same items or similar items that provide basically same functions and roles. A person skilled in the art may understand that the words such as "first" and "second" do not limit a quantity or an execution sequence, and the words such as "first" and "second" do not necessarily indicate a definite difference. In addition, in embodiments of this application, words such as "example" or "for example" indicates giving an example, an illustration, or a description.

Embodiments of this application may be applied to an LTE system or an NR system (which may also be referred to as a 5th generation (5th generation, 5G) system), an LTE-NR hybrid networking system, a vehicle-to-everything (vehicle-to-everything, V2X) system, a device-to-device (device-to-device, D2D) system, a machine-to-machine (machine-to-machine, M2M) communication system, an internet of things (internet of things, IoT) system (for example, a narrowband internet of things (narrowband internet of things, NB-IoT) system), a Wi-Fi system, a non-terrestrial network (non-terrestrial network, NTN) system, a 6G system, another nextgeneration communication system, and the like. Alternatively, the communication system may be an open radio access network (open radio access network, O-RAN or ORAN) or a cloud radio access network (cloud RAN, CRAN). This is not limited.

It may be understood that embodiments of this application may be applied to a plurality of different service scenarios, for example, enhanced mobile broadband (enhanced mobile broadband, eMBB), an ultra-reliable and low-latency communication (ultra-reliable & low-latency communication, URLLC) service, massive machine type communication (massive machine type communication, mMTC), immersive communication (immersive communication), massive communication (massive communication), ubiquitous connections (ubiquitous connections), integrated artificial intelligence and communication (integrated artificial intelligence and communication), or integrated sensing and communication (integrated sensing and communication). To meet further requirements of the different service application scenarios for a latency, reliability, coverage, and the like, more flexible resource allocation is required.

In addition, a communication architecture and a service scenario described in embodiments of this application are intended to describe the technical solutions in embodiments of this application more clearly, and do not constitute a limitation on the technical solutions provided in embodiments of this application. A person of ordinary skill in the art may learn that with the evolution of the communication architecture and the emergence of new service scenarios, the technical solutions provided in embodiments of this application are also applicable to similar technical problems.

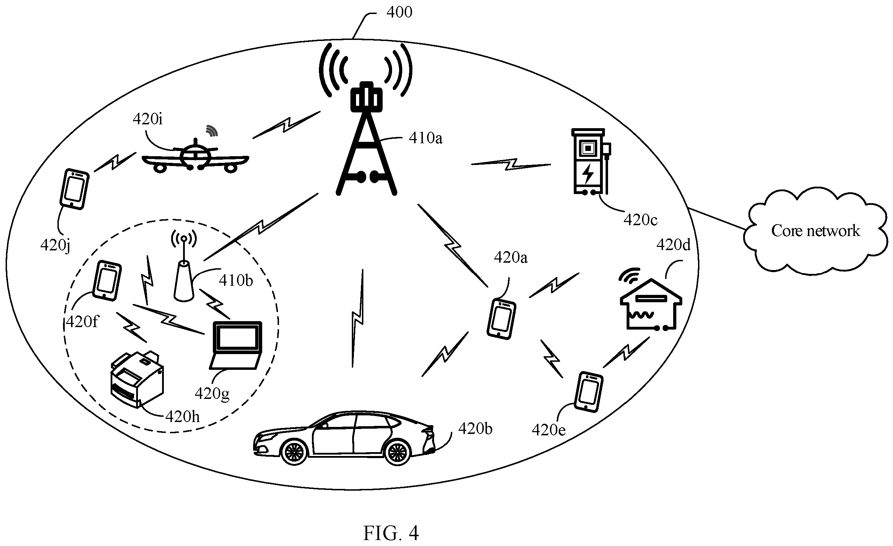

FIG. 4 is a diagram of a structure of a communication system 400 according to an embodiment of this application. In FIG. 4, an example in which the communication system 400 includes at least one network apparatus (for example, 410a or 410b in FIG. 4) and at least one terminal apparatus (for example, 420a to 420j in FIG. 4) connected to the network apparatus is used for description. It should be understood that the network apparatus may be connected to a core network (core network, CN) in a wireless or wired manner. A CN device in the CN and the network apparatus may be different physical apparatuses, or may be a same physical apparatus that integrates a logical function of the CN and a logical function of a radio access network. It may be understood that quantities of network apparatuses and terminal apparatuses in FIG. 4 are merely examples, and may be larger or smaller. This is not specifically limited in this embodiment of this application.

In a possible implementation, the network apparatus in this embodiment of this application may be an apparatus communicating with the terminal apparatus. The network apparatus may also be referred to as a radio access network (radio access network, RAN) device, an access node, a RAN entity, a RAN node, or the like. As shown in FIG. 4, a plurality of network apparatuses in the communication system 400 may be nodes of a same type, or may be nodes of different types. In some scenarios, roles of the network apparatus and the terminal apparatus are relative. For example, the network element 420i in FIG. 4 may be a helicopter or an uncrewed aerial vehicle, and may be configured as a mobile base station. For the terminal apparatus 420j that accesses the communication system 400 through the network element 420i, the network element 420i may be a base station 410a. However, for the base station 410a, the network element 420i is a terminal apparatus. Both the network apparatus and the terminal apparatus are sometimes referred to as communication apparatuses. For example, the network elements 410a and 410b in FIG. 4 may be understood as communication apparatuses having a base station function, and the network elements 420a to 420j may be understood as communication apparatuses having a terminal function.

In a possible scenario, the network apparatus may be a transmission and reception point (transmission and reception point, TRP), a base station, a remote radio unit (remote radio unit, RRU) or a baseband unit (baseband unit, BBU) (which may also be referred to as a digital unit (digital unit, DU)) of a split base station, a broadband network gateway (broadband network gateway, BNG), an aggregation switch, a non-3GPP access device, a relay station, an access point, or the like. The network apparatus may be a macro base station (for example, the network element 410a in FIG. 4), a micro base station or an indoor base station (for example, the network element 410b in FIG. 4), a relay node or a donor node, or a radio controller in a CRAN scenario. Optionally, the network apparatus may alternatively be a server, a wearable device, a vehicle, a vehicle-mounted device, or the like. For example, a network apparatus in a V2X system may be a roadside unit (roadside unit, RSU). In addition, the network apparatus in this embodiment of this application may be an eNB or an eNodeB (evolved NodeB) in LTE, a radio controller in a CRAN scenario, a base station (for example, a next generation NodeB (gNodeB, gNB)) in a 5G communication system, a base station in a future evolved system (for example, a 6G communication system), or the like. This is not specifically limited herein.

In a possible implementation, in some deployments, the gNB may include a central unit (central unit, CU), a DU, a CU-control plane (control plane, CP), a CU-user plane (user plane, UP), or a radio unit (radio unit, RU). The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and/or a packet data convergence protocol (packet data convergence protocol, PDCP) layer. The DU is responsible for processing a physical (physical, PHY) layer protocol and a real-time service, and implements functions of a radio link control (radio link control, RLC) layer, a media access control (media access control, MAC) layer, and a PHY layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may be considered as being sent by the DU or sent by the DU and the AAU. It may be understood that the network apparatus may be a device including one or more of a CU node, a DU node, or an AAU node. In addition, the CU may be classified into a network apparatus in the RAN, or the CU may be classified into a network apparatus in the CN. This is not limited in this embodiment of this application.

In different systems, the CU (or the CU-CP and the CU-UP), the DU, or the RU may have different names, but a person skilled in the art may understand meanings of the names. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, in this embodiment of this application, the CU, the CU-CP, the CU-UP, the DU, and the RU are used as an example for description. In this embodiment of this application, any unit in the CU (or the CU-CP or the CU-UP), the DU, and the RU may be implemented by a software module, a hardware module, or a combination of a software module and a hardware module.

In a possible implementation, the terminal apparatus in this embodiment of this application may be a device configured to implement a wireless communication function, for example, a terminal or a chip that may be used in a terminal. The terminal may be user equipment (user equipment, UE), an access terminal, a terminal unit, a terminal station, a mobile station, a remote station, a remote terminal, a mobile device, a terminal agent, or the like in a 5G network or a future evolved public land mobile network (public land mobile network, PLMN). The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a VR terminal apparatus, an AR terminal apparatus, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. In a possible implementation, the terminal apparatus may be mobile or fixed. This is not limited.

It may be understood that the communication system 400 may support a plurality of different service application scenarios, for example, enhanced mobile broadband (enhanced mobile broadband, eMBB), an ultra-reliable and low-latency communication (ultra-reliable & low-latency communication, URLLC) service, massive machine type communication (massive machine type communication, mMTC), immersive communication (immersive communication), massive communication (massive communication), ubiquitous connections (ubiquitous connections), integrated artificial intelligence and communication (integrated artificial intelligence and communication), or integrated sensing and communication (integrated sensing and communication). This is not specifically limited in this embodiment of this application.

Embodiments of this application provide an information transmission method. The method may be performed by a network apparatus. The network apparatus may be the network apparatus in FIG. 4, or a module or unit in the network apparatus (for example, a chip, a chip system, a chip circuit, or a circuit in the network apparatus).

In a possible implementation, the network apparatus generates configuration information for an SRS; and sends the configuration information. The configuration information indicates a first orthogonal cover code (orthogonal cover code, OCC) sequence corresponding to a first SRS resource. A repetition factor corresponding to the first SRS resource is R. The first OCC sequence is a time domain OCC sequence determined from at least two candidate sequence sets. The at least two candidate sequence sets include a first candidate sequence set and a second candidate sequence set. The first candidate sequence set includes T1 mutually orthogonal time domain OCC sequences each having a sequence length of M1. The second candidate sequence set includes T2 time domain OCC sequences each having a sequence length of M2. 1<T1≤M1≤R, 1<T2≤M2≤R, M1 is different from M2, R is an integer greater than 2, and T1, T2, M1, and M2 are integers.

In embodiments of this application, the first OCC sequence is a time domain OCC sequence determined from the at least two candidate sequence sets, and different time domain OCC sequences in each of the at least two candidate sequence sets are orthogonal. Therefore, the network apparatus configures the first OCC sequence for the first SRS resource by using the configuration information for the SRS, to use orthogonality between different time domain OCC sequences in each candidate sequence set, so that more SRS resources can be superimposed and sent on R time domain resources for repeatedly sending the SRS, that is, an SRS resource multiplexing capability is improved. Further, because sequence lengths of time domain OCC sequences included in different candidate sequence sets are different, when R is greater than 2, time domain OCC sequences with different sequence lengths may be flexibly superimposed on the R time domain resources, so that different SRS resources can be efficiently multiplexed on a same time-frequency resource. Therefore, based on the information transmission method provided in embodiments of this application, the multiplexing efficiency of SRS resources can be improved during repeated transmission of the SRS.

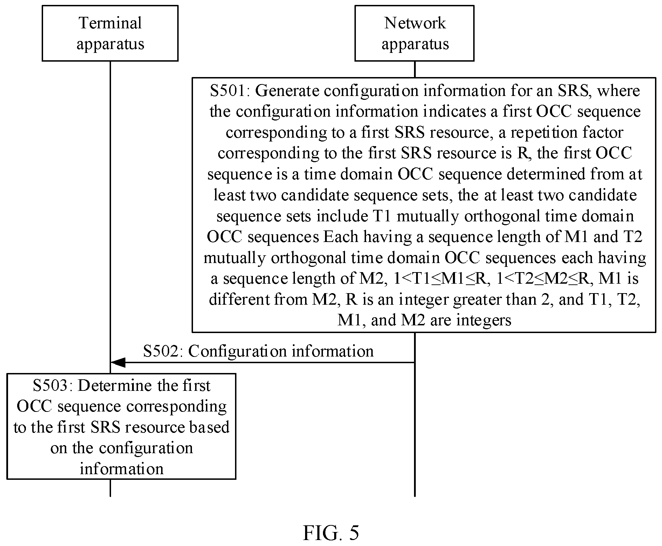

The following describes, with reference to FIG. 5 to FIG. 9, in detail the method provided in embodiments of this application.

It should be understood that in the following embodiments of this application, a name of a signal between devices or apparatuses, a name of each parameter in a signal, a name of information carried in a signal, or the like is merely an example. Another name may be used in a specific implementation. This is not specifically limited in embodiments of this application.

In addition, the method provided in embodiments of this application may be applied to interaction between a network apparatus and a terminal apparatus. The network apparatus may be the network apparatus in FIG. 4, or a module or unit in the network apparatus (for example, a chip, a chip system, a chip circuit, or a circuit in the terminal apparatus). The terminal apparatus may be the terminal apparatus in FIG. 4, or a module or unit in the terminal apparatus (for example, a chip, a chip system, a chip circuit, or a circuit in the terminal apparatus).

The network apparatus and the terminal apparatus may work on a high-frequency band, for example, a millimeter-wave band or a terahertz band, or may work on a low-frequency band, for example, a 700 MHz, 900 MHz, 2.1 GHz, 2.6 GHz, or 3.5 GHz band. It may be understood that the network apparatus and the terminal apparatus may alternatively work on another frequency band supported by a 6G system. This is not specifically limited in embodiments of this application.

It may be understood that the network apparatus and the terminal apparatus may work in an RRC active mode, an RRC inactive mode, an RRC idle mode, or another RRC state or RRC mode defined in the 6G communication system. This is not specifically limited in embodiments of this application.

For ease of understanding, the following uses interaction between a network apparatus and a terminal apparatus as an example to describe in detail a procedure of an information transmission method shown in FIG. 5.

FIG. 5 is a schematic flowchart of an information transmission method according to an embodiment of this application. As shown in FIG. 5, the method includes the following steps.

S501: A network apparatus generates configuration information for a sounding reference signal SRS. The configuration information indicates a first OCC sequence corresponding to a first SRS resource. A repetition factor corresponding to the first SRS resource is R. The first OCC sequence is a time domain OCC sequence determined from at least two candidate sequence sets. The at least two candidate sequence sets include a first candidate sequence set and a second candidate sequence set. The first candidate sequence set includes T1 mutually orthogonal time domain OCC sequences each having a sequence length of M1. The second candidate sequence set includes T2 mutually orthogonal time domain OCC sequences each having a sequence length of M2. 1<T1≤M1≤R, 1<T2≤M2≤R, M1 is different from M2, R is an integer greater than 2, and T1, T2, M1, and M2 are integers.

S502: The network apparatus sends the configuration information to a terminal apparatus. Correspondingly, the terminal apparatus receives the configuration information from the network apparatus.

S503: The terminal apparatus determines the first OCC sequence corresponding to the first SRS resource based on the configuration information.

The following separately describes steps S501 to S503.

For step S501:
It should be understood that a value of the repetition factor R corresponding to the first SRS resource may be 4, 8, or another value. The another value may be a value greater than 8. In addition, a value of R may alternatively be, for example, 3, 5, or 6. This is not specifically limited in this embodiment of this application.

It may be understood that the time domain OCC (time domain OCC, TD-OCC) in this embodiment of this application may be an OCC sequence superimposed (or referred to as mapped) in the time domain, that is, a time domain OCC sequence corresponding to an SRS resource is associated with a time domain resource occupied by the SRS resource. For example, elements sequentially arranged in the time domain OCC sequence are respectively sequentially mapped to a plurality of consecutive time domain units occupied by the SRS resource. For example, if the time domain OCC sequence is sequentially arranged as [1, 1, -1, -1], a first element 1 is mapped to a first time domain unit, a second element 1 is mapped to a second time domain unit, a third element -1 is mapped to a third time domain unit, and a fourth element -1 is mapped to a fourth time domain unit.

In addition, a mapping table relationship between the time domain OCC sequence and the consecutive units occupied by the SRS resource may alternatively be another manner. For example, in the time domain OCC sequence, the fourth element -1 is mapped to the first time domain unit, the third element -1 is mapped to the second time domain unit, the second element 1 is mapped to the third time domain unit, and the first element 1 is mapped to the fourth time domain unit. This is not specifically limited in this embodiment of this application.

It should be understood that the time domain unit in this embodiment of this application may be an OFDM symbol, a slot, a mini slot (mini slot), a subframe, a new time domain resource granularity that emerges with network evolution, or the like. This is not specifically limited in this embodiment of this application.

It may be understood that orthogonality in this embodiment of this application may be orthogonality between two sequences, that is, a correlation between the two sequences is zero. The orthogonality between two sequences may be, for example, that a vector inner product corresponding to the two sequences is 0. If there is a sequence a=[1, 1] and a sequence b=[1, -1], a·b^{T}=0, or a·b^{H}=0, where b^{H} is a conjugate transpose sequence of the sequence b.

In addition, the orthogonality between two sequences is merely an example. For example, if there is a sequence a=[a1, a2, ..., a*i*, ..., an] and b=[b1, b2, ..., b*i*, ..., bn], where 1≤*i*≤n, orthogonality between the sequence a and the sequence b may be a correlation coefficient $ρ \left(a, b\right) = \frac{1}{n} {\sum }_{i = 1}^{n} ai ⋅ bi = 0$ between the sequence a and the sequence b.

For example, if there is a sequence a=[1, 0, 0] and a sequence b=[0, 1, 1], a correlation coefficient between the sequence a and the sequence b is $ρ \left(a, b\right) = \frac{\left|{\sum }_{i = 1}^{n} ai ⋅ bi *\right|}{\sqrt{{\sum }_{i = 1}^{n} {\left|ai\right|}^{2}} \sqrt{{\sum }_{i = 1}^{n} {\left|bi\right|}^{2}}} = 0$ or $ρ \left(a, b\right) = \frac{\left|{ab}^{H}\right|}{\left|a\right| \left|b\right|} = 0$.

It may be understood that values of elements included in time domain OCC sequences in the at least two candidate sequence sets may be integers, decimals, or complex numbers. This is not specifically limited in this embodiment of this application.

In a possible implementation, the first OCC sequence is any one of the following: a Walsh sequence, a Hadamard (Hadamard) sequence, a discrete Fourier transform (discrete Fourier transform, DFT) sequence, or an inverse discrete Fourier transform (inverse discrete Fourier transform, IDFT) sequence. That is, the OCC sequence in the candidate sequence set is a Walsh sequence, a DFT sequence, or the like, which can meet that any two OCC sequences in the candidate sequence set are orthogonal, thereby minimizing mutual interference between SRS resources multiplexed together and ensuring channel estimation quality of the SRS.

It may be understood that a principle between the Walsh sequence and the DFT sequence is similar. The following uses an example in which the time domain OCC sequence in the candidate sequence set is a Walsh sequence to describe examples of several candidate sequence sets with different sequence lengths. No repeated descriptions are provided when the time domain OCC sequence is a DFT sequence.

**Table 2**

| Sequence index | ${w}_{t}^{0}$ | ${w}_{t}^{1}$ |
|---|---|---|
| 0 | 1 | 1 |
| 1 | 1 | -1 |

As shown in Table 2, a time domain OCC sequence in a candidate sequence set corresponding to Table 2 may be expressed as ${w}_{t} = \left[{w}_{t}^{0}, {w}_{t}^{1}\right]$. A first column represents indexes of different time domain OCC sequences in the candidate sequence set, a second column represents a value of a first element ${w}_{t}^{0}$ in the time domain OCC sequence, and a third column represents a value of a second element ${w}_{t}^{1}$ in the time domain OCC sequence.

It may be understood that because the first OCC sequence is a Walsh sequence, values of elements in the time domain OCC sequence are classified into two types: 1 and -1. A sequence length of the time domain OCC sequence in Table 2 is 2 (that is, the time domain OCC sequence includes two elements), that is, the candidate sequence set corresponding to Table 2 includes two mutually orthogonal time domain OCC sequences each having a sequence length of 2, and a correlation coefficient between a time domain OCC sequence [1, 1] corresponding to the sequence index 0 and a time domain OCC sequence [1, -1] corresponding to the sequence index 1 is 0.

It may be understood that the candidate sequence set that is shown in Table 2 and having a sequence length of 2 is merely an example. The time domain OCC sequence [1, -1] corresponding to the sequence index 1 may alternatively be replaced with [-1, 1]. This is not specifically limited in this embodiment of this application.

In addition, the sequence index shown in Table 2 may be replaced with a sequence identifier, or other information that may be used to determine the time domain OCC sequence in the candidate sequence set. This is not specifically limited in this embodiment of this application.

**Table 3**

| Sequence index | ${w}_{t}^{0}$ | ${w}_{t}^{1}$ | ${w}_{t}^{2}$ | ${w}_{t}^{3}$ |
|---|---|---|---|---|
| 0 | 1 | 1 | 1 | 1 |
| 1 | 1 | -1 | 1 | -1 |
| 2 | 1 | 1 | -1 | -1 |
| 3 | 1 | -1 | -1 | 1 |

As shown in Table 3, a difference between Table 3 and Table 2 lies in that a sequence length of a time domain OCC sequence in Table 3 is 4, that is, a candidate sequence set corresponding to Table 3 includes four mutually orthogonal time domain OCC sequences each having a sequence length of 4. The time domain OCC sequence in the candidate sequence set corresponding to Table 3 may be expressed as ${w}_{t} = \left[{w}_{t}^{0}, {w}_{t}^{1}, {w}_{t}^{2}, {w}_{t}^{3}\right]$.

In addition, Table 3 is merely an example. For example, a time domain OCC sequence corresponding to the sequence index 1 in Table 3 may be replaced with [-1, 1, -1, 1]. This is not specifically limited in this embodiment of this application.

**Table 4**

| Sequence index | ${w}_{t}^{0}$ | ${w}_{t}^{1}$ | ${w}_{t}^{2}$ | ${w}_{t}^{3}$ | ${w}_{t}^{4}$ | ${w}_{t}^{5}$ | ${w}_{t}^{6}$ | ${w}_{t}^{7}$ |
|---|---|---|---|---|---|---|---|---|
| 0 | 1 | 1 | 1 | 1 | 1 | 1 | 1 | 1 |
| 1 | 1 | -1 | 1 | -1 | 1 | -1 | 1 | -1 |
| 2 | 1 | 1 | -1 | -1 | 1 | 1 | -1 | -1 |
| 3 | 1 | -1 | -1 | 1 | 1 | -1 | -1 | 1 |
| 4 | 1 | 1 | 1 | 1 | -1 | -1 | -1 | -1 |
| 5 | 1 | -1 | 1 | -1 | -1 | 1 | -1 | 1 |
| 6 | 1 | 1 | -1 | -1 | -1 | -1 | 1 | 1 |
| 7 | 1 | -1 | -1 | 1 | -1 | 1 | 1 | -1 |

As shown in Table 4, a difference between Table 4 and Table 2 or Table 3 lies in that a sequence length of a time domain OCC sequence in Table 4 is 8, that is, a candidate sequence set corresponding to Table 4 includes eight mutually orthogonal time domain OCC sequences each having a sequence length of 8. The time domain OCC sequence in the candidate sequence set corresponding to Table 4 may be expressed as ${w}_{t} = \left[{w}_{t}^{0}, {w}_{t}^{1}, {w}_{t}^{2}, {w}_{t}^{3}, {w}_{t}^{4}, {w}_{t}^{5}, {w}_{t}^{6}, {w}_{t}^{7}\right]$*.*

In addition, Table 4 is merely an example. For example, a time domain OCC sequence corresponding to the sequence index 1 in Table 4 may be replaced with [-1, 1, -1, 1, -1, 1, -1, 1]. This is not specifically limited in this embodiment of this application.

It may be understood that the time domain OCC sequence in Table 2 to Table 4 is a Walsh sequence. To ensure orthogonality between different sequences, the sequence length is a power of 2 (that is, 2, 4, or 8). In this embodiment of this application, when a sequence other than the Walsh sequence is used as the time domain OCC sequence, the sequence length of the time domain OCC sequence may not be the power of 2. For example, when a value of an element in the time domain OCC sequence may be a complex number, a candidate sequence set having a sequence length of 5 may include $\left[\frac{j}{\sqrt{2}}, \frac{j}{\sqrt{2}}, 1, 1, 1\right] , \left[\frac{j}{\sqrt{2}},\frac{j}{\sqrt{2}},1,1,-1\right]$, and $\left[\frac{- j}{\sqrt{2}},\frac{- j}{\sqrt{2}},1,-1,-1\right]$.

It should be understood that when the time domain OCC sequence is a Walsh sequence, the sequence length of the time domain OCC sequence in the candidate sequence set is less than or equal to R. For example, when R=4, the sequence length of the time domain OCC sequence may be 4 or 2. For another example, when R=8, the sequence length of the time domain OCC sequence may be 8, 4, or 2. For still another example, when R=12, the sequence length of the time domain OCC sequence may be 8, 4, or 2.

It may be understood that when the time domain OCC sequence is a Walsh sequence, and R is greater than or equal to 8, the at least two candidate sequence sets may include three candidate sequence sets with different time domain OCC sequence lengths: a candidate sequence set corresponding to a time domain OCC sequence length of 2, a candidate sequence set corresponding to a time domain OCC sequence length of 4, and a candidate sequence set corresponding to a time domain OCC sequence length of 8. In other words, when the time domain OCC sequence is a Walsh sequence, and R is greater than or equal to 8, the at least two candidate sequence sets may include a third candidate sequence set. The third candidate sequence set may include T3 time domain OCC sequences each having a sequence length of M3, T3≤M3≤R, and M3 is not equal to M1, and is not equal to M2.

It may be further understood that sequence lengths of time domain OCCs in the first candidate sequence set and the second candidate sequence set are different (that is, M1 is different from M2), which may mean that M1>M2 or M1<M2.

The following provides several examples for description.

Example 1: An example in which the time domain OCC sequence is a Walsh sequence is used, and R=4.

When M1>M2, M1 may be equal to R (that is, M1 is equal to 4), and M2 may be equal to 2. When M1<M2, M2 may be equal to R (that is, M2 is equal to 4), and M1 may be equal to 2.

In addition, in an example of M1=2, the first candidate sequence set may be the candidate sequence set shown in Table 2, and T1=M1=2. In an example of M1=4, the first candidate sequence set may be the candidate sequence set shown in Table 3, that is, T1=M1=4. Alternatively, the first candidate sequence set may be a candidate sequence set including any three or two time domain OCC sequences in the four time domain OCC sequences in Table 3. For example, three time domain OCC sequences corresponding to the sequence index 0, the sequence index 2, and the sequence index 3 form the first candidate sequence set, or three time domain OCC sequences corresponding to the sequence indexes 1 to 3 form the first candidate sequence set. This is not specifically limited in this embodiment of this application.

That is, for the candidate sequence sets shown in Table 3 and Table 4, the network apparatus may use one or more time domain OCC sequences as reserved (reserved). The one or more reserved time domain OCC sequences may be fixedly configured for another dedicated SRS resource. In addition, a quantity of time domain OCC sequences in the candidate sequence set is decreased, and signaling complexity for configuring the candidate sequence set may be reduced.

It may be understood that similar to M1 in the first candidate sequence set, when M2=2 or 4 in the second candidate sequence set, T2 may be equal to M2 or less than M2. Details are not described.

Example 2: An example in which the time domain OCC sequence is a Walsh sequence is used, and R=8.

Values of M1, M2, and M3 may be classified into the following cases:
Case 1: When M1>M2, M1 may be equal to R (that is, M1 is equal to 8), M2 may be equal to 2, and M3 may be equal to 4.
Case 2: When M1>M2, M1 may be equal to R (that is, M1 is equal to 8), M2 may be equal to 4, and M3 may be equal to 2.
Case 3: When M1>M2, M1 may be equal to 4 (that is, M1 is less than R), M2 may be equal to 2, and M3 may be equal to 8.
Case 4: When M1<M2, M2 may be equal to R (that is, M2 is equal to 8), M1 may be equal to 2, and M3 may be equal to 4.
Case 5: When M1<M2, M2 may be equal to R (that is, M2 is equal to 8), M1 may be equal to 4, and M3 may be equal to 2.
Case 6: When M1<M2, M2 may be equal to 4 (that is, M2 is equal to R), M1 may be equal to 2, and M3 may be equal to 8.

In addition, in an example of M1=8, the first candidate sequence set may be the candidate sequence set shown in Table 4, and T1=M1=8. Alternatively, the first candidate sequence set may be a candidate sequence set including any q (q is a positive integer less than 8) time domain OCC sequences in the eight time domain OCC sequences in Table 4. For example, when q=7, the first candidate sequence set is a candidate sequence set including seven time domain OCC sequences corresponding to the sequence indexes 0 to 6, or a candidate sequence set including seven time domain OCC sequences corresponding to the sequence indexes 1 to 7. This is not specifically limited in this embodiment of this application.

Similarly, when M2=2, the second candidate sequence set may be the candidate sequence set shown in Table 2, and T2=M2=2. When M3=4, the third candidate sequence set may be the candidate sequence set shown in Table 3, and T3=M3=4. Alternatively, the third candidate sequence set may be a candidate sequence set including some time domain OCC sequences in Table 3.

It should be understood that because sequence lengths of time domain OCC sequences included in the foregoing different candidate sequence sets are different, when R is greater than 2, the network apparatus may flexibly superimpose time domain OCC sequences with different sequence lengths on R time domain resources, so that different SRS resources can be efficiently multiplexed on a same time-frequency resource.

It should be further understood that the at least two candidate sequence sets in step S501 may be understood as a candidate set, and the first candidate sequence set and the second candidate sequence set may be understood as two subsets in the candidate set. For example, the candidate set may include the time domain OCC sequence set (namely, the first candidate sequence set) corresponding to Table 2 and the time domain OCC sequence set (namely, the second candidate sequence set) corresponding to Table 3. In addition, the candidate set may further include more subsets, for example, the time domain OCC sequence set corresponding to Table 4. This is not specifically limited in this embodiment of this application.

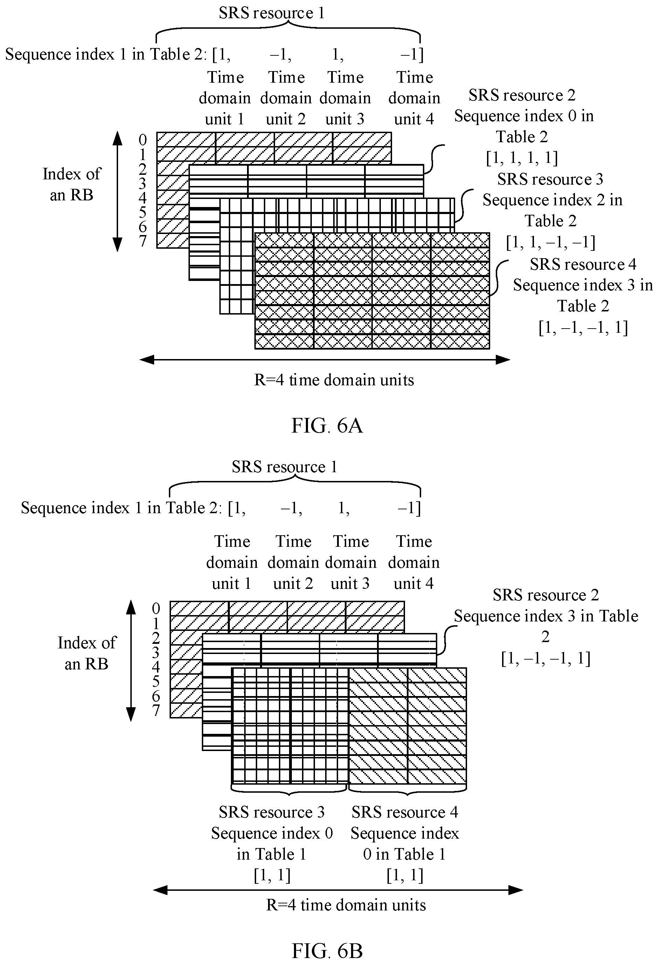

For example, FIG. 6A to FIG. 6C are diagrams of multiplexing a plurality of SRS resources based on an OCC sequence according to an embodiment of this application. It is assumed that the first SRS resource is an SRS resource 1 in FIG. 6A to FIG. 6C, R=4, the first candidate sequence set is the candidate sequence set shown in Table 2 (that is, T1=M1=2), and the second candidate sequence combination is the candidate sequence set shown in Table 3 (that is, T2=M2=4).

As shown in FIG. 6A, the network apparatus may configure the first OCC sequence for the SRS resource 1 as the time domain OCC sequence corresponding to the sequence index 1 in Table 3, namely, a time domain sequence [1, -1, 1, -1]. When an SRS resource configured by the network apparatus for another terminal apparatus is also repeatedly sent in R=4 consecutive time domain units, the network apparatus may implement multiplexing of three SRS resources based on three time domain OCC sequences other than the time domain OCC sequence corresponding to the sequence index 1 in Table 3. In other words, the network apparatus may configure, on a same time-frequency resource occupied by the SRS resource 1, the time domain OCC sequence corresponding to the sequence index 0 in Table 3 for an SRS resource 2, the time domain OCC sequence corresponding to the sequence index 2 in Table 3 for an SRS resource 3, and the time domain OCC sequence corresponding to the sequence index 3 in Table 3 for an SRS resource 4. In this way, orthogonality between the four time domain OCC sequences in Table 3 may be used, so that the SRS resources 1 to 4 can be multiplexed on the same time-frequency resource.

It should be understood that FIG. 6A is applicable to a scenario in which an SRS resource configured by the network apparatus for another terminal apparatus is also repeatedly sent in R=4 consecutive time domain units. However, when the SRS resource configured by the network apparatus for the another terminal apparatus may be repeatedly sent in less than four consecutive time domain units, a plurality of SRS resources may be configured with reference to the first candidate sequence set and the second candidate sequence set.

As shown in FIG. 6B, the SRS resource 3 and the SRS resource 4 are repeatedly sent in two consecutive time domain units in R=4 consecutive time domain units. Therefore, the network apparatus may configure the time domain OCC sequence corresponding to the sequence index 1 in Table 3 for the SRS resource 1, configure the time domain OCC sequence corresponding to the sequence index 3 in Table 3 for the SRS resource 2, configure the time domain OCC sequence corresponding to the sequence index 0 in Table 2 for the SRS resource 3, and also configure the time domain OCC sequence corresponding to the sequence index 0 in Table 2 for the SRS resource 4.

Further, as shown in FIG. 6B, in four consecutive time domain units 1 to 4, for the time domain unit 1 and the time domain unit 2, the time domain OCC sequence [1, 1] corresponding to the sequence index 0 in Table 2 is separately orthogonal to a subsequence [1, -1] in the first OCC sequence corresponding to the SRS resource 1 and a subsequence [1, -1] in the time domain OCC sequence corresponding to the SRS resource 2. Therefore, it can be ensured, by using the foregoing time domain OCC sequence, that the SRS resource 3, the SRS resource 1, and the SRS resource 2 do not interfere with each other in the time domain units 1 and 2, to implement multiplexing. Similarly, the SRS resource 4, the SRS resource 1, and the SRS resource 2 may also be multiplexed in the time domain units 3 to 4 by using a time domain OCC sequence.

In addition, the SRS resource 1 and the SRS resource 2 are not orthogonal in the time domain unit 1 and the time domain unit 2, but are mutually orthogonal in the four consecutive time domain units (namely, the time domain units 1 to 4). Therefore, the SRS resource 1 and the SRS resource 2 can also be multiplexed on a same time-frequency resource.

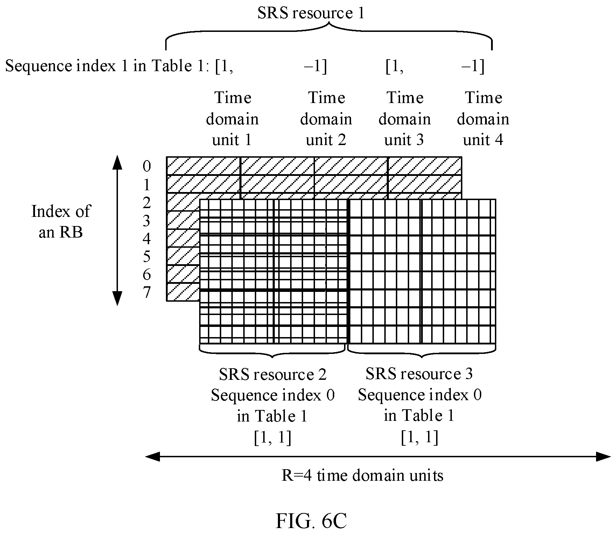

As shown in FIG. 6C, when all other SRS resources are transmitted in two consecutive time domain units, the network apparatus may configure the time domain OCC sequence in Table 2 for the SRS resource 1. Therefore, time domain OCC sequences corresponding to the SRS resource 1 in the time domain units 1 and 2 and the time domain units 3 and 4 are the same. In addition, the network apparatus may separately configure the time domain OCC sequence corresponding to the sequence index 0 in Table 2 for the SRS resource 2 and the SRS resource 3. Therefore, the SRR resource 1 and the SRS resource 2 do not interfere with each other in the time domain units 1 and 2, and the SRS resource 1 and the SRS resource 3 do not interfere with each other in the time domain units 3 and 4.

It may be understood that FIG. 6A, FIG. 6B, and FIG. 6C are merely examples. A specifically configured time domain OCC sequence may be another sequence index combination. For example, the time domain OCC sequence ([1, 1]) corresponding to the sequence index 0 in Table 2 may be configured for the SRS resource in FIG. 6C, and time domain OCC sequences corresponding to the SRS resource 2 and the SRS resource 3 may be the time domain OCC sequence (1, -1] corresponding to the sequence index 1 in Table 2. This is not specifically limited in this embodiment of this application.

In addition, when the network apparatus configures an SRS resource (for example, the SRS resource 4) for another terminal apparatus that may occupy four consecutive time domain units, in FIG. 6C, the time domain OCC sequence (not shown in FIG. 6C) corresponding to the sequence index 3 in Table 3 may be configured for the SRS resource 4, so that the SRS resource 4 and the SRS resource 2 do not interfere with each other in the time domain units 1 and 2, and the SRS resource 4 and the SRS resource 3 do not interfere with each other in the time domain units 3 and 4.

In addition, when R is greater than or equal to 8, the network apparatus may configure time domain OCC sequences for different SRS resources based on three candidate sequence sets with different sequence lengths, so that a plurality of SRS resources are efficiently multiplexed in R consecutive time domain units. A specific implementation principle is similar to FIG. 6A, FIG. 6B, and FIG. 6C. Details are not described.

It may be understood that as shown in FIG. 6 A, FIG. 6B, and FIG. 6C, for different cases, based on at least two candidate sequence sets with different sequence lengths, the network apparatus may flexibly superimpose time domain OCC sequences with different sequence lengths on the R time domain resources, so that different SRS resources can be efficiently multiplexed on a same time-frequency resource.

It should be understood that the at least two candidate sequence sets may be preconfigured in a protocol, may be negotiated in advance between the network apparatus and the terminal apparatus, or may be indicated by the network apparatus. This is not specifically limited in this embodiment of this application.

In a possible implementation, the first OCC sequence corresponds to each of R/M time domain resource groups, M consecutive time domain units included in each time domain resource group correspond to M elements included in the first OCC sequence, and the R/M time domain resource groups are time domain resource groups for repeated transmission of the SRS. Alternatively, M elements included in the first OCC correspond to R consecutive time domain units, and the R consecutive time domain units are time domain units for repeated transmission of the SRS. M is equal to M1 or M2. That is, the first OCC sequence configured by the network apparatus for the first SRS resource may enable the M-length time domain OCC sequence to be mapped to the R time domain units occupied by the first SRS resource, so that orthogonality of the TD-OCC can be ensured to a maximum extent, to ensure channel estimation performance of the SRS. In addition, when the repetition factor R is greater than M, the R time domain units may be grouped into a plurality of time domain resource groups (each resource group includes M time domain units) through time domain unit grouping and mapping, so that SRS resources configured with different time domain OCC lengths or repetition factors R can be multiplexed on a same time-frequency resource.

For example, it is assumed that R is greater than M, and R/M is equal to 3. Therefore, R includes three frequency domain resource groups, and each time domain resource group includes M consecutive time domain units. In this way, each time domain resource group corresponds to a same first OCC sequence, that is, there is one-to-one mapping between M consecutive time domain units in a second time domain resource group and the M elements in the first OCC sequence.

It should be understood that R/M may be a rounded-up value (that is, ceil(R/M)) or a rounded-down value (that is, floor(R/M)) of R/M. For example, when R is equal to 3 and M=2, R/M may be a rounded-up value of 2. For another example, when R is equal to 4 and M=3, R/M may be a rounded-down value of 1.

In addition, in this embodiment of this application, when A/B is involved, A/B may be ceil(A/B) or floor(A/B). This applies throughout and will not be repeated below.

It may be understood that when a quantity ${N}_{symb}^{SRS}$ of time domain units occupied by the first SRS resource is greater than R, the total time domain units occupied by the first SRS resource may be grouped into ${N}_{symb}^{SRS} / R$ groups. Each group includes R consecutive time domain units, and the R consecutive time domain units may be grouped into R/M time domain resource groups. In this way, the R consecutive time domain units included in each group may be mapped in the foregoing mapping manner between the first OCC sequence and the R/M time domain resource groups.

It should be understood that when the time domain unit is an OFDM symbol, ${N}_{symb}^{SRS}$ OFDM symbols occupied by the first SRS resource may be in one slot or different slots. This is not specifically limited in this embodiment of this application.

It may be understood that for details of the ${N}_{symb}^{SRS}$ OFDM symbols, refer to related descriptions of the " ${N}_{symb}^{SRS}$ OFDM symbols" in the preamble part. Details are not described herein.

In a possible implementation, the first SRS resource includes at least one port, and an SRS sequence corresponding to each of the at least one port in an *l*'^{th} time domain unit of N time domain units is determined based on a k^{th} element in the first OCC sequence and a first SRS sequence corresponding to each port. The first SRS sequence corresponding to each port is determined based on an SRS base sequence and a cyclic shift CS value that correspond to each port. The N time domain units are time domain units occupied by each port, k=*l*' mod *M*, and M is equal to M1 or M2. That is, the SRS sequence corresponding to the *l*'^{th} time domain unit in the first SRS resource may be determined by using the k^{th} element in the first OCC sequence and the first SRS sequence corresponding to each port. In this way, by using orthogonality between the first OCC sequence and another time domain OCC sequence, more SRS resources can be superimposed and sent on the R time domain resources, for repeatedly sending the SRS, corresponding to the first SRS resource.

It should be understood that the N time domain units may also be time domain units occupied by the first SRS resource.

It may be understood that the N time domain units may be N OFDM symbols occupied by each port in one slot, and the N OFDM symbols may be, for example, the ${N}_{symb}^{SRS}$ OFDM symbols in the preamble part.

In addition, *mod* in k=*l*' *mod M* may represent a modulo or remainder operation, and $1 \leq l ′ \leq {N}_{symb}^{SRS}$. The *l*'^{th} time domain unit may alternatively be represented by using an index or a number. For example, the index starts from 0, $0 \leq l ′ < {N}_{symb}^{SRS}$, and the time domain unit index *l*' represents an (*l*'+1)^{th} time domain unit in the ${N}_{symb}^{SRS}$ time domain units.

Similarly, an index of an element in the first OCC sequence may also start from 0. For example, ${w}_{t} = \left[{w}_{t}^{0},{w}_{t}^{1},…,{w}_{t}^{M - 1}\right] , {w}_{t}^{0}$ represents an element corresponding to an index 0 (or referred to as a first element in the first OCC sequence), ${w}_{t}^{1}$ represents an element corresponding to an index 1 (or referred to as a second element in the first OCC sequence), and ${w}_{t}^{M - 1}$ represents an element corresponding to an index M-1 (or referred to as an M^{th} element in the first OCC sequence).

It may be further understood that the first SRS sequence corresponding to each port is determined based on the SRS base sequence and the CS value that correspond to each port. For a specific implementation, refer to Formula (1) to Formula (6). Details are not described.

It should be understood that when the first OCC sequence is a Walsh sequence or a DFT sequence, that the SRS sequence corresponding to the *l*'^{th} time domain unit is determined based on the k^{th} element in the first OCC sequence and the first SRS sequence corresponding to each port may include: The SRS sequence corresponding to the *l*'^{th} time domain unit is determined by multiplying the k^{th} element in the first OCC sequence by the first SRS sequence corresponding to each port. Alternatively, an n^{th} element in the SRS sequence corresponding to the *l*'^{th} time domain unit is determined by multiplying the k^{th} element in the first OCC sequence by an n^{th} element in the first SRS sequence corresponding to each port.

It may be understood that determining the SRS sequence corresponding to the *l*'^{th} time domain unit by multiplying the k^{th} element in the first OCC sequence by the first SRS sequence corresponding to each port is merely an example. The SRS sequence corresponding to the *l*'^{th} time domain unit may be determined in another manner. For example, based on different values of elements in the first OCC sequence, the SRS sequence corresponding to the *l*'^{th} time domain unit may be determined by performing a mathematical operation such as conjugate multiplication, addition, or weighted summation between the k^{th} element in the first OCC sequence and the first SRS sequence corresponding to each port. This is not specifically limited in this embodiment of this application.

In a possible implementation, the at least one port includes a port *pᵢ,* and an SRS sequence *r*^{(*pi*)}(*n, l*') corresponding to the port *pᵢ* in the *l*'^{th} time domain unit may be determined by using Formula (7). ${r}^{\left({p}_{i}\right)} \left(n,l′\right) = {w}_{t}^{\left(l′ mod M\right)} {r}^{\left({α}_{i}, δ\right)} \left(n\right) , 0 \leq n < {M}_{sc}^{SRS} - 1$ Formula (7)

Herein, *n* is an index of an element in the SRS sequence, ${M}_{sc}^{SRS} = {mN}_{sc}^{RB} / {2}^{δ}$, m is a quantity of resource blocks RBs occupied for frequency-hopping transmission of the SRS, ${N}_{sc}^{RB}$ is a quantity of subcarriers SCs included in one RB, *δ* = log₂(*K*_{TC}), *K*_{TC} is a comb spacing corresponding to the port *pᵢ,* ${w}_{t}^{\left(l′ mod M\right)}$ is an (*l'* mod *M*)^{th} element in the first OCC sequence, M is equal to M1 or M2, *r^{(αi,δ)}(n)* is a first SRS sequence corresponding to the port *pᵢ, r^{(αi,δ)}=e^{jαin}r̅*(*n*), *αᵢ* is a CS value corresponding to the port *pᵢ,* and *r̅*(*n*) is an SRS base sequence corresponding to the port *pᵢ*. That is, the terminal apparatus may determine, by multiplying the (*l' mod M*)^{th} element in the first OCC sequence by the first SRS sequence *r^{(αi,δ)}(n)* corresponding to the port *pᵢ,* an SRS sequence on which the first OCC sequence is superimposed in the time domain. This can reduce implementation complexity of determining the SRS sequence corresponding to the port *pᵢ* in the *l'*^{th} time domain unit, and facilitate deployment.

It should be understood that the port *pᵢ* may represent an index of an (*i*+1)^{th} port in ${N}_{ap}^{SRS}$ ports included in the first SRS resource, that is, ${\left\{{p}_{i}\right\}}_{i = 0}^{{N}_{ap}^{SRS} - 1}$. Herein, *pᵢ* = 1000 *+ i,* that is, the port index corresponding to the SRS may start from a number 1000. It may be understood that the port index corresponding to the SRS may alternatively start from another number. This is not specifically limited in this embodiment of this application.

In addition, the (*l' mod M*)^{th} element ${w}_{t}^{\left(l′ mod M\right)}$ in the first OCC sequence may alternatively be expressed as *wₜ*(*l' mod M),* and *wₜ*(*l' mod M*) represents an element value corresponding to an element index *l*' *mod M* in the first OCC sequence *wₜ*(*k*)*.* The *l*'^{th} time domain unit may alternatively be represented by using an index or a number. For example, the index starts from 0, $0 \leq l ′ < {N}_{symb}^{SRS}$, and the time domain unit index *l*' represents an (*l*'+1)^{th} time domain unit in the ${N}_{symb}^{SRS}$ time domain units. In this case, Formula (7) may be modified to Formula (8). ${r}^{\left({p}_{i}\right)} \left(n,l′-1\right) = {w}_{t}^{\left(\left(l′-1\right) mod M\right)} {r}^{\left({α}_{i}, δ\right)} \left(n\right) , 0 \leq n < {M}_{sc}^{SRS} - 1$ Formula (8)

Alternatively, that the SRS sequence *r^{(pi)}(n, l*') corresponding to the port *pᵢ* in the l'^{th} time domain unit may be determined by using Formula (7) may be replaced with the following: The SRS sequence *r^{(pi)}(n, l*') corresponding to the port *pᵢ* in a case of the time domain unit index *l*' may be determined by using Formula (7).

It may be understood that *r^{(αi)}(n)* in ${r}^{\left({p}_{i}\right)} \left(n,l′\right) = {w}_{t}^{\left(l′ mod M\right)} {r}^{\left({α}_{i}, δ\right)} \left(n\right)$ may be ${r}_{u , v}^{\left({α}_{i}, δ\right)} \left(n\right)$ in Formula (6). For details of another parameter such as *u, v, αᵢ, δ,* ${M}_{sc}^{SRS}$, m, ${N}_{sc}^{RB}$*,* or *K*_{TC}, refer to related descriptions of Formula (1) to Formula (6). Details are not described.

For example, the configuration information in step S501 may further include a quantity ${N}_{ap}^{SRS}$ of antenna ports, a transmission comb configuration parameter (for example, a higher-layer parameter *transmission Comb* in the SRS resource), and a time domain configuration parameter. The time domain configuration parameter may indicate a start symbol position *l*₀=10, ${N}_{symb}^{SRS} = 4$ occupied consecutive OFDM symbols, and the repetition factor R=4. That is, it indicates that in one slot, the first SRS resource occupies four consecutive OFDM symbols (OFDM symbol indexes are 10 to 13), and the SRS is repeatedly sent on the four consecutive OFDM symbols. If the configuration information indicates that the first OCC sequence corresponding to the first SRS resource is the time domain OCC sequence ${w}_{t} = \left[{w}_{t}^{0}, {w}_{t}^{1}, {w}_{t}^{2}, {w}_{t}^{3}\right] = \left[1, -1, 1, -1\right]$ corresponding to the sequence index 1 in Table 3, an SRS sequence corresponding to the first SRS resource in a case of the OFDM symbol index 10 may be obtained based on the SRS sequence ${r}^{\left({p}_{i}\right)} \left(n,l′\right) = {w}_{t}^{\left(l′ mod M\right)} {r}^{\left({α}_{i}, δ\right)} \left(n\right)$ corresponding to the port *pᵢ* in the *l*'^{th} time domain unit, that is, an (l'+1)^{th} ( *l*' = 0 ) OFDM symbol in the four OFDM symbols is ${r}^{\left({p}_{i}\right)} \left(n,l′=0\right) = {w}_{t}^{\left(0 mod 4\right)} {r}^{\left({α}_{i}, δ\right)} \left(n\right) = {w}_{t}^{0} {r}^{\left({α}_{i}, δ\right)} \left(n\right)$ . Similarly, an SRS sequence corresponding to the first SRS resource in a case of the OFDM symbol 13 is obtained, that is, an (l'+1)^{th} (*l'* = 3) OFDM symbol in the four OFDM symbols is ${r}^{\left({p}_{i}\right)} \left(n,l′=3\right) = {w}_{t}^{\left(3 mod 4\right)} {r}^{\left({α}_{i}, δ\right)} \left(n\right) = {w}_{t}^{3} {r}^{\left({α}_{i}, δ\right)} \left(n\right)$.

The foregoing example is still used. If the configuration information indicates that the first OCC sequence corresponding to the first SRS resource is the time domain OCC sequence ${w}_{t} = \left[{w}_{t}^{0},{w}_{t}^{1},\right] = \left[1, 1\right]$ corresponding to the sequence index 0 in Table 2, the R=4 consecutive OFDM symbols occupied by the first SRS resource may be grouped into R/M=4/2=2 time domain resource groups, and OFDM symbols in each time domain resource group correspond to the first *OCC* sequence ${w}_{t} = \left[{w}_{t}^{0},{w}_{t}^{1},\right] = \left[1, 1\right]$. For example, the OFDM symbol 10 and the OFDM symbol 11 are a group. In this case, the OFDM symbol 10 corresponds to the first element (index 0) in the first OCC sequence, that is, an (*l'*+1)^{th} (*l'* = 0) OFDM symbol in the four OFDM symbols is ${r}^{\left({p}_{i}\right)} \left(n,l′=0\right) = {w}_{t}^{\left(0 mod 2\right)} {r}^{\left({α}_{i}, δ\right)} \left(n\right) = {w}_{t}^{0} {r}^{\left({α}_{i}, δ\right)} \left(n\right)$. The OFDM symbol 11 corresponds to the second element (index 1) in the first OCC sequence, that is, an (*l'*+1)^{th} (*l'* = 1) OFDM symbol in the four OFDM symbols is ${r}^{\left({p}_{i}\right)} \left(n,l′=1\right) = {w}_{t}^{\left(1 mod 2\right)} {r}^{\left({α}_{i}, δ\right)} \left(n\right) = {w}_{t}^{1} {r}^{\left({α}_{i}, δ\right)} \left(n\right)$.

Similarly, the OFDM symbol 12 and the OFDM symbol 13 are a group. In this case, the OFDM symbol 12 corresponds to the first element in the first OCC sequence, that is, an (*l'*+1)^{th} ( *l*' = 2 ) OFDM symbol in the four OFDM symbols is ${r}^{\left({p}_{i}\right)} \left(n,l′=2\right) = {w}_{t}^{\left(2 mod 2\right)} {r}^{\left({α}_{i}, δ\right)} \left(n\right) = {w}_{t}^{0} {r}^{\left({α}_{i}, δ\right)} \left(n\right)$ . The OFDM symbol 13 corresponds to the second element in the first OCC sequence, that is, an (*l'*+1)^{th} (*l'* = 3) OFDM symbol in the four OFDM symbols is ${r}^{\left({p}_{i}\right)} \left(n,l′=3\right) = {w}_{t}^{\left(3 mod 2\right)} {r}^{\left({α}_{i}, δ\right)} \left(n\right) = {w}_{t}^{1} {r}^{\left({α}_{i}, δ\right)} \left(n\right)$.

For step S502:
It may be understood that the configuration information may be carried in at least one of the following: an RRC message (or referred to as signaling), downlink control information (downlink control information, DCI), or a MAC protocol data unit (protocol data unit, PDU). The RRC message may be, for example, an RRC setup (RRC setup) message, an RRC resume (RRC resume) message, or an RRC reconfiguration (RRC reconfiguration) message. That is, the network apparatus may use the RRC message to carry the configuration information, so that the configuration for the SRS may be continuously effective in an RRC connection period, and the first OCC sequence corresponding to the first SRS resource does not need to be indicated during each time of scheduling. It may be understood that when the DCI or the MAC PDU (for example, a MAC control element (control element, CE) or a MAC service data unit (service data unit, SDU) in the MAC PDU) carries the configuration information for the SRS, the network apparatus may dynamically indicate the first OCC sequence corresponding to the first SRS resource to the terminal apparatus.

In a possible implementation, the configuration information includes index information of the first OCC sequence, and the index information is used to determine the OCC sequence from at least one candidate sequence set. That is, indication overheads of indicating the first OCC sequence by using the configuration information can be reduced by using the index information, and reliability of the configuration information can be improved.

It should be understood that the index information may include an index or an identifier of the first OCC sequence in the candidate sequence set, or other information that may be used to determine the first OCC sequence in the candidate sequence set. This is not specifically limited in this embodiment of this application.

In a possible implementation, the configuration information further includes indication information of the at least one candidate sequence set. That is, the network apparatus may configure the at least one candidate sequence set for the terminal apparatus, to indicate, to the terminal apparatus, a candidate sequence set that corresponds to the first SRS resource and that is expected by the network apparatus in a next period of time, so as to subsequently indicate the first OCC sequence by using an index in the candidate sequence set.

It may be understood that the indication information of the at least one candidate sequence set may be carried in an RRC message, and the index information may be carried in DCI or a MAC CE. This is not specifically limited in this embodiment of this application.

In addition, that the configuration information further includes the indication information of the at least one candidate sequence set may mean that the network apparatus may configure the at least one candidate sequence set in the at least two candidate sequence sets by using the configuration information, and another candidate sequence set may not be configured. In this way, indication overheads of the configuration information may be reduced.

For example, when the first candidate sequence set and the second candidate sequence set are not preconfigured in a protocol, and the first OCC sequence set configured by the network apparatus for the terminal apparatus is the time domain OCC sequence in the first candidate sequence set (for example, a case corresponding to FIG. 6A), the configuration information may include indication information of the first candidate sequence set, but does not include indication information of the second candidate sequence set. In this way, the terminal apparatus may also determine the first OCC sequence from the first candidate sequence set based on the configuration information.

For step S503:
It may be understood that the terminal apparatus may determine the first OCC sequence corresponding to the first SRS resource based on Formula (7) and the configuration information. A specific implementation is not described.

In this embodiment of this application, the first OCC sequence is a time domain OCC sequence determined from the at least two candidate sequence sets, and different time domain OCC sequences in each of the at least two candidate sequence sets are orthogonal. Therefore, the network apparatus configures the first OCC sequence for the first SRS resource by using the configuration information for the SRS, to use orthogonality between different time domain OCC sequences in each candidate sequence set, so that more SRS resources can be superimposed and sent on R time domain resources for repeatedly sending the SRS, that is, an SRS resource multiplexing capability is improved. Further, because sequence lengths of time domain OCC sequences included in different candidate sequence sets are different, when R is greater than 2, time domain OCC sequences with different sequence lengths may be flexibly superimposed on the R time domain resources, so that different SRS resources can be efficiently multiplexed on a same time-frequency resource. Therefore, based on the information transmission method provided in this embodiment of this application, the multiplexing efficiency of SRS resources can be improved during repeated transmission of the SRS.

It may be understood that a repetition factor R corresponding to an SRS resource supports a plurality of values, to adapt to different channel propagation environments. Because different channel propagation environments correspond to different channel estimation requirements, to meet diversified channel estimation requirements, an embodiment of this application further provides another information transmission method. Candidate sequence sets corresponding to a time domain OCC sequence and a frequency domain OCC sequence are enhanced, so that OCC sequences corresponding to any two sequences in the candidate sequence sets at different time-frequency resource granularities (or combinations) are mutually orthogonal, to better adapt to different channel conditions and meet diversified channel estimation requirements.

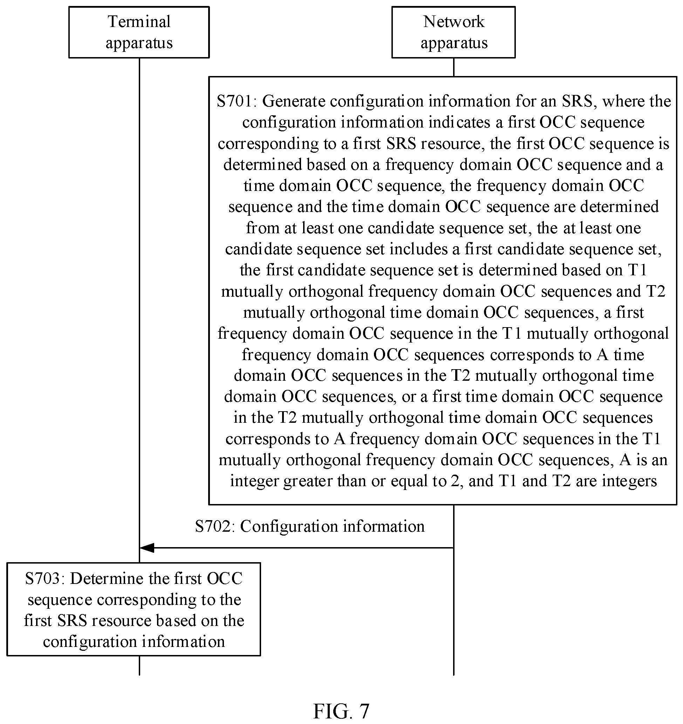

With reference to FIG. 7, the following describes another information transmission method according to an embodiment of this application.

FIG. 7 is a schematic flowchart of another information transmission method according to an embodiment of this application. As shown in FIG. 7, the method includes the following steps.

S701: A network apparatus generates configuration information for a sounding reference signal SRS. The configuration information indicates a first orthogonal cover code OCC sequence corresponding to a first SRS resource. The first OCC sequence is determined based on a frequency domain OCC sequence and a time domain OCC sequence. The frequency domain OCC sequence and the time domain OCC sequence are determined from at least one candidate sequence set. The at least one candidate sequence set includes a first candidate sequence set. The first candidate sequence set is determined based on T1 mutually orthogonal frequency domain OCC sequences and T2 mutually orthogonal time domain OCC sequences. A first frequency domain OCC sequence in the T1 mutually orthogonal frequency domain OCC sequences corresponds to A time domain OCC sequences in the T2 mutually orthogonal time domain OCC sequences, or a first time domain OCC sequence in the T2 mutually orthogonal time domain OCC sequences corresponds to A frequency domain OCC sequences in the T1 mutually orthogonal frequency domain OCC sequences. A is an integer greater than or equal to 2, and T1 and T2 are positive integers.

S702: The network apparatus sends the configuration information to a terminal apparatus. Correspondingly, the terminal apparatus receives the configuration information from the network apparatus.

S703: The terminal apparatus determines the first OCC sequence corresponding to the first SRS resource based on the configuration information.

The following separately describes steps S701 to S703.

For step S701:
It may be understood that for details of the time domain OCC sequence, the time domain unit, and mapping between the time domain OCC sequence and the time domain unit, refer to related descriptions in step S501. Details are not described herein.

In addition, a difference between the frequency domain OCC (frequency domain OCC, FD-OCC) sequence and the time domain OCC sequence lies in that the frequency domain OCC sequence is superimposed (or referred to as "mapped") in the frequency domain, that is, a frequency domain OCC sequence corresponding to an SRS resource is associated with a frequency domain resource occupied by the SRS resource. For example, elements sequentially arranged in the frequency domain OCC sequence are respectively sequentially mapped to a plurality of frequency domain units occupied by the SRS resource. For example, if the frequency domain OCC sequence is sequentially arranged as [1, 1, -1, -1], a first element 1 is mapped to a first frequency domain unit, a second element 1 is mapped to a second frequency domain unit, a third element -1 is mapped to a third frequency domain unit, and a fourth element -1 is mapped to a fourth frequency domain unit. It may be understood that a value of an element in the frequency domain OCC sequence may be similar to a value of an element in the time domain OCC sequence. For example, the frequency domain OCC sequence may be a Walsh sequence, a Hadamard (Hadamard) sequence, a DFT sequence, or an IDFT sequence.

It may be further understood that the frequency domain unit occupied by the SRS resource may be a subcarrier SC, a resource element (resource element, RE), a resource block RB, a sub-band, or the like. This is not specifically limited in this embodiment of this application.

In addition, the frequency domain resource occupied by the SRS resource may be a plurality of subcarriers that are distributed at intervals in the frequency domain. For details, refer to FIG. 1 and related descriptions of the comb in the preamble part. Details are not described herein.

It should be understood that, that the first OCC sequence is determined based on a frequency domain OCC sequence and a time domain OCC sequence may mean that the first OCC sequence may be a sequence formed based on a product of corresponding elements in the frequency domain OCC sequence and the time domain OCC sequence. For example, the first OCC sequence includes an element obtained based on a product of each element in the frequency domain OCC sequence and each element in the time domain OCC sequence. If a frequency domain OCC sequence having a sequence length of S may be expressed as ${w}_{f} = \left[{w}_{f}^{0},{w}_{f}^{1},…,{w}_{f}^{S - 1}\right]$, and a time domain OCC sequence having a sequence length of M may be expressed as ${w}_{t} = \left[{w}_{t}^{0},{w}_{t}^{1},…,{w}_{t}^{M - 1}\right]$ , the first OCC sequence may be expressed as ${w}_{OCC} = \left[{w}_{t}^{0}{w}_{f}^{0},{w}_{t}^{1}{w}_{f}^{0},…,{w}_{t}^{M - 1}{w}_{f}^{0},…,{w}_{t}^{0}{w}_{f}^{S - 1},{w}_{t}^{1}{w}_{f}^{S - 1},…,{w}_{t}^{M - 1}{w}_{f}^{S - 1}\right]$ . A subsequence $\left[{w}_{t}^{0}{w}_{f}^{0},{w}_{t}^{1}{w}_{f}^{0},…,{w}_{t}^{M - 1}{w}_{f}^{0}\right]$ in w_{OCC} represents a subsequence obtained by multiplying a first element ${w}_{f}^{0}$ (namely, an element corresponding to an index 0) in the frequency domain OCC sequence by each element in the time domain OCC sequence. Similarly, a subsequence $\left[{w}_{t}^{0}{w}_{f}^{S - 1},{w}_{t}^{1}{w}_{f}^{S - 1},…,{w}_{t}^{M - 1}{w}_{f}^{S - 1}\right]$ in *w_{OCC}* represents a subsequence obtained by multiplying an S^{th} element ${w}_{f}^{S - 1}$ (namely, an element corresponding to an index S-1) in the frequency domain OCC sequence by each element in the time domain OCC sequence.

Alternatively, that the first OCC sequence is determined based on a frequency domain OCC sequence and a time domain OCC sequence may mean that the first OCC sequence includes two OCC sequences: a frequency domain OCC sequence and a time domain OCC sequence. The terminal apparatus may perform one-to-one mapping based on the frequency domain OCC sequence in the first OCC sequence and a frequency domain unit occupied by the first SRS resource, and perform one-to-one mapping based on the time domain OCC sequence in the first OCC sequence and a time domain unit occupied by the first SRS resource.

It should be understood that the foregoing implementation of determining the first OCC sequence based on the frequency domain OCC sequence and the time domain OCC sequence is merely an example. The first OCC sequence may alternatively be determined based on the frequency domain OCC sequence and the time domain OCC sequence in another manner. This is not specifically limited in this embodiment of this application.

It may be understood that by additionally configuring a frequency domain OCC sequence for the first SRS resource based on the time domain OCC, an upper limit of potential OCC sequences that can be configured by the network apparatus can be expanded, so that more SRS resources can be multiplexed on a same time-frequency resource, that is, an upper limit of SRS resource expansion is increased. This can meet SRS measurement requirements of more terminal apparatuses, or effectively reduce SRS overheads or a measurement period in a case of a same measurement requirement.

The following describes the first candidate sequence set in detail.

It may be understood that the T1 mutually orthogonal frequency domain OCC sequences and the T2 mutually orthogonal time domain OCC sequences may be combined to obtain a maximum of T1×T2 sequences, that is, any one of the T1 mutually orthogonal frequency domain OCC sequences may correspond to a maximum of T2 mutually orthogonal time domain OCC sequences. For example, if the frequency domain OCC sequence is a Walsh sequence having a sequence length of 2, and the time domain OCC sequence is a Walsh sequence having a sequence length of 4, the T1 mutually orthogonal frequency domain OCC sequences may be two sequences corresponding to Table 2, and the T2 mutually orthogonal time domain OCC sequences may be four time domain OCC sequences corresponding to Table 3. In this way, the two mutually orthogonal frequency domain OCC sequences and the four mutually orthogonal time domain OCC sequences may be combined to obtain eight sequences, as shown in Table 5.

**Table 5**

| Sequence index | Frequency domain OCC sequence | | Time domain OCC sequence | | | |
|---|---|---|---|---|---|---|
| | ${w}_{f}^{0}$ | ${w}_{f}^{1}$ | ${w}_{t}^{0}$ | ${w}_{t}^{1}$ | ${w}_{t}^{2}$ | ${w}_{t}^{3}$ |
| 0 | 1 | 1 | 1 | 1 | 1 | 1 |
| 1 | 1 | 1 | 1 | -1 | 1 | -1 |
| 2 | 1 | 1 | 1 | 1 | -1 | -1 |
| 3 | 1 | 1 | 1 | -1 | -1 | 1 |
| 4 | 1 | -1 | 1 | 1 | 1 | 1 |
| 5 | 1 | -1 | 1 | -1 | 1 | -1 |
| 6 | 1 | -1 | 1 | 1 | -1 | -1 |
| 7 | 1 | -1 | 1 | -1 | -1 | 1 |

As shown in Table 5, eight OCC sequences corresponding to the eight sequences in Table 5 can only ensure orthogonality on the whole. For example, for eight time-frequency units formed by using two frequency domain units and four time domain units, only when the eight corresponding OCC sequences in Table 5 are superimposed on the eight time-frequency units, a plurality of SRS resources can be multiplexed in the eight time-frequency units. That is, the network apparatus can perform multiplexing and channel estimation only by using the eight time-frequency units as a granularity (for example, perform joint despreading or joint estimation on signals in the eight time-frequency units), to avoid interference. In other words, flexibility of SRS resource multiplexing is poor, a plurality of SRS resources can be multiplexed only in two frequency domain units and four time domain units, and diversified resource quantity multiplexing requirements for SRS measurement cannot be met. In addition, diversified channel estimation requirements corresponding to different channel conditions cannot be met.

It should be understood that a plurality of sequences included in the first candidate sequence set in this embodiment of this application are different from the T1×T2 sequences, and a difference lies in that the first frequency domain OCC sequence in the T1 mutually orthogonal frequency domain OCC sequences corresponds to the A time domain OCC sequences in the T2 mutually orthogonal time domain OCC sequences; or the first time domain OCC sequence in the T2 mutually orthogonal time domain OCC sequences corresponds to the A frequency domain OCC sequences in the T1 mutually orthogonal frequency domain OCC sequences. The first frequency domain OCC sequence may be any one of the T1 mutually orthogonal frequency domain OCC sequences, and the first time domain OCC sequence may be any one of the T2 mutually orthogonal time domain OCC sequences. It may be understood that A is less than T2, or A is less than T1.

It may be understood that, that the first frequency domain OCC sequence in the T1 mutually orthogonal frequency domain OCC sequences corresponds to the A time domain OCC sequences in the T2 mutually orthogonal time domain OCC sequences may mean that the first frequency domain OCC sequence and the A time domain OCC sequences may construct A sequences, and each of the A sequences may include the first frequency domain OCC sequence and one of the A time domain OCC sequences.

In addition, a correspondence between a frequency domain OCC sequence other than the first frequency domain OCC sequence in the T1 mutually orthogonal frequency domain OCC sequences and a time domain OCC sequence other than the A time domain OCC sequences in the T2 mutually orthogonal time domain OCC sequences may be a one-to-one correspondence or a one-to-many correspondence, which specifically depends on actual values of T1, A, and T2. This is not specifically limited in this embodiment of this application.

The following describes an example of the first candidate sequence set by using an example in which the first frequency domain OCC sequence in the T1 mutually orthogonal frequency domain OCC sequences corresponds to the A time domain OCC sequences in the T2 mutually orthogonal time domain OCC sequences.

**Table 6**

| Sequence index | Frequency domain OCC sequence | | Time domain OCC sequence | | | |
|---|---|---|---|---|---|---|
| | ${w}_{f}^{0}$ | ${w}_{f}^{1}$ | ${w}_{t}^{0}$ | ${w}_{t}^{1}$ | ${w}_{t}^{2}$ | ${w}_{t}^{3}$ |
| 0 | 1 | 1 | 1 | 1 | 1 | 1 |
| 1 | 1 | 1 | 1 | -1 | 1 | -1 |
| 2 | 1 | 1 | 1 | 1 | -1 | -1 |
| 3 | 1 | -1 | 1 | -1 | -1 | 1 |

For example, if the first frequency domain OCC sequence is [1, 1] in Table 5, and A is equal to 3, the first candidate sequence set may be a sequence set shown in Table 6. The first frequency domain OCC sequence [1, 1] corresponds to three of four mutually orthogonal time domain OCC sequences, namely, [1, 1, 1, 1], [1, -1, 1, -1], and [1, 1, -1, -1]. The other frequency domain OCC sequence [1, -1] in Table 5 may be in a one-to-one correspondence with the remaining one time domain OCC sequence [1, -1, -1, 1]. It may be understood that each element in the frequency domain OCC sequence in Table 6 corresponds to four mutually orthogonal time domain OCC sequences (namely, time domain OCC sequences included in all of the four sequences in Table 6). That is, each element in the frequency domain OCC sequence and the four time domain OCC sequences may form four OCC subsequences each having a sequence length of 4. For example, an OCC subsequence having a sequence length of 4 and that corresponds to a first element ${w}_{f}^{0} = 1$ in a frequency domain OCC sequence corresponding to the sequence index 0 in Table 6 is $\left[{w}_{f}^{0}{w}_{t}^{0},{w}_{f}^{0}{w}_{t}^{1},{w}_{f}^{0}{w}_{t}^{2},{w}_{f}^{0}{w}_{t}^{3}\right] = \left[1, 1, 1, 1\right]$. Similarly, an OCC subsequence corresponding to a first element in a frequency domain OCC sequence corresponding to the sequence index 1 in Table 6 is [1, -1, 1, -1]; an OCC subsequence corresponding to a first element in a frequency domain OCC sequence corresponding to the sequence index 2 in Table 6 is [1, 1, - 1, -1]; and an OCC subsequence corresponding to a first element in a frequency domain OCC sequence corresponding to the sequence index 3 in Table 6 is [1, -1, -1, 1].

Further, the four subsequences are mutually orthogonal. Therefore, a frequency domain unit to which the first element in the frequency domain OCC sequence is mapped and four time domain units to which four elements in the time domain OCC sequence are mapped may form four time-frequency units. The four time-frequency units may be used for multiplexing of a plurality of SRS resources and channel estimation. That is, the corresponding four sequences in Table 6 may ensure that multiplexing of a plurality of SRS resources and channel estimation are implemented in four time-frequency units formed by using one frequency domain unit and four time domain units. Similarly, a second element in the frequency domain OCC sequence in Table 6 and the time domain OCC sequence may also form four mutually orthogonal OCC subsequences each having a sequence length of 4.

That is, the first candidate sequence set shown in Table 6 may support SRS resource multiplexing and channel estimation in eight time-frequency units formed by using two frequency domain units and four time domain units, and may further support SRS resource multiplexing and channel estimation in four time-frequency units formed by using one frequency domain unit and four time domain units in the eight time-frequency units.

**Table 7**

| Sequence index | Frequency domain OCC sequence | | Time domain OCC sequence | | | |
|---|---|---|---|---|---|---|
| | ${w}_{f}^{0}$ | ${w}_{f}^{1}$ | ${w}_{t}^{0}$ | ${w}_{t}^{1}$ | ${w}_{t}^{2}$ | ${w}_{t}^{3}$ |
| 0 | 1 | 1 | 1 | 1 | 1 | 1 |
| 1 | 1 | 1 | 1 | -1 | 1 | -1 |
| 2 | 1 | -1 | 1 | 1 | -1 | -1 |
| 3 | 1 | -1 | 1 | -1 | -1 | 1 |

For another example, if the first frequency domain OCC sequence is [1, 1] in Table 5, and A is equal to 2, the first candidate sequence set may be a sequence set shown in Table 7. The first frequency domain OCC sequence [1, 1] corresponds to two of four mutually orthogonal time domain OCC sequences, namely, [1, 1, 1, 1] and [1, -1, 1, -1]. The other frequency domain OCC sequence [1, -1] in Table 5 may correspond to the remaining two time domain OCC sequences [1, -1, -1, 1] and [1, 1, -1, -1] (that is, one-to-many). In other words, each of the T1 mutually orthogonal frequency domain OCC sequences corresponds to two of the T2 mutually orthogonal time domain OCC sequences, and two time domain OCC sequences corresponding to different frequency domain OCC sequences are different.

It may be understood that similar to the first candidate sequence set corresponding to Table 6, each element in the frequency domain OCC sequence in Table 7 corresponds to four mutually orthogonal OCC subsequences. That is, the four corresponding sequences in Table 7 may ensure that multiplexing of a plurality of SRS resources and channel estimation are implemented in four time-frequency units formed by using one frequency domain unit and four time domain units.

Further, each of the two mutually orthogonal frequency domain OCC sequences in Table 7 corresponds to two time domain OCC sequences, and two time domain OCC sequences corresponding to two different frequency domain OCC sequences are also mutually orthogonal. Therefore, first two elements (or last two elements) in a time domain OCC sequence included in an OCC sequence corresponding to each of the four sequences and the frequency domain OCC sequence may form a subsequence having a sequence length of 4, and subsequences corresponding to each of the four sequences are mutually orthogonal. In other words, the four corresponding sequences in Table 7 may ensure that multiplexing of a plurality of SRS resources and channel estimation are implemented in four time-frequency units formed by using two frequency domain units and two time domain units.

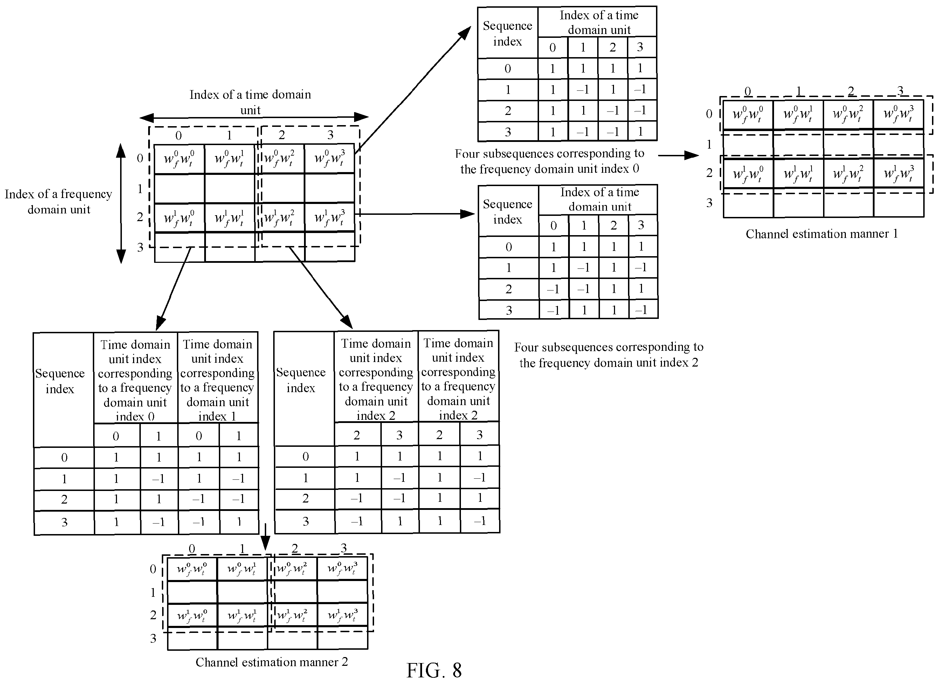

For details, refer to FIG. 8. In FIG. 8, example descriptions are provided by using an example in which a comb spacing is *K*_{TC} = 2 and a comb offset is CO=0. In Table 7, a first element (namely, an element corresponding to the index 0 in the frequency domain OCC) in the frequency domain OCC sequence is mapped to a frequency domain unit corresponding to a frequency domain unit index 0, and a second element (namely, an element corresponding to the index 1 in the frequency domain OCC) is mapped to a frequency domain unit corresponding to a frequency domain unit index 2. Elements in the time domain OCC sequence in Table 7 are respectively mapped to time domain units corresponding to time domain unit indexes 0 to 3. As shown in FIG. 8, each frequency domain unit corresponds to four mutually orthogonal subsequences, namely, four subsequences corresponding to the frequency domain unit index 0 and four subsequences corresponding to the frequency domain unit index 2 in FIG. 8. It may be understood that because the four subsequences corresponding to the frequency domain unit index 0 are mutually orthogonal, and the four subsequences corresponding to the frequency domain unit index 2 are mutually orthogonal, the network apparatus may perform OCC despreading and channel estimation in four time domain units corresponding to each frequency domain unit (that is, a channel estimation manner 1 in FIG. 8).

Further, based on the four subsequences corresponding to the frequency domain unit index 0 and the four subsequences corresponding to the frequency domain unit index 2, it may be determined that four other subsequences formed by using time domain unit indexes 0 and 1 corresponding to the frequency domain unit index 0 and time domain unit indexes 0 and 1 corresponding to the frequency domain unit index 2 are also mutually orthogonal. Similarly, in FIG. 8, four subsequences formed by using time domain unit indexes 2 and 3 corresponding to the frequency domain unit index 0 and time domain unit indexes 2 and 3 corresponding to the frequency domain unit index 2 are also mutually orthogonal. In other words, the network apparatus may perform OCC despreading and channel estimation in two time domain units corresponding to every two frequency domain units (that is, a channel estimation manner 2 in FIG. 8).

It may be understood that when time variation of a channel is severe, the channel estimation manner 2 may be used for channel estimation, or when frequency selective fading of a channel is severe, the channel estimation manner 1 may be used for channel estimation. This can adapt to different channel conditions.

That is, the first candidate sequence set shown in Table 7 may support SRS resource multiplexing and channel estimation in time-frequency units of three different granularities. The time-frequency units of three different granularities are eight time-frequency units formed by using two frequency domain units and four time domain units, four time-frequency units formed by using one frequency domain unit and four frequency domain units, and four time-frequency units formed by using two frequency domain units and two time domain units.

It should be understood that the first candidate sequence set shown in Table 6 or Table 7 is merely an example. The frequency domain OCC sequence may be after the time domain OCC sequence, and the first candidate sequence set may be constructed by using a frequency domain OCC sequence and a time domain OCC sequence with another sequence length and/or sequence quantity. For example, the sequence length of the frequency domain OCC sequence may be greater than or equal to the sequence length of the time domain OCC sequence. This is not specifically limited in this embodiment of this application.

**Table 8**

| Sequence index | Frequency domain OCC sequence | | | | Time domain OCC sequence | |
|---|---|---|---|---|---|---|
| | ${w}_{f}^{0}$ | ${w}_{f}^{1}$ | ${w}_{f}^{2}$ | ${w}_{f}^{3}$ | ${w}_{t}^{0}$ | ${w}_{t}^{1}$ |
| 0 | 1 | 1 | 1 | 1 | 1 | 1 |
| 1 | 1 | 1 | 1 | 1 | 1 | -1 |

For example, Table 8 is an example in which the sequence length of the frequency domain OCC sequence is greater than the sequence length of the time domain OCC sequence. In this example, A=2, that is, one frequency domain OCC sequence corresponds to two mutually orthogonal time domain OCC sequences. As shown in Table 8, each element in the frequency domain OCC sequence in Table 8 corresponds to two mutually orthogonal OCC subsequences. That is, the two corresponding sequences in Table 8 may ensure that multiplexing of a plurality of SRS resources and channel estimation are implemented in two time-frequency units formed by using one frequency domain unit and two time domain units.

Further, first two elements (or last two elements) in a frequency domain OCC sequence included in an OCC sequence corresponding to each of the four sequences in Table 8 and the time domain OCC sequence form a subsequence having a sequence length of 4, and subsequences corresponding to each of the four sequences are mutually orthogonal. For example, a subsequence having a sequence length of 4 and that corresponds to a first element ${w}_{f}^{0}$ and a second element ${w}_{f}^{1}$ in the frequency domain OCC sequence is $\left[{w}_{f}^{0}{w}_{t}^{0},{w}_{f}^{0}{w}_{t}^{1},{w}_{f}^{1}{w}_{t}^{0},{w}_{f}^{1}{w}_{t}^{1}\right]$. Therefore, a subsequence corresponding to the sequence index 0 is [1, 1, 1, 1], and a subsequence corresponding to the sequence index 1 is [1, -1, 1, -1]. The two subsequences are mutually orthogonal. In other words, the two corresponding sequences in Table 8 may ensure that multiplexing of a plurality of SRS resources and channel estimation are implemented in four time-frequency units formed by using two frequency domain units and two time domain units.

**Table 9**

| Sequence index | Frequency domain OCC sequence | | | | Time domain OCC sequence | | | |
|---|---|---|---|---|---|---|---|---|
| | ${w}_{f}^{0}$ | ${w}_{f}^{1}$ | ${w}_{f}^{2}$ | ${w}_{f}^{3}$ | ${w}_{t}^{0}$ | ${w}_{t}^{1}$ | ${w}_{t}^{2}$ | ${w}_{t}^{3}$ |
| 0 | 1 | 1 | 1 | 1 | 1 | 1 | 1 | 1 |
| 1 | 1 | 1 | 1 | 1 | 1 | -1 | 1 | -1 |
| 2 | 1 | -1 | 1 | -1 | 1 | 1 | -1 | -1 |
| 3 | 1 | -1 | 1 | -1 | 1 | -1 | -1 | 1 |

For example, Table 9 is an example in which the sequence length of the frequency domain OCC sequence is the same as the sequence length of the time domain OCC sequence. In this example, A=2, that is, one frequency domain OCC sequence corresponds to two mutually orthogonal time domain OCC sequences. As shown in Table 9, each element in the frequency domain OCC sequence in Table 9 corresponds to four mutually orthogonal OCC subsequences. That is, the four corresponding sequences in Table 9 may ensure that multiplexing of a plurality of SRS resources and channel estimation are implemented in four time-frequency units formed by using one frequency domain unit and four time domain units.

Further, for the four sequences in Table 9, time-frequency resources of a plurality of granularities may be supported to implement multiplexing of a plurality of SRS resources and channel estimation. For example, the time domain OCC sequence may be divided into two groups: a first group (first two elements ${w}_{t}^{0}$ and ${w}_{t}^{1}$ are a group) and a second group (last two elements ${w}_{t}^{2}$ and ${w}_{t}^{3}$ are a group), and the frequency domain OCC sequence may be divided into two element combination groups: a third group (first two elements ${w}_{f}^{0}$ and ${w}_{f}^{1}$ are a group) and a fourth group (last two elements ${w}_{f}^{2}$ and ${w}_{f}^{3}$ are a group). Therefore, the first group and the third group may construct a subsequence #1 $\left[{w}_{f}^{0}{w}_{t}^{0},{w}_{f}^{0}{w}_{t}^{1},{w}_{f}^{1}{w}_{t}^{0},{w}_{f}^{1}{w}_{t}^{1}\right]$, a subsequence #1 corresponding to the sequence index 0 is [1, 1, 1, 1], a subsequence #1 corresponding to the sequence index 1 is [1, -1, 1, -1], a subsequence #1 corresponding to the sequence index 2 is [1, 1, -1, -1], and a subsequence #1 corresponding to the sequence index 3 is [1, -1, -1, 1], that is, the subsequences #1 corresponding to the four sequence indexes are mutually orthogonal. That is, the four corresponding sequences in Table 9 may ensure that multiplexing of a plurality of SRS resources and channel estimation are implemented in four time-frequency units formed by using two frequency domain units and two time domain units.

It should be understood that a principle of the case in which the first time domain OCC sequence in the T2 mutually orthogonal time domain OCC sequences corresponds to the A frequency domain OCC sequences in the T1 mutually orthogonal frequency domain OCC sequences is similar to the foregoing described principle of the case in which the first frequency domain OCC sequence in the T1 mutually orthogonal frequency domain OCC sequences corresponds to the A time domain OCC sequences in the T2 mutually orthogonal time domain OCC sequences. For example, Table 7 is used as an example. In this case, a first candidate sequence set corresponding to the first time domain OCC sequence and the A frequency domain OCC sequences may be obtained by changing the frequency domain OCC sequence in Table 7 to a time domain OCC sequence and changing the time domain OCC sequence in Table 7 to a frequency domain OCC sequence, as shown in Table 10.

**Table 10**

| Sequence index | Time domain OCC sequence | | Frequency domain OCC sequence | | | |
|---|---|---|---|---|---|---|
| | ${w}_{t}^{0}$ | ${w}_{t}^{1}$ | ${w}_{f}^{0}$ | ${w}_{f}^{1}$ | ${w}_{f}^{2}$ | ${w}_{f}^{3}$ |
| 0 | 1 | 1 | 1 | 1 | 1 | 1 |
| 1 | 1 | 1 | 1 | -1 | 1 | -1 |
| 2 | 1 | -1 | 1 | 1 | -1 | -1 |
| 3 | 1 | -1 | 1 | -1 | -1 | 1 |

It may be understood that for the examples in Table 6, Table 8, and Table 9, the first candidate sequence set corresponding to the first time domain OCC sequence and the A frequency domain OCC sequences may also be obtained in the foregoing manner of converting Table 7 into Table 10. Details are not described.

That is, the first frequency domain OCC sequence in the T1 mutually orthogonal frequency domain OCC sequences corresponds to the A time domain OCC sequences in the T2 mutually orthogonal time domain OCC sequences, or the first time domain OCC sequence in the T2 mutually orthogonal time domain OCC sequences corresponds to the A frequency domain OCC sequences in the T1 mutually orthogonal frequency domain OCC sequences, to construct the first candidate sequence set. In this way, SRS resource multiplexing at different time-frequency granularities can be supported, thereby meeting diversified SRS resource quantity multiplexing requirements and diversified channel estimation requirements.

In a possible implementation, the first candidate sequence set includes T2 sequences, each of the T2 sequences includes a frequency domain OCC sequence having a sequence length of S1 and a time domain OCC sequence having a sequence length of M1, S1<M1, T1≤S1, and T2≤M1. Alternatively, the first candidate sequence set includes T1 sequences, each of the T1 sequences includes a frequency domain OCC sequence having a sequence length of S1 and a time domain OCC sequence having a sequence length of M1, S1>M1, T2≤M1, and T1≤S1. S1 and M1 are positive integers. It may be understood that when the first frequency domain OCC sequence in the T1 mutually orthogonal frequency domain OCC sequences corresponds to the A time domain OCC sequences in the T2 mutually orthogonal time domain OCC sequences, S1<M1, T1≤S1, and T2≤M1 are set, so that utilization of a quantity of orthogonal sequences between OCC sequences can be maximized, to increase a capacity of the SRS, that is, increase a quantity of SRS resources that can be multiplexed on a same time-frequency resource. For example, for Table 7 and Table 8, a quantity of sequences that can be provided in Table 7 is greater than a quantity of sequences that can be provided in Table 8. Similarly, compared with that in Table 9, in Table 7, two frequency domain OCC sequences each having a sequence length of 2 may be fully used to construct the first candidate sequence set, while in Table 9, only two frequency domain OCC sequences in four frequency domain OCC sequences each having a sequence length of 4 can be used to construct the first candidate sequence set.

It may be further understood that when the first time domain OCC sequence in the T2 mutually orthogonal time domain OCC sequences corresponds to the A frequency domain OCC sequences in the T1 mutually orthogonal frequency domain OCC sequences, S1>M1, T2≤M1, and T1≤S1 are set, so that utilization of a quantity of orthogonal sequences between OCC sequences can be maximized, to increase a capacity of the SRS.

In a possible implementation, the first candidate sequence set includes T2 sequences, and each of the T2 sequences includes a frequency domain OCC sequence having a sequence length of S1 and a time domain OCC sequence having a sequence length of M1. The frequency domain OCC sequence having a sequence length of S1 is ${w}_{f} = \left[{w}_{f}^{0},{w}_{f}^{1},…,{w}_{f}^{S 1 - 1}\right]$*,* and the time domain OCC sequence having a sequence length of M1 is ${w}_{t} = \left[{w}_{t}^{0},{w}_{t}^{1},…,{w}_{t}^{M 1 - 1}\right]$*.* An OCC sequence corresponding to each of the T2 sequences is an OCC sequence ${w}_{OCC} = \left[{w}_{f}^{0}{w}_{t}^{0},{w}_{f}^{0}{w}_{t}^{1},…,{w}_{f}^{0}{w}_{t}^{M 1 - 1},…,{w}_{f}^{S 1 - 1}{w}_{t}^{0},{w}_{f}^{S 1 - 1}{w}_{t}^{1},…,{w}_{f}^{S 1 - 1}{w}_{t}^{M 1 - 1}\right]$ having a sequence length of S1×M1. The OCC sequence corresponding to each sequence includes S1 first subsequences, and a first subsequence whose index is j+qZ in the S1 first subsequences is ${s}_{j + qZ} =$ $\left[{w}_{f}^{Zq}{w}_{t}^{\frac{M 1}{Z} j},{w}_{f}^{Zq}{w}_{t}^{\frac{M 1}{Z} j + 1},…,{w}_{f}^{Zq}{w}_{t}^{\frac{M 1}{Z} \left(j+1\right) - 1},…,{w}_{f}^{Z \left(q+1\right) - 1}{w}_{t}^{\frac{M 1}{Z} j},{w}_{f}^{Z \left(q+1\right) - 1}{w}_{t}^{\frac{M 1}{Z} j + 1},…,{w}_{f}^{Z \left(q+1\right) - 1}{w}_{t}^{\frac{M 1}{Z} \left(j+1\right) - 1}\right]$. Z is a non-negative integer power of 2 and is less than M1, 0≤j<Z, $0 \leq q < \frac{S 1}{Z}$, and j and q are integers. First subsequences with an index of j+qZ included in OCC sequences corresponding to the respective sequences are mutually orthogonal. That is, based on a combination of different elements in the time domain OCC sequence and different elements in the frequency domain OCC sequence, the OCC sequence corresponding to each sequence may be divided into a maximum of log₂ M1 element combination manners. Each combination manner corresponds to S1 first subsequences, and first subsequences with an index of j+qZ corresponding to the T2 sequences are mutually orthogonal. In this way, the first candidate sequence set can support SRS resource multiplexing and channel estimation at a maximum of log₂ *M*1 time-frequency granularities, thereby further meeting diversified SRS resource quantity multiplexing requirements and diversified channel estimation requirements.

It should be understood that log₂ *M*1 may be a rounded-down value of log₂ *M*1 (that is, floor(log₂ *M*1)). For example, when *M*1=3, log₂ *M*1 may be a rounded-down value of 1. For another example, when M1=9, log₂ *M*1 may be a rounded-down value of 3.

It may be understood that the element arrangement manner in the first subsequence is merely an example. Another arrangement manner may alternatively be used. This is not specifically limited in this embodiment of this application.

In addition, M1 may be a non-negative integer power of 2. For example, M1 may be equal to 2, 4, 8, or the like. Z is less than M1, and a value of Z may be a non-negative integer power of 2 such as 1, 2, or 4. Herein, j=0, 1, ..., Z-1, and $q = 0 , … , \frac{S 1}{Z} - 1$.

For example, the first candidate sequence set shown in Table 7 is used as an example. In this case, the first candidate sequence includes T2=4 sequences, M1 is equal to 4, an OCC sequence corresponding to each of the four sequences may be divided into log₂ *M*1 =2 time-frequency resource granularities, and the value of Z may be 1 or 2. Z=1 may correspond to the four time-frequency resources that are described in Table 7 and that are formed by using one frequency domain unit and four time domain units. That is, the OCC sequence corresponding to each of the four sequences may include S1=2 first subsequences, a value of j may be 0, and a value of q may be 0 or 1. When the value of q is 0, a first subsequence whose index is j+qZ=0 in the two first subsequences corresponds to a subsequence $\left[{w}_{f}^{Zq = 0}{w}_{t}^{\frac{M 1}{Z} j = 0},{w}_{f}^{0}{w}_{t}^{1},{w}_{f}^{0}{w}_{t}^{2},{w}_{f}^{Z \left(q+1\right) - 1 = 0}{w}_{t}^{\frac{M 1}{Z} \left(j+1\right) - 1 = 3}\right]$ corresponding to a frequency domain unit whose frequency domain index is 0 in FIG. 8. When the value of q is 1, a first subsequence whose index is j+qZ=1 corresponds to a subsequence $\left[{w}_{f}^{Zq = 1}{w}_{t}^{\frac{M 1}{Z} j = 0},{w}_{f}^{1}{w}_{t}^{1},{w}_{f}^{1}{w}_{t}^{2},{w}_{f}^{Z \left(q+1\right) - 1 = 1}{w}_{t}^{\frac{M 1}{Z} \left(j+1\right) - 1 = 3}\right]$ corresponding to a frequency domain unit whose frequency domain index is 2 in FIG. 8.

Z=2 may correspond to the four time-frequency resources that are described in Table 7 and that are formed by using two frequency domain units and two time domain units. That is, the OCC sequence corresponding to each of the four sequences may include S1=2 first subsequences, a value of j may be 0 or 1, and a value of q may be 0. When the value of j is 0, a first subsequence whose index is j+qZ=0 in the two first subsequences corresponds to a subsequence $\left[{w}_{f}^{Zq = 0}{w}_{t}^{\frac{M 1}{Z} j = 0},{w}_{f}^{0}{w}_{t}^{\frac{M 1}{Z} \left(j+1\right) - 1 = 1},{w}_{f}^{Z \left(q+1\right) - 1 = 1}{w}_{t}^{\frac{M 1}{Z} j = 0},{w}_{f}^{Z \left(q+1\right) - 1 = 1}{w}_{t}^{\frac{M 1}{Z} \left(j+1\right) - 1 = 1}\right]$ corresponding to a frequency domain unit whose frequency domain index is 0, a frequency domain unit whose frequency domain index is 2, and two time domain units whose time domain indexes are 0 and 1 in FIG. 8. When the value of j is 1, a first subsequence whose index is j+qZ=1 corresponds to a subsequence $\left[{w}_{f}^{Zq = 0}{w}_{t}^{\frac{M 1}{Z} j = 2},{w}_{f}^{0}{w}_{t}^{\frac{M 1}{Z} \left(j+1\right) - 1 = 3},{w}_{f}^{Z \left(q+1\right) - 1 = 1}{w}_{t}^{\frac{M 1}{Z} j = 2},{w}_{f}^{Z \left(q+1\right) - 1 = 1}{w}_{t}^{\frac{M 1}{Z} \left(j+1\right) - 1 = 3}\right]$ corresponding to a frequency domain unit whose frequency domain index is 0, a frequency domain unit whose frequency domain index is 2, and two time domain units whose time domain indexes are 2 and 3 in FIG. 8.

For example, the first candidate sequence set is further described by using an example in which M1=8 and S1=4.

**Table 11**

| Sequence index | Frequency domain OCC sequence | | | | Time domain OCC sequence | | | | | | | |
|---|---|---|---|---|---|---|---|---|---|---|---|---|
| | ${w}_{f}^{0}$ | ${w}_{f}^{1}$ | ${w}_{f}^{2}$ | ${w}_{f}^{3}$ | ${w}_{t}^{0}$ | ${w}_{t}^{1}$ | ${w}_{t}^{2}$ | ${w}_{t}^{3}$ | ${w}_{t}^{4}$ | ${w}_{t}^{5}$ | ${w}_{t}^{6}$ | ${w}_{t}^{7}$ |
| 0 | 1 | 1 | 1 | 1 | 1 | 1 | 1 | 1 | 1 | 1 | 1 | 1 |
| 1 | 1 | 1 | 1 | 1 | 1 | -1 | 1 | -1 | 1 | -1 | 1 | -1 |
| 2 | 1 | 1 | -1 | -1 | 1 | 1 | -1 | -1 | 1 | 1 | -1 | -1 |
| 3 | 1 | 1 | -1 | -1 | 1 | -1 | -1 | 1 | 1 | -1 | -1 | 1 |
| 4 | 1 | -1 | 1 | -1 | 1 | 1 | 1 | 1 | -1 | -1 | -1 | -1 |
| 5 | 1 | -1 | 1 | -1 | 1 | -1 | 1 | -1 | -1 | 1 | -1 | 1 |
| 6 | 1 | -1 | -1 | 1 | 1 | 1 | -1 | -1 | -1 | -1 | 1 | 1 |
| 7 | 1 | -1 | -1 | 1 | 1 | -1 | -1 | 1 | -1 | 1 | 1 | -1 |

As shown in Table 11, in T1=4 frequency domain OCC sequences each having a sequence length of 4, each frequency domain OCC sequence corresponds to two of T2=8 time domain OCC sequences each having a sequence length of 8. In other words, each of the T1 mutually orthogonal frequency domain OCC sequences corresponds to two of the T2 mutually orthogonal time domain OCC sequences, and two time domain OCC sequences corresponding to different frequency domain OCC sequences are different.

It may be understood that similar to the first candidate sequence set corresponding to Table 7, each element in the frequency domain OCC sequence in Table 11 corresponds to eight mutually orthogonal OCC subsequences. That is, the eight corresponding sequences in Table 11 may ensure that multiplexing of a plurality of SRS resources and channel estimation are implemented in four time-frequency units formed by using one frequency domain unit and four time domain units.

Further, first four elements (or last four elements) in a time domain OCC sequence included in an OCC sequence corresponding to each of the eight sequences corresponding to Table 11 and first two elements (or last two elements) in the frequency domain OCC sequence may form a subsequence having a sequence length of 8, and subsequences corresponding to each of the eight sequences are mutually orthogonal. In other words, the eight corresponding sequences in Table 11 may ensure that multiplexing of a plurality of SRS resources and channel estimation are implemented in eight time-frequency units formed by using two frequency domain units and four time domain units.

In addition, eight elements in the time domain OCC sequence included in the OCC sequence corresponding to each of the eight sequences corresponding to Table 11 may be grouped into four groups, and each group includes two elements. The two elements and the frequency domain OCC sequence may form a subsequence having a sequence length of 8, and subsequences corresponding to each of the eight sequences are mutually orthogonal. In other words, the eight corresponding sequences in Table 11 may ensure that multiplexing of a plurality of SRS resources and channel estimation are implemented in eight time-frequency units formed by using four frequency domain units and two time domain units.

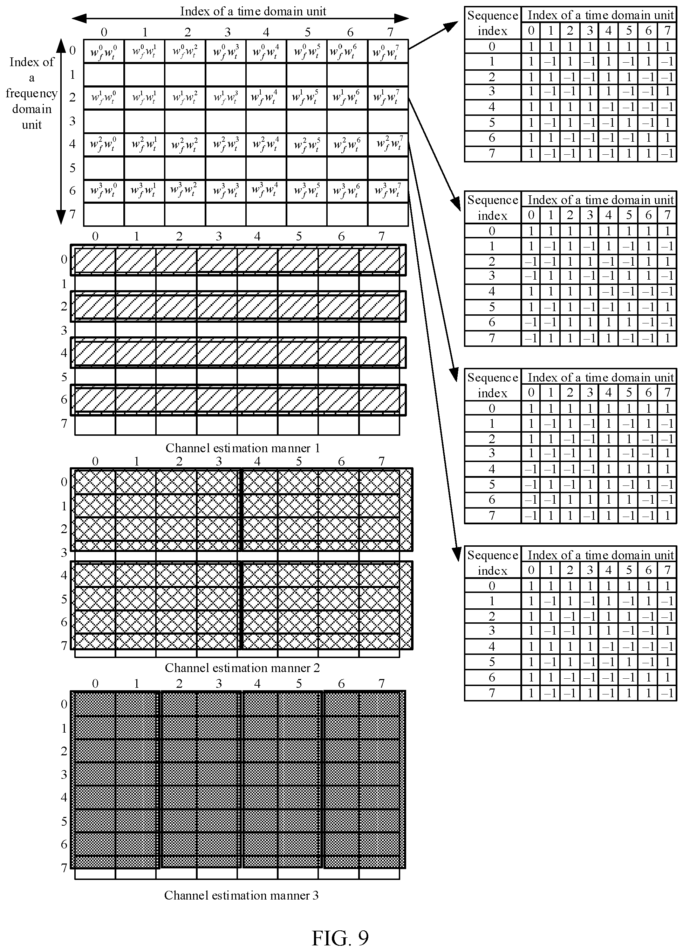

For details, refer to FIG. 9. In FIG. 9, example descriptions are provided by using an example in which a comb spacing is *K*_{TC} = 2 and a comb offset is CO=0. In Table 11, a first element (namely, an element corresponding to the index 0 in the frequency domain OCC) in the frequency domain OCC sequence is mapped to a frequency domain unit corresponding to a frequency domain unit index 0, a second element (namely, an element corresponding to the index 1 in the frequency domain OCC) is mapped to a frequency domain unit corresponding to a frequency domain unit index 2, a third element (namely, an element corresponding to the index 2 in the frequency domain OCC) is mapped to a frequency domain unit corresponding to a frequency domain unit index 4, and a fourth element (namely, an element corresponding to the index 3 in the frequency domain OCC) is mapped to a frequency domain unit corresponding to a frequency domain unit index 6. Elements in the time domain OCC sequence in Table 11 are respectively mapped to time domain units corresponding to time domain unit indexes 0 to 7.

It may be understood that M1 is equal to 8, the first candidate sequence set includes T2=8 sequences, an OCC sequence corresponding to each of the eight sequences may be divided into log₂ *M*1=3 time-frequency resource granularities, and the value of Z may be 1, 2, or 4.

When Z=1, the OCC sequence corresponding to each of the eight sequences may include S1=4 first subsequences, a value of j may be 0, and a value of q may be [0, 1, 2, 3]. When the value of q is 0, a first subsequence whose index is j+qZ=0 in the four first subsequences corresponds to a subsequence $\left[{w}_{f}^{Zq = 0}{w}_{t}^{\frac{M 1}{Z} j = 0},{w}_{f}^{0}{w}_{t}^{\frac{M 1}{Z} j + 1 = 1},{w}_{f}^{0}{w}_{t}^{2},{w}_{f}^{0}{w}_{t}^{3},{w}_{f}^{0}{w}_{t}^{4},{w}_{f}^{0}{w}_{t}^{5},{w}_{f}^{0}{w}_{t}^{6},{w}_{f}^{Z \left(q+1\right) - 1 = 0}{w}_{t}^{\frac{M 1}{Z} \left(j+1\right) - 1 = 7}\right]$ corresponding to a frequency domain unit whose frequency domain index is 0 in FIG. 9. When the value of q is 1, a first subsequence whose index is j+qZ=1 corresponds to a subsequence $\left[{w}_{f}^{Zq = 1}{w}_{t}^{\frac{M 1}{Z} j = 0}, {w}_{f}^{1}{w}_{t}^{\frac{M 1}{Z} j + 1 = 1}, {w}_{f}^{1}{w}_{t}^{2}, {w}_{f}^{1}{w}_{t}^{3}, {w}_{f}^{1}{w}_{t}^{4}, {w}_{f}^{1}{w}_{t}^{5}, {w}_{f}^{1}{w}_{t}^{6}, {w}_{f}^{Z \left(q+1\right) - 1 = 1}{w}_{t}^{\frac{M 1}{Z} \left(j+1\right) - 1 = 7}\right]$ corresponding to a frequency domain unit whose frequency domain index is 2 in FIG. 9. When the value of q is 2, a first subsequence whose index is j+qZ=2 corresponds to a subsequence $\left[{w}_{f}^{Zq = 2}{w}_{t}^{\frac{M 1}{Z} j = 0}, {w}_{f}^{2}{w}_{t}^{\frac{M 1}{Z} j + 1 = 11}, {w}_{f}^{2}{w}_{t}^{2}, {w}_{f}^{2}{w}_{t}^{3}, {w}_{f}^{2}{w}_{t}^{4}, {w}_{f}^{2}{w}_{t}^{5}, {w}_{f}^{2}{w}_{t}^{6}, {w}_{f}^{Z \left(q+1\right) - 1 = 2}{w}_{t}^{\frac{M 1}{Z} \left(j+1\right) - 1 = 7}\right]$ corresponding to a frequency domain unit whose frequency domain index is 4 in FIG. 9. When the value of q is 3, a first subsequence whose index is j+qZ=3 corresponds to a subsequence $\left[{w}_{f}^{Zq = 3}{w}_{t}^{\frac{M 1}{Z} j = 0}, {w}_{f}^{3}{w}_{t}^{\frac{M 1}{Z} j + 1 = 1}, {w}_{f}^{3}{w}_{t}^{2}, {w}_{f}^{3}{w}_{t}^{3}, {w}_{f}^{3}{w}_{t}^{4}, {w}_{f}^{3}{w}_{t}^{5}, {w}_{f}^{3}{w}_{t}^{6}, {w}_{f}^{Z \left(q+1\right) - 1 = 3}{w}_{t}^{\frac{M 1}{Z} \left(j+1\right) - 1 = 7}\right]$ corresponding to a frequency domain unit whose frequency domain index is 6 in FIG. 9.

For details of the four subsequences, refer to eight mutually orthogonal subsequences corresponding to each frequency domain unit shown in FIG. 9. It may be understood that the network apparatus may perform OCC despreading and channel estimation in eight time domain units corresponding to each frequency domain unit (that is, a channel estimation manner 1 in FIG. 9).

When Z=2, the OCC sequence corresponding to each of the eight sequences may include S1=4 first subsequences, a value of j may be 0 or 1, and a value of q may be 0 or 1. When j=0 and q=0, a first subsequence whose index is j+qZ=0 in the four first subsequences corresponds to a subsequence [ ${w}_{f}^{Zq = 0} {w}_{t}^{\frac{M 1}{Z} j = 0} , {w}_{f}^{0} {w}_{t}^{1} , {w}_{f}^{0} {w}_{t}^{2} , {w}_{f}^{0} {w}_{t}^{\frac{M 1}{Z} \left(j+1\right) - 1 = 3} , {w}_{f}^{Z \left(q+1\right) - 1 = 1} {w}_{t}^{\frac{M 1}{Z} j = 0} , {w}_{f}^{1} {w}_{t}^{1} , {w}_{f}^{1} {w}_{t}^{2} , {w}_{f}^{Z \left(q+1\right) - 1 = 1} {w}_{t}^{\frac{M 1}{Z} \left(j+1\right) - 1 = 3}$ ] corresponding to a frequency domain unit whose frequency domain index is 0, a frequency domain unit whose frequency domain index is 2, and four time domain units whose time domain indexes are 0 to 3 in FIG. 9.

When j=1 and q=0, a first subsequence whose index is j+qZ=1 corresponds to a subsequence [ ${w}_{f}^{Zq = 0} {w}_{t}^{\frac{M 1}{Z} j = 4} , {w}_{f}^{0} {w}_{t}^{5} , {w}_{f}^{0} {w}_{t}^{6} , {w}_{f}^{0} {w}_{t}^{\frac{M 1}{Z} \left(j+1\right) - 1 = 7} , {w}_{f}^{Z \left(q+1\right) - 1 = 1} {w}_{t}^{\frac{M 1}{Z} j = 4} , {w}_{f}^{1} {w}_{t}^{5} , {w}_{f}^{1} {w}_{t}^{6} , {w}_{f}^{Z \left(q+1\right) - 1 = 1} {w}_{t}^{\frac{M 1}{Z} \left(j+1\right) - 1 = 7}$ ] corresponding to a frequency domain unit whose frequency domain index is 0, a frequency domain unit whose frequency domain index is 2, and four time domain units whose time domain indexes are 4 to 7 in FIG. 9.

When j=0 and q=1, a first subsequence whose index is j+qZ=2 corresponds to a subsequence [ ${w}_{f}^{Zq = 2} {w}_{t}^{\frac{M 1}{Z} j = 0} , {w}_{f}^{2} {w}_{t}^{1} , {w}_{f}^{2} {w}_{t}^{2} , {w}_{f}^{2} {w}_{t}^{\frac{M 1}{Z} \left(j+1\right) - 1 = 3} , {w}_{f}^{Z \left(q+1\right) - 1 = 3} {w}_{t}^{\frac{M 1}{Z} j = 0} , {w}_{f}^{3} {w}_{t}^{1} , {w}_{f}^{3} {w}_{t}^{2} , {w}_{f}^{Z \left(q+1\right) - 1 = 3} {w}_{t}^{\frac{M 1}{Z} \left(j+1\right) - 1 = 3}$ ] corresponding to a frequency domain unit whose frequency domain index is 4, a frequency domain unit whose frequency domain index is 6, and four time domain units whose time domain indexes are 0 to 3 in FIG. 9.

When j=1 and q=1, a first subsequence whose index is j+qZ=3 corresponds to a subsequence [ ${w}_{f}^{Zq = 2} {w}_{t}^{\frac{M 1}{Z} j = 4} , {w}_{f}^{2} {w}_{t}^{5} , {w}_{f}^{2} {w}_{t}^{6} , {w}_{f}^{2} {w}_{t}^{\frac{M 1}{Z} \left(j+1\right) - 1 = 7} , {w}_{f}^{Z \left(q+1\right) - 1 = 3} {w}_{t}^{\frac{M 1}{Z} j = 4} , {w}_{f}^{3} {w}_{t}^{5} , {w}_{f}^{3} {w}_{t}^{6} , {w}_{f}^{Z \left(q+1\right) - 1 = 3} {w}_{t}^{\frac{M 1}{Z} \left(j+1\right) - 1 = 7}$ ] corresponding to a frequency domain unit whose frequency domain index is 4, a frequency domain unit whose frequency domain index is 6, and four time domain units whose time domain indexes are 4 to 7 in FIG. 9.

The four subsequences may be specifically determined based on eight mutually orthogonal subsequences corresponding to each frequency domain unit shown in FIG. 9. The four subsequences are mutually orthogonal. Therefore, the network apparatus may perform OCC despreading and channel estimation in eight time-frequency units formed by using two frequency domain units and four time domain units (that is, a channel estimation manner 2 in FIG. 9).

When Z=4, the OCC sequence corresponding to each of the eight sequences may include S1=4 first subsequences, a value of j may be [0, 1, 2, 3], and a value of q may be 0. When j=0, a first subsequence whose index is j+qZ=0 in the four first subsequences corresponds to a subsequence [ ${w}_{f}^{Zq = 0} {w}_{t}^{\frac{M 1}{Z} j = 0} , {w}_{f}^{0} {w}_{t}^{\frac{M 1}{Z} \left(j+1\right) - 1 = 1} , {w}_{f}^{Zq + 1 = 1} {w}_{t}^{0} , {w}_{f}^{1} {w}_{t}^{1} , {w}_{f}^{2} {w}_{t}^{0} , {w}_{f}^{2} {w}_{t}^{1} , {w}_{f}^{Z \left(q+1\right) - 1 = 3} {w}_{t}^{0} , {w}_{f}^{Z \left(q+1\right) - 1 = 3} {w}_{t}^{\frac{M 1}{Z} \left(j+1\right) - 1 = 1}$ ] corresponding to four frequency domain units whose frequency domain indexes are 0, 2, 4, and 6 and two time domain units whose time domain indexes are 0 and 1 in FIG. 9.

When j=1, a first subsequence whose index is j+qZ=1 corresponds to a subsequence [ ${w}_{f}^{Zq = 0} {w}_{t}^{\frac{M 1}{Z} j = 2} , {w}_{f}^{0} {w}_{t}^{\frac{M 1}{Z} \left(j+1\right) - 1 = 3} , {w}_{f}^{1} {w}_{t}^{2} , {w}_{f}^{1} {w}_{t}^{3} , {w}_{f}^{2} {w}_{t}^{2} , {w}_{f}^{2} {w}_{t}^{3} , {w}_{f}^{Z \left(q+1\right) - 1 = 3} {w}_{t}^{2} , {w}_{f}^{Z \left(q+1\right) - 1 = 3} {w}_{t}^{\frac{M 1}{Z} \left(j+1\right) - 1 = 3}$ ] corresponding to four frequency domain units whose frequency domain indexes are 0, 2, 4, and 6 and two time domain units whose time domain indexes are 2 and 3 in FIG. 9.

When j=2, a first subsequence whose index is j+qZ=2 corresponds to a subsequence [ ${w}_{f}^{Zq = 0} {w}_{t}^{\frac{M 1}{Z} j = 4} , {w}_{f}^{0} {w}_{t}^{\frac{M 1}{Z} \left(j+1\right) - 1 = 5} , {w}_{f}^{1} {w}_{t}^{4} , {w}_{f}^{1} {w}_{t}^{5} , {w}_{f}^{2} {w}_{t}^{4} , {w}_{f}^{2} {w}_{t}^{5} , {w}_{f}^{Z \left(q+1\right) - 1 = 3} {w}_{t}^{4} , {w}_{f}^{Z \left(q+1\right) - 1 = 3} {w}_{t}^{\frac{M 1}{Z} \left(j+1\right) - 1 = 5}$ ] corresponding to four frequency domain units whose frequency domain indexes are 0, 2, 4, and 6 and two time domain units whose time domain indexes are 4 and 5 in FIG. 9.

When j=3, a first subsequence whose index is j+qZ=3 corresponds to a subsequence [ ${w}_{f}^{Zq = 0} {w}_{t}^{\frac{M 1}{Z} j = 6} , {w}_{f}^{0} {w}_{t}^{\frac{M 1}{Z} \left(j+1\right) - 1 = 7} , {w}_{f}^{1} {w}_{t}^{6} , {w}_{f}^{1} {w}_{t}^{7} , {w}_{f}^{2} {w}_{t}^{6} , {w}_{f}^{2} {w}_{t}^{7} , {w}_{f}^{Z \left(q+1\right) - 1 = 3} {w}_{t}^{6} , {w}_{f}^{Z \left(q+1\right) - 1 = 3} {w}_{t}^{\frac{M 1}{Z} \left(j+1\right) - 1 = 7}$ ] corresponding to four frequency domain units whose frequency domain indexes are 0, 2, 4, and 6 and two time domain units whose time domain indexes are 6 and 7 in FIG. 9.

The four subsequences may be specifically determined based on eight mutually orthogonal subsequences corresponding to each frequency domain unit shown in FIG. 9. The four subsequences are mutually orthogonal. Therefore, the network apparatus may perform OCC despreading and channel estimation in eight time-frequency units formed by using four frequency domain units and two time domain units (that is, a channel estimation manner 3 in FIG. 9).

In a possible implementation, the at least one candidate sequence set further includes a second candidate sequence set. The second candidate sequence set is determined based on T3 mutually orthogonal frequency domain OCC sequences and T4 mutually orthogonal time domain OCC sequences. A second frequency domain OCC sequence in the T3 mutually orthogonal frequency domain OCC sequences corresponds to A time domain OCC sequences in the T4 mutually orthogonal time domain OCC sequences, or a second time domain OCC sequence in the T4 mutually orthogonal time domain OCC sequences corresponds to A frequency domain OCC sequences in the T3 mutually orthogonal frequency domain OCC sequences. A sequence length of the T4 mutually orthogonal time domain OCC sequences is different from that of the T2 mutually orthogonal time domain OCC sequences.

It may be understood that as shown in FIG. 6 A, FIG. 6B, and FIG. 6C, for different cases, based on at least two candidate sequence sets with different time domain OCC sequence lengths, the network apparatus may flexibly superimpose time domain OCC sequences with different sequence lengths on the R time domain resources for repeatedly sending the SRS, so that different SRS resources can be efficiently multiplexed on a same time-frequency resource.

That is, because sequence lengths of time domain OCC sequences included in different candidate sequence sets are different, time domain OCC sequences with different sequence lengths may be flexibly superimposed on a time domain resource for repeatedly sending the SRS, so that different SRS resources can be efficiently multiplexed on a same time-frequency resource, thereby improving the multiplexing efficiency of SRS resources.

It may be understood that the second candidate sequence set is similar to the first candidate sequence set, and a difference lies in that sequence lengths of time domain OCC sequences in the two sets are different. For example, when the first frequency domain OCC sequence in the T1 mutually orthogonal frequency domain OCC sequences corresponds to the A time domain OCC sequences in the T2 mutually orthogonal time domain OCC sequences, the first candidate sequence set may be the candidate sequence set shown in Table 7. When the second frequency domain OCC sequence in the T3 mutually orthogonal frequency domain OCC sequences corresponds to the A time domain OCC sequences in the T4 mutually orthogonal time domain OCC sequences, the second candidate sequence set may be the candidate sequence set shown in Table 11.

For another example, when the first time domain OCC sequence in the T2 mutually orthogonal time domain OCC sequences corresponds to the A frequency domain OCC sequences in the T1 mutually orthogonal frequency domain OCC sequences, the first candidate sequence set may be the candidate sequence set shown in Table 10. For details of the case in which the second time domain OCC sequence in the T4 mutually orthogonal time domain OCC sequences corresponds to the A frequency domain OCC sequences in the T3 mutually orthogonal frequency domain OCC sequences, refer to Table 12. An implementation principle thereof is similar to that of the first candidate sequence set corresponding to Table 11. Details are not described.

**Table 12**

| Sequence index | Time domain OCC sequence | | | | Frequency domain OCC sequence | | | | | | | |
|---|---|---|---|---|---|---|---|---|---|---|---|---|
| | ${w}_{t}^{0}$ | ${w}_{t}^{1}$ | ${w}_{t}^{2}$ | ${w}_{t}^{3}$ | ${w}_{f}^{0}$ | ${w}_{f}^{1}$ | ${w}_{f}^{2}$ | | ${w}_{f}^{4}$ | ${w}_{f}^{5}$ | ${w}_{f}^{6}$ ${w}_{f}^{6}$ | ${w}_{f}^{7}$ |
| 0 | 1 | 1 | 1 | 1 | 1 | 1 | 1 | 1 | 1 | 1 | 1 | 1 |
| 1 | 1 | 1 | 1 | 1 | 1 | -1 | 1 | -1 | 1 | -1 | 1 | -1 |
| 2 | 1 | 1 | -1 | -1 | 1 | 1 | -1 | -1 | 1 | 1 | -1 | -1 |
| 3 | 1 | 1 | -1 | -1 | 1 | -1 | -1 | 1 | 1 | -1 | -1 | 1 |
| 4 | 1 | -1 | 1 | -1 | 1 | 1 | 1 | 1 | -1 | -1 | -1 | -1 |
| 5 | 1 | -1 | 1 | -1 | 1 | -1 | 1 | -1 | -1 | 1 | -1 | 1 |
| 6 | 1 | -1 | -1 | 1 | 1 | 1 | -1 | -1 | -1 | -1 | 1 | 1 |
| 7 | 1 | -1 | -1 | 1 | 1 | -1 | -1 | 1 | -1 | 1 | 1 | -1 |

In a possible implementation, the second candidate sequence set includes T4 sequences, each of the T4 sequences includes a frequency domain OCC sequence having a sequence length of S2 and a time domain OCC sequence having a sequence length of M2, S2<M2, T3≤S2, T4≤M2, and M1 is different from M2. Alternatively, the second candidate sequence set includes T3 sequences, each of the T3 sequences includes a frequency domain OCC sequence having a sequence length of S2 and a time domain OCC sequence having a sequence length of M2, S2>M2, T3≤S2, and T4≤M2. S2 and M2 are positive integers.

It may be understood that similar to the setting of S1<M1, T1≤S1, and T2≤M1 for the first candidate sequence set, when the second frequency domain OCC sequence in the T3 mutually orthogonal frequency domain OCC sequences corresponds to the A time domain OCC sequences in the T4 mutually orthogonal time domain OCC sequences, S2<M2, T3≤S2, and T4≤M2 are set, so that utilization of a quantity of orthogonal sequences between OCC sequences can be maximized, to increase a capacity of the SRS, that is, increase a quantity of SRS resources that can be multiplexed on a same time-frequency resource. Similarly, when the second time domain OCC sequence in the T4 mutually orthogonal time domain OCC sequences corresponds to the A frequency domain OCC sequences in the T3 mutually orthogonal frequency domain OCC sequences, S2>M2, T3≤S2, and T4≤M2 are set, so that utilization of a quantity of orthogonal sequences between OCC sequences can also be maximized, to increase a capacity of the SRS, that is, increase a quantity of SRS resources that can be multiplexed on a same time-frequency resource.

It should be understood that the at least one candidate sequence set in step S701 may be understood as a candidate set, and the first candidate sequence set may be understood as a subset in the candidate set. The candidate set may further include another subset, namely, the second candidate sequence set.

In a possible implementation, the frequency domain OCC sequence corresponds to each of N1/S frequency domain resource groups, and S adjacent frequency domain units included in each frequency domain resource group correspond to S elements included in the frequency domain OCC sequence. The N1/S frequency domain resource groups are frequency domain resource groups for repeated transmission of the SRS, N1 is a quantity of frequency domain units occupied by the first SRS resource, S is equal to S1 or S2, and N1 is an integer greater than or equal to S. The time domain OCC sequence corresponds to each of R/M time domain resource groups, M consecutive time domain units included in each time domain resource group correspond to M elements included in the time domain OCC sequence, and the R/M time domain resource groups are time domain resource groups for repeated transmission of the SRS. Alternatively, M elements in the time domain OCC sequence correspond to R consecutive time domain units, and the R consecutive time domain units are time domain units for repeated transmission of the SRS. R is a repetition factor corresponding to the first SRS resource, R is an integer greater than or equal to 2, and M is equal to M1 or M2. That is, the first OCC sequence configured by the network apparatus for the first SRS resource may enable the M-length time domain OCC sequence corresponding to the first OCC sequence to be mapped to the R time domain units occupied by the first SRS resource, and enable the S-length frequency domain OCC sequence corresponding to the first OCC sequence to be cyclically mapped to the N1 frequency domain units occupied by the first SRS resource, so that orthogonality of mapping to M time-frequency units can be ensured to a maximum extent, to ensure channel estimation performance of the SRS. In addition, when the repetition factor R is greater than M, time domain unit grouping and mapping may be performed, so that SRS resources configured with different time domain OCC lengths or repetition factors R can be multiplexed on a same time-frequency resource.

It may be understood that for details of the N1 frequency domain units occupied by the first SRS resource, refer to ${M}_{sc}^{SRS}$ in Formula (6). Details are not described herein.

In addition, mapping between the time domain OCC sequence and the time domain unit in step S701 is similar to that in step S501. For details, refer to the descriptions of the time domain OCC sequence and the R consecutive time domain units in step S501. Details are not described.

It may be further understood that when the quantity N1 of frequency domain units occupied by the first SRS resource is greater than the sequence length of the frequency domain OCC sequence (that is, a quantity of elements included in the frequency domain OCC sequence), the frequency domain OCC sequence may be cyclically mapped to the frequency domain units occupied by the first SRS resource. For example, in FIG. 1, when the comb spacing is K_{TC}=2, and the frequency domain OCC sequence is sequentially arranged as [1, 1, -1, -1], the frequency domain units occupied by the first SRS resource are subcarriers corresponding to the following subcarrier indexes: subcarrier indexes 0, 2, 4, 6, 8, 10, 12, 14, 16, 18, 20, and 22. In this way, the subcarrier indexes 0, 2, 4, and 6 may be respectively mapped to the four elements in the frequency domain OCC sequence in a one-to-one manner; the subcarrier indexes 10, 12, 14, and 16 may be respectively mapped to the four elements in the frequency domain OCC sequence in a one-to-one manner; and the subcarrier indexes 18 and 20 may be respectively mapped to first two elements in the frequency domain OCC sequence in a one-to-one manner.

It should be understood that S (that is, S1 or S2) is less than or equal to 4. In this way, orthogonality between the S frequency domain units on which the first OCC sequence is superimposed can be effectively ensured. It may be understood that because a comb spacing *K*_{TC} may be configured for the SRS resource, a quantity of frequency domain units between farthest spaced units in the S frequency domain units is (S-1)×*K*_{TC}-1, that is, orthogonality needs to be maintained across (S-1)×*K*_{TC}+1 frequency domain units. Therefore, in a scenario with severe frequency selective fading, if a value of S is excessively large, there is an excessively large span in the frequency domain, making it impossible to ensure orthogonality.

In a possible implementation, the first SRS resource includes at least one port, and an SRS sequence corresponding to each of the at least one port in an *l*'^{th} time domain unit in N2 time domain units is determined based on a k1^{th} element in the time domain OCC sequence, the frequency domain OCC sequence, and a first SRS sequence corresponding to each port. The first SRS sequence corresponding to each port is determined based on an SRS base sequence and a cyclic shift CS value that correspond to each port, and an *n*^{th} element in the SRS sequence corresponding to the *l*'^{th} time domain unit corresponds to a k2^{th} element in the frequency domain OCC sequence. The N2 time domain units are time domain units occupied by each port, k1=*l*' *mod M*, k2=*n mod S*, M is equal to M1 or M2, and S is equal to S1 or S2. That is, the SRS sequence corresponding to the *l*'^{th} time domain unit in the first SRS resource may be determined by using the k1^{th} element in the time domain OCC sequence corresponding to the first OCC sequence, cyclic mapping between a plurality of elements in the frequency domain OCC sequence corresponding to the first OCC sequence and the SRS sequence, and the first SRS sequence corresponding to each port. In this way, by using orthogonality between the first OCC sequence and another OCC sequence, more SRS resources can be superimposed and sent on R time-frequency resources, for repeatedly sending the SRS, corresponding to the first SRS resource.

It should be understood that the N2 time domain units may also be time domain units occupied by the first SRS resource.

It may be understood that the N2 time domain units may be N2 OFDM symbols occupied by each port in one slot, and the N2 OFDM symbols may be, for example, the ${N}_{symb}^{SRS}$ OFDM symbols in the preamble part. In addition, *mod* in k1=*l*' *mod M* may represent a modulo or remainder operation, and $1 \leq l ′ \leq {N}_{symb}^{SRS}$. The *l*'^{th} time domain unit may alternatively be represented by using an index or a number. For example, the index starts from 0, $0 \leq l ′ < {N}_{symb}^{SRS}$, and the time domain unit index *l'* represents an (*l*'+1)^{th} time domain unit in the ${N}_{symb}^{SRS}$ time domain units.

Similarly, the first SRS resource may occupy ${M}_{sc}^{SRS}$ frequency domain units, and $1 \leq n < {M}_{sc}^{SRS}$ . The *n*^{th} element in the SRS sequence may also be represented by using an index or a number. For example, the index starts from 0, $0 \leq n < {M}_{sc}^{SRS} - 1$, and an element index *n* in the SRS sequence represents an (*n*+1)^{th} element in the ${M}_{sc}^{SRS}$ frequency domain units.

It should be understood that when the first OCC sequence is a Walsh sequence or a DFT sequence, that the SRS sequence corresponding to the *l*'^{th} time domain unit is determined based on the k1^{th} element in the time domain OCC sequence, the frequency domain OCC sequence, and the first SRS sequence corresponding to each port may include: The SRS sequence corresponding to the *l*'^{th} time domain unit is determined by multiplying the k1^{th} element in the first OCC sequence by a second SRS sequence corresponding to each port. The second SRS sequence corresponding to each port is determined by multiplying the k2^{th} element in the frequency domain OCC sequence by an *n*^{th} element in the first SRS sequence corresponding to each port.

It may be understood that multiplying the k1^{th} element in the time domain OCC corresponding to the first OCC sequence by the second SRS sequence corresponding to each port or multiplying the k2^{th} element in the frequency domain OCC sequence by the *n*^{th} element in the first SRS sequence corresponding to each port is merely an example. Another manner may be used. For example, based on different values of elements in the first OCC sequence, the SRS sequence corresponding to the *l*'^{th} time domain unit may be determined by performing a mathematical operation such as conjugate multiplication, addition, or weighted summation. This is not specifically limited in this embodiment of this application.

In a possible implementation, the at least one port includes a port *p*ᵢ, and an SRS sequence *r^{(pi)}(n, l*') corresponding to the port *pᵢ* in the *l*' ^{th} time domain unit may be determined based on Formula (9). ${r}^{\left({p}_{i}\right)} \left(n,l′\right) = {w}_{t}^{\left(l′ mod M\right)} {w}_{f}^{\left(n mod S\right)} {r}^{\left({α}_{i}, δ\right)} \left(n\right) , 0 \leq n < {M}_{sc}^{SRS} - 1$ Formula (9)

Herein, n is an index of an element in the SRS sequence, ${M}_{sc}^{SRS} = {mN}_{sc}^{RB} / {2}^{δ}$, m is a quantity of resource blocks RBs occupied for frequency-hopping transmission of the SRS, ${N}_{sc}^{RB}$ is a quantity of subcarriers SCs included in one RB, *δ* = *log₂(K_{TC}), K_{TC}* is a comb spacing corresponding to the port *p*ᵢ, ${w}_{t}^{\left(l′ mod M\right)}$ is an (*l' mod M*)^{th} element in the time domain OCC sequence, ${w}_{f}^{\left(n mod S\right)}$ is an (*n mod S*)^{th} element in the frequency domain OCC sequence, *r^{(αi,δ)}*(*n*) is a first SRS sequence corresponding to the port *p*ᵢ, *r^{(αi,δ)}=e^{jαin}r̅*(*n), αᵢ* is a CS value corresponding to the port *p*ᵢ, *r̅*(*n*) is an SRS base sequence corresponding to the port *p*ᵢ, M is equal to M1 or M2, and S is equal to S1 or S2. That is, the terminal apparatus may determine, by multiplying the (*l' mod M*)^{th} element in the time domain OCC sequence corresponding to the first OCC sequence by the first SRS sequence *r*^{(*αi,δ*)}(*n*) corresponding to the port *pᵢ* and multiplying the (*n mod S*)^{th} element in the frequency domain OCC sequence corresponding to the first OCC sequence by an *n*^{th} element in *r*^{(*αi,δ*)}(*n*)*,* an SRS sequence on which the first OCC sequence is superimposed in the time domain and frequency domain. This can reduce implementation complexity of determining the SRS sequence corresponding to the port *pᵢ* in the *l*'^{th} time domain unit, and facilitate deployment.

It should be understood that the port *pᵢ* may represent an index of an (i+1)^{th} port in ${N}_{ap}^{SRS}$ ports included in the first SRS resource, that is, ${\left\{{p}_{i}\right\}}_{i = 0}^{{N}_{ap}^{SRS} - 1}$. Herein, *pᵢ* = 1000 *+ i,* that is, the port index corresponding to the SRS may start from a number 1000. It may be understood that the port index corresponding to the SRS may alternatively start from another number. This is not specifically limited in this embodiment of this application.

In addition, the (*l' mod M*)^{th} element ${w}_{t}^{\left(l′ mod M\right)}$ in the time domain sequence corresponding to the first OCC sequence may alternatively be expressed as *wₜ*(*l' mod M*)*,* and *wₜ*(*l' mod M*) represents an element value corresponding to an element index *l' mod M* in the time domain OCC sequence *wₜ*(*k*)*.* The *l*'^{th} time domain unit may alternatively be represented by using an index or a number. For example, the index starts from 0, $0 \leq l ′ < {N}_{symb}^{SRS}$*,* and the time domain unit index *l'* represents an (*l*'+1)^{th} time domain unit in the ${N}_{symb}^{SRS}$ time domain units. Further, the ( *n mod S* )^{th} element ${w}_{f}^{\left(n mod S\right)}$ in the frequency domain OCC sequence corresponding to the first OCC sequence may alternatively be expressed as *w_{f}*(*n mod S*)*,* and *w_{f}*(*n mod S*) represents an element value corresponding to an element index *n mod S* in the frequency domain OCC sequence *w_{f}(k).* In other words, Formula (9) may be modified to Formula (10). ${r}^{\left({p}_{i}\right)} \left(n,l′-1\right) = {w}_{t}^{\left(\left(l′-1\right)mod M\right)} {w}_{f}^{\left(n mod S\right)} {r}^{\left({α}_{i}, δ\right)} \left(n\right) , 0 \leq n < {M}_{sc}^{SRS} - 1$ Formula (10)

Alternatively, that the SRS sequence *r*^{(*pi*)}(*n, l'*) corresponding to the port *pᵢ* in the *l'*^{th} time domain unit may be determined by using Formula (9) may be replaced with the following: The SRS sequence *r*^{(*pi*)}(*n, l*') corresponding to the port *pᵢ* in a case of the time domain unit index *l'* may be determined by using Formula (9).

It may be understood that *r*^{(*αi,δ*)}(*n*) in Formula (9) or Formula (10) may be ${r}_{u , v}^{\left({α}_{i}, δ\right)} \left(n\right)$ in Formula (6). For details of another parameter such as *u, v, αᵢ, δ,* ${M}_{sc}^{SRS}$, m, ${N}_{sc}^{RB}$, or *K*_{TC}, refer to related descriptions of Formula (1) to Formula (6). Details are not described.

For example, the configuration information in step S701 may further include a quantity ${N}_{ap}^{SRS}$ of antenna ports, a transmission comb configuration parameter (for example, a higher-layer parameter *transmission Comb* in the SRS resource), and a time domain configuration parameter. The time domain configuration parameter may indicate a start symbol position l₀=10, ${N}_{symb}^{SRS} = 4$ occupied consecutive OFDM symbols, and the repetition factor R=4. That is, it indicates that in one slot, the first SRS resource occupies four consecutive OFDM symbols (OFDM symbol indexes are 10 to 13), and the SRS is repeatedly sent on the four consecutive OFDM symbols. If the configuration information indicates that the first OCC sequence corresponding to the first SRS resource is a sequence, namely, ${w}_{f} = \left[{w}_{f}^{0}, {w}_{f}^{1}\right] = \left[1, 1\right]$ and ${w}_{t} = \left[{w}_{t}^{0}, {w}_{t}^{1}, {w}_{t}^{2}, {w}_{t}^{3}\right] = \left[1,-1,1,-1\right]$, corresponding to the sequence index 1 in Table 7, an SRS sequence corresponding to the first SRS resource in a case of the OFDM symbol index 10 may be obtained based on the SRS sequence ${r}^{\left({p}_{i}\right)} \left(n,l′\right) = {w}_{t}^{\left(l′ mod M\right)} {w}_{f}^{\left(n mod S\right)} {r}^{\left({α}_{i}, δ\right)} \left(n\right)$ corresponding to the port *pᵢ* in the *l'* ^{th} time domain unit, that is, an ( l'+1)^{th} (*l*' = 0 ) OFDM symbol in the four OFDM symbols is ${r}^{\left({p}_{i}\right)} \left(n,l′=0\right) = {w}_{t}^{\left(0 mod 4\right)} {w}_{f}^{\left(n mod 2\right)} {r}^{\left({α}_{i}, δ\right)} \left(n\right) = {w}_{t}^{0} {w}_{f}^{\left(n mod 2\right)} {r}^{\left({α}_{i}, δ\right)} \left(n\right)$*.* Similarly, an SRS sequence corresponding to the first SRS resource in a case of the OFDM symbol 13 is obtained, that is, an (*l*'+1)^{th} (*l'* = 3) OFDM symbol in the four OFDM symbols is ${r}^{\left({p}_{i}\right)} \left(n,l′=3\right) = {w}_{t}^{\left(3 mod 4\right)} {w}_{f}^{\left(n mod 2\right)} {r}^{\left({α}_{i}, δ\right)} \left(n\right) = {w}_{t}^{3} {w}_{f}^{\left(n mod 2\right)} {r}^{\left({α}_{i}, δ\right)} \left(n\right)$ .

For step S702:
It may be understood that the configuration information may be carried in at least one of the following: an RRC message (or referred to as signaling), DCI, or a MAC PDU. The RRC message may be, for example, an RRC setup (RRC setup) message, an RRC resume (RRC resume) message, or an RRC reconfiguration (RRC reconfiguration) message. That is, the network apparatus may use the RRC message to carry the configuration information, so that the configuration for the SRS may be continuously effective in an RRC connection period, and the first OCC sequence corresponding to the first SRS resource does not need to be indicated during each time of scheduling. It may be understood that when the DCI or the MAC PDU carries the configuration information for the SRS, the network apparatus may dynamically indicate the first OCC sequence corresponding to the first SRS resource to the terminal apparatus.

In a possible implementation, the configuration information includes index information of the first OCC sequence, and the index information is used to determine the OCC sequence from the at least one candidate sequence set. That is, indication overheads of indicating the first OCC sequence by using the configuration information can be reduced by using the index information, and reliability of the configuration information can be improved.

For example, the index information may be sequence indexes in Table 5 to Table 12. Therefore, the frequency domain OCC sequence and the time domain OCC sequence corresponding to the first OCC sequence may be indicated by using the sequence indexes in Table 5 to Table 12.

It should be understood that the index information may include an index or an identifier of the first OCC sequence in the candidate sequence set, or other information that may be used to determine the first OCC sequence in the candidate sequence set. This is not specifically limited in this embodiment of this application.

In a possible implementation, the first OCC sequence is determined based on a time domain OCC sequence and a frequency domain OCC sequence, and the index information includes index information of the time domain OCC sequence and/or index information of the frequency domain OCC sequence. That is, the network apparatus may further separately indicate an index of the time domain OCC sequence corresponding to the first OCC sequence in the candidate sequence set and an index of the frequency domain OCC sequence corresponding to the first OCC sequence in the candidate sequence set, so that the terminal apparatus can determine the first OCC sequence. This can improve flexibility of indicating the first OCC sequence by the network apparatus.

In a possible implementation, the configuration information further includes indication information of the at least one candidate sequence set. That is, the network apparatus may configure the at least one candidate sequence set for the terminal apparatus, to indicate, to the terminal apparatus, a candidate sequence set that corresponds to the first SRS resource and that is expected by the network apparatus in a next period of time, so as to subsequently indicate the first OCC sequence by using an index in the candidate sequence set.

It may be understood that the indication information of the at least one candidate sequence set may be carried in an RRC message, and the index information may be carried in DCI or a MAC CE. This is not specifically limited in this embodiment of this application.

In addition, that the configuration information further includes the indication information of the at least one candidate sequence set may mean that the network apparatus may configure the at least one candidate sequence set in the at least two candidate sequence sets by using the configuration information, and another candidate sequence set may not be configured. In this way, indication overheads of the configuration information may be reduced.

For step S703:
It may be understood that the terminal apparatus may determine the first OCC sequence corresponding to the first SRS resource based on Formula (9) and the configuration information. A specific implementation is not described.

In this embodiment of this application, the first OCC sequence is determined based on the time domain OCC sequence and the frequency domain OCC sequence in the first candidate sequence set, and the first frequency domain OCC sequence in the T1 mutually orthogonal frequency domain OCC sequences corresponds to the A time domain OCC sequences in the T2 mutually orthogonal time domain OCC sequences, or the first time domain OCC sequence in the T2 mutually orthogonal time domain OCC sequences corresponds to the A frequency domain OCC sequences in the T1 mutually orthogonal frequency domain OCC sequences, to construct the first candidate sequence set. In this way, SRS resource multiplexing at different time-frequency granularities can be supported to adapt to different channel conditions, thereby meeting diversified SRS resource quantity multiplexing requirements and diversified channel estimation requirements.

It may be understood that in the foregoing embodiments, the method and/or steps implemented by the network apparatus may alternatively be implemented by a part (for example, a processor, a chip, a chip system, a circuit, a logical module, or software) that may be used in the network apparatus, and the method and/or steps implemented by the terminal apparatus may alternatively be implemented by a part (for example, a processor, a chip, a chip system, a circuit, a logical module, or software) that may be used in the terminal apparatus.

The foregoing mainly describes the solutions provided in this application. Correspondingly, this application further provides a communication apparatus. The communication apparatus is configured to implement the methods in the foregoing method embodiments. The communication apparatus may be the network apparatus in the foregoing method embodiments, or an apparatus including the network apparatus, or a part that may be used to calculate the network apparatus, for example, a chip or a chip system. Alternatively, the communication apparatus may be the terminal apparatus in the foregoing method embodiments, or an apparatus including the terminal apparatus, or a part that may be used to calculate the terminal apparatus, for example, a chip or a chip system.

It may be understood that to implement the foregoing functions, the communication apparatus includes corresponding hardware structures and/or software modules for performing the functions. A person skilled in the art should be easily aware that the example units, algorithm, and steps described with reference to embodiments disclosed in this specification can be implemented in this application by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that in embodiments of this application, division into the modules is an example, and is merely logical function division. In actual implementation, another division manner may be used.

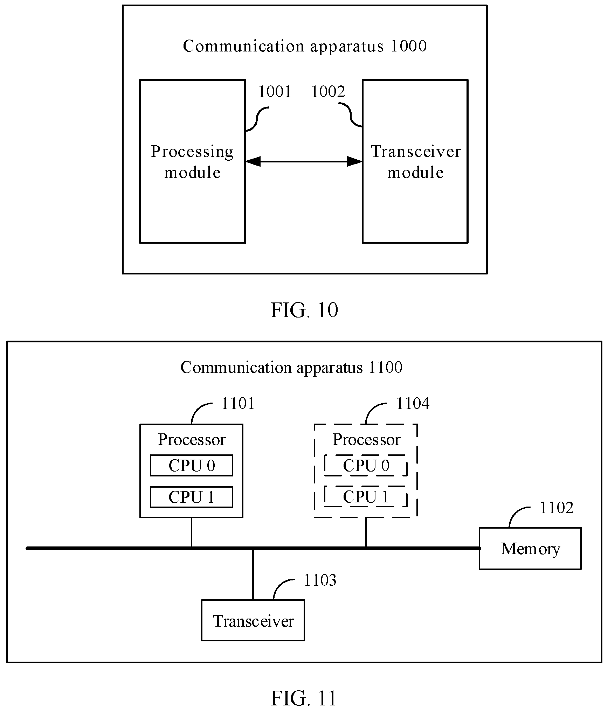

For example, the communication apparatus is the network apparatus or the terminal apparatus in the foregoing method embodiments. FIG. 10 is a diagram of a structure of a communication apparatus according to an embodiment of this application. As shown in FIG. 10, the communication apparatus 1000 includes a processing module 1001 and a transceiver module 1002. The processing module 1001 is configured to perform a processing function of the network apparatus or the terminal apparatus in the foregoing method embodiments. The transceiver module 1002 is configured to perform a receiving/sending function of the network apparatus or the terminal apparatus in the foregoing method embodiments.

All related content of the steps in the foregoing method embodiments may be cited in function descriptions of the corresponding functional modules. Details are not described herein.

The communication apparatus 1000 provided in this embodiment may perform the information transmission method. Therefore, for technical effects that can be achieved by the communication apparatus 1000, refer to the foregoing method embodiments. Details are not described herein.

In a possible design solution, in this embodiment of this application, the transceiver module 1002 may include a receiving module and a sending module (not shown in FIG. 10). The transceiver module is configured to implement a sending function and a receiving function of the communication apparatus 1000.

In a possible design solution, the communication apparatus 1000 may further include a storage module (not shown in FIG. 10). The storage module stores a program or instructions. When the processing module 1001 executes the program or the instructions, the communication apparatus 1000 is enabled to perform a function of the network apparatus or the terminal apparatus in the method shown in FIG. 10.

It should be understood that the processing module 1001 in the communication apparatus 1000 may be implemented by a processor or a processor-related circuit component, and may be a processor or a processing unit. The transceiver module 1002 may be implemented by a transceiver or a transceiver-related circuit component, and may be a transceiver or a transceiver unit.

For example, FIG. 11 is a diagram of a structure of another communication apparatus according to an embodiment of this application. The communication apparatus may be a network apparatus or a terminal apparatus, or may be a chip (system) or another part or component that may be disposed in a network apparatus or a terminal apparatus. As shown in FIG. 11, the communication apparatus 1100 may include a processor 1101.

In a possible design solution, the communication apparatus 1100 may further include a memory 1102 and/or a transceiver 1103. The processor 1101 is coupled to the memory 1102 and the transceiver 1103, for example, may be connected through a communication bus.

The following describes parts of the communication apparatus 1100 in detail with reference to FIG. 11.

The processor 1101 is a control center of the communication apparatus 1100, and may be one processor, or may be a general term of a plurality of processing elements. For example, the processor 1101 is one or more central processing units (central processing units, CPUs), may be an application-specific integrated circuit (application-specific integrated circuit, ASIC), or is configured as one or more integrated circuits for implementing embodiments of this application, for example, one or more microprocessors (digital signal processors, DSPs) or one or more field programmable gate arrays (field programmable gate arrays, FPGAs).

In a possible design solution, the processor 1101 may perform various functions of the communication apparatus 1100 by running or executing a software program stored in the memory 1102 and invoking data stored in the memory 1102. In a specific implementation, in an embodiment, the processor 1101 may include one or more CPUs, for example, a CPU 0 and a CPU 1 shown in FIG. 11.

In a specific implementation, in an embodiment, the communication apparatus 1100 may alternatively include a plurality of processors, for example, the processor 1101 and a processor 1104 shown in FIG. 11. Each of the processors may be a single-core processor (single-CPU), or may be a multi-core processor (multi-CPU). The processor herein may be one or more devices, circuits, and/or processing cores configured to process data (for example, computer program instructions).

The memory 1102 is configured to store a software program for executing the solutions in this application, and the processor 1101 controls execution. For a specific implementation, refer to the foregoing method embodiments. Details are not described herein.

In a possible design solution, the memory 1102 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer. However, this is not limited thereto. The memory 1102 may be integrated with the processor 1101, or may exist independently and is coupled to the processor 1101 through an interface circuit (not shown in FIG. 11) of the communication apparatus 1100. This is not specifically limited in this embodiment of this application.

The transceiver 1103 is configured to communicate with another communication apparatus. For example, the communication apparatus 1100 is a network apparatus, and the transceiver 1103 may be configured to communicate with a terminal apparatus or communicate with another network apparatus. For another example, the communication apparatus 1100 is a terminal apparatus, and the transceiver 1103 may be configured to communicate with a network apparatus or communicate with another terminal apparatus.

In a possible design solution, the transceiver 1103 may include a receiver and a transmitter (not separately shown in FIG. 11). The receiver is configured to implement a receiving function, and the transmitter is configured to implement a sending function.

In a possible design solution, the transceiver 1103 may be integrated with the processor 1101, or may exist independently and is coupled to the processor 1101 through an interface circuit (not shown in FIG. 11) of the communication apparatus 1100. This is not specifically limited in this embodiment of this application.

It should be understood that the structure of the communication apparatus 1100 shown in FIG. 11 does not constitute a limitation on the communication apparatus. An actual communication apparatus may include more or fewer parts than those shown in the figure, some parts may be combined, or different part arrangements may be used.

In addition, for technical effects of the communication apparatus 1100, refer to the technical effects of the information transmission method in the foregoing method embodiments. Details are not described herein.

In a possible implementation, an embodiment of this application further provides a computer-readable storage medium. The computer-readable storage medium stores a computer program or instructions, and when the computer program or the instructions are executed by a computer, the functions in the foregoing method embodiments are implemented.

In a possible implementation, an embodiment of this application further provides a computer program product. When the computer program product is executed by a computer, the functions in the foregoing method embodiments are implemented.

In a possible implementation, an embodiment of this application further provides a communication system. The communication system includes the network apparatus in the foregoing method embodiments and the terminal apparatus in the foregoing method embodiments.

In a possible implementation, an embodiment of this application further provides a communication method. The communication method includes the method in any one of the foregoing method embodiments or any implementation of the foregoing method embodiments.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that can be accessed by a computer, or a data storage device, such as a server or a data center, into which one or more usable media are integrated. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

A person of ordinary skill in the art may be aware that the example units, algorithm, and steps described with reference to embodiments disclosed in this specification can be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed working process of the system, apparatus, and unit described above, refer to a corresponding process in the foregoing method embodiments. Details are not described herein.

In the several embodiments provided in this application, it should be understood that the disclosed system, apparatus, and method may be implemented in other manners. For example, the apparatus embodiments described above are merely examples. For example, division into the units is merely logical function division. In actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions of embodiments. In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, the part contributing to the conventional technology, or some of the technical solutions may be implemented in a form of a software product. The computer software product is stored in a storage medium, and includes several instructions for enabling a computer device (which may be a personal computer, a server, a network apparatus, or the like) to perform all or some of the steps in the methods in embodiments of this application. The storage medium includes any medium that can store program code, for example, a USB flash drive, a removable hard disk, a read-only memory (read-only memory, ROM), a random access memory (random access memory, RAM), a magnetic disk, or an optical disc.

Although this application is described with reference to embodiments, in a process of implementing this application that claims protection, a person skilled in the art may understand and implement other variations to the disclosed embodiments by viewing the accompanying drawings, disclosed content, and appended claims. In the claims, the word "comprising" (comprising) does not exclude another component or step, and "a" or "one" does not exclude a case of plurality. A single processor or another unit may implement several functions listed in the claims. Some measures are recorded in dependent claims that are different from each other, but this does not mean that these measures cannot be combined to achieve better effect.

Although this application is described with reference to specific features and embodiments thereof, it is clear that various modifications and combinations may be made without departing from the scope of this application. Correspondingly, the specification and accompanying drawings are merely example descriptions of this application defined by the appended claims, and are considered as any of or all modifications, variations, combinations, or equivalents that cover the scope of this application. It is clear that a person skilled in the art may make various modifications and variations to this application without departing from the scope of this application. In this way, if these modifications and variations to this application fall within the scope of the claims of this application and their equivalent technologies, this application is also intended to cover these modifications and variations.

## Claims

1. An information transmission method, wherein the method comprises:
generating configuration information for a sounding reference signal SRS, wherein the configuration information indicates a first orthogonal cover code OCC sequence corresponding to a first SRS resource, a repetition factor corresponding to the first SRS resource is R, the first OCC sequence is a time domain OCC sequence determined from at least two candidate sequence sets, the at least two candidate sequence sets comprise a first candidate sequence set and a second candidate sequence set, the first candidate sequence set comprises T1 mutually orthogonal time domain OCC sequences each having a sequence length of M1, the second candidate sequence set comprises T2 mutually orthogonal time domain OCC sequences each having a sequence length of M2, 1<T1≤M1≤R, 1<T2≤M2≤R, M1 is different from M2, R is an integer greater than 2, and T1, T2, M1, and M2 are integers; and
sending the configuration information.

2. An information transmission method, wherein the method comprises:
receiving configuration information for a sounding reference signal SRS, wherein the configuration information indicates a first orthogonal cover code OCC sequence corresponding to a first SRS resource, a repetition factor corresponding to the first SRS resource is R, the first OCC sequence is a time domain OCC sequence determined from at least two candidate sequence sets, the at least two candidate sequence sets comprise a first candidate sequence set and a second candidate sequence set, the first candidate sequence set comprises T1 mutually orthogonal time domain OCC sequences each having a sequence length of M1, the second candidate sequence set comprises T2 mutually orthogonal time domain OCC sequences each having a sequence length of M2, 1<T1≤M1≤R, 1<T2≤M2≤R, M1 is different from M2, R is an integer greater than 2, and T1, T2, M1, and M2 are integers; and
determining the first OCC sequence based on the configuration information.

3. The method according to claim 1 or 2, wherein the first OCC sequence corresponds to each of R/M time domain resource groups, M consecutive time domain units comprised in each time domain resource group correspond to M elements comprised in the first OCC sequence, and the R/M time domain resource groups are time domain resource groups for repeated transmission of the SRS; or
M elements comprised in the first OCC correspond to R consecutive time domain units, and the R consecutive time domain units are time domain units for repeated transmission of the SRS,
wherein M is equal to M1 or M2.

4. The method according to any one of claims 1 to 3, wherein the first SRS resource comprises at least one port, an SRS sequence corresponding to each of the at least one port in an *l*'^{th} time domain unit of N time domain units is determined based on a k^{th} element in the first OCC sequence and a first SRS sequence corresponding to each port, the first SRS sequence corresponding to each port is determined based on an SRS base sequence and a cyclic shift CS value that correspond to each port, the N time domain units are time domain units occupied by each port, k=*l*' *mod M*, and M is equal to M1 or M2.

5. The method according to any one of claims 1 to 4, wherein the at least one port comprises a port *p*ᵢ, and an SRS sequence *r*^{(*pi*)}(*n, l'*) corresponding to the port *pᵢ* in the *l*'^{th} time domain unit is as follows: ${r}^{\left({p}_{i}\right)} \left(n,l′\right) = {w}_{t}^{\left(l′ mod M\right)} {r}^{\left({α}_{i}, δ\right)} \left(n\right) , 0 \leq n < {M}_{sc}^{SRS} - 1 ,$ wherein
*n* is an index of an element in the SRS sequence, ${M}_{sc}^{SRS} = {mN}_{sc}^{RB} / {2}^{δ}$, m is a quantity of resource blocks RBs occupied for frequency-hopping transmission of the SRS, ${N}_{sc}^{RB}$ is a quantity of subcarriers SCs comprised in one RB, *δ =* log₂(*K*_{TC})*, K_{TC}* is a comb spacing corresponding to the port *p*ᵢ, ${w}_{t}^{\left(l′ mod M\right)}$ is an (*l' mod M*)^{th} element in the first OCC sequence, M is equal to M1 or M2, *r*^{(*αi,δ*)}(*n*) is a first SRS sequence corresponding to the port *pᵢ*, *r*^{(*αi,δ*)}=*e^{jαin}r̅*(*n*)*, αᵢ* is a CS value corresponding to the port *pᵢ*, and *r̅*(*n*) is an SRS base sequence corresponding to the port *pᵢ*.

6. An information transmission method, wherein the method comprises:
generating configuration information for a sounding reference signal SRS, wherein the configuration information indicates a first orthogonal cover code OCC sequence corresponding to a first SRS resource, the first OCC sequence is determined based on a frequency domain OCC sequence and a time domain OCC sequence, the frequency domain OCC sequence and the time domain OCC sequence are determined from at least one candidate sequence set, the at least one candidate sequence set comprises a first candidate sequence set, the first candidate sequence set is determined based on T1 mutually orthogonal frequency domain OCC sequences and T2 mutually orthogonal time domain OCC sequences, a first frequency domain OCC sequence in the T1 mutually orthogonal frequency domain OCC sequences corresponds to A time domain OCC sequences in the T2 mutually orthogonal time domain OCC sequences, or a first time domain OCC sequence in the T2 mutually orthogonal time domain OCC sequences corresponds to A frequency domain OCC sequences in the T1 mutually orthogonal frequency domain OCC sequences, A is an integer greater than or equal to 2, and T1 and T2 are positive integers; and
sending the configuration information.

7. An information transmission method, wherein the method comprises:
receiving configuration information for a sounding reference signal SRS, wherein the configuration information indicates a first orthogonal cover code OCC sequence corresponding to a first SRS resource, the first OCC sequence is determined based on a frequency domain OCC sequence and a time domain OCC sequence, the frequency domain OCC sequence and the time domain OCC sequence are determined from at least one candidate sequence set, the at least one candidate sequence set comprises a first candidate sequence set, the first candidate sequence set is determined based on T1 mutually orthogonal frequency domain OCC sequences and T2 mutually orthogonal time domain OCC sequences, a first frequency domain OCC sequence in the T1 mutually orthogonal frequency domain OCC sequences corresponds to A time domain OCC sequences in the T2 mutually orthogonal time domain OCC sequences, or a first time domain OCC sequence in the T2 mutually orthogonal time domain OCC sequences corresponds to A frequency domain OCC sequences in the T1 mutually orthogonal frequency domain OCC sequences, A is an integer greater than or equal to 2, and T1 and T2 are positive integers; and
determining the first OCC sequence based on the configuration information.

8. The method according to claim 6 or 7, wherein the first candidate sequence set comprises T2 sequences, each of the T2 sequences comprises a frequency domain OCC sequence having a sequence length of S1 and a time domain OCC sequence having a sequence length of M1, S1<M1, T1≤S1, and T2≤M1; or
the first candidate sequence set comprises T1 sequences, each of the T1 sequences comprises a frequency domain OCC sequence having a sequence length of S1 and a time domain OCC sequence having a sequence length of M1, S1>M1, T1≤S1, and T2≤M, wherein
S1 and M1 are positive integers.

9. The method according to any one of claims 6 to 8, wherein the first candidate sequence set comprises T2 sequences, each of the T2 sequences comprises a frequency domain OCC sequence having a sequence length of S1 and a time domain OCC sequence having a sequence length of M1, the frequency domain OCC sequence having a sequence length of S1 is ${w}_{f} = \left[{w}_{f}^{0},{w}_{f}^{1},…,{w}_{f}^{S 1 - 1}\right]$, the time domain OCC sequence having a sequence length of M1 is ${w}_{t} = \left[{w}_{t}^{0},{w}_{t}^{1},…,{w}_{t}^{M 1 - 1}\right]$, an OCC sequence corresponding to each of the T2 sequences is an OCC sequence ${w}_{OCC} = \left[{w}_{f}^{0}{w}_{t}^{0},{w}_{f}^{0}{w}_{t}^{1},…,{w}_{f}^{0}{w}_{t}^{M 1 - 1},…,{w}_{f}^{S 1 - 1}{w}_{t}^{0},{w}_{f}^{S 1 - 1}{w}_{t}^{1},…,{w}_{f}^{S 1 - 1}{w}_{t}^{M 1 - 1}\right]$ having a sequence length of S1×M1, the OCC sequence corresponding to each sequence comprises S1 subsequences, a (j+qZ)^{th} subsequence in the S1 subsequences is ${s}_{j + qZ} =$ $\left[{w}_{f}^{Zq}{w}_{t}^{\frac{M 1}{Z} j},{w}_{f}^{Zq}{w}_{t}^{\frac{M 1}{Z} j + 1},…,{w}_{f}^{Zq}{w}_{t}^{\frac{M 1}{Z} \left(j+1\right) - 1},…,{w}_{f}^{Z \left(q+1\right) - 1}{w}_{t}^{\frac{M 1}{Z} j},{w}_{f}^{Z \left(q+1\right) - 1}{w}_{t}^{\frac{M 1}{Z} j + 1},…,{w}_{f}^{Z \left(q+1\right) - 1}{w}_{t}^{\frac{M 1}{Z} \left(j+1\right) - 1}\right]$, first subsequences with an index of j+qZ in OCC sequences corresponding to the respective sequences are mutually orthogonal, Z is a non-negative integer power of 2 and is less than M1, 0≤j<Z, $0 \leq q < \frac{S 1}{Z}$, and j and q are integers.

10. The method according to any one of claims 6 to 9, wherein the at least one candidate sequence set further comprises a second candidate sequence set, the second candidate sequence set is determined based on T3 mutually orthogonal frequency domain OCC sequences and T4 mutually orthogonal time domain OCC sequences, a second frequency domain OCC sequence the T3 mutually orthogonal frequency domain OCC sequences corresponds to A time domain OCC sequences in the T4 mutually orthogonal time domain OCC sequences, or a second time domain OCC sequence in the T4 mutually orthogonal time domain OCC sequences corresponds to A frequency domain OCC sequences in the T3 mutually orthogonal frequency domain OCC sequences, and a sequence length of the T4 mutually orthogonal time domain OCC sequences is different from that of the T2 mutually orthogonal time domain OCC sequences.

11. The method according to claim 9, wherein the second candidate sequence set comprises T4 sequences, each of the T4 sequences comprises a frequency domain OCC sequence having a sequence length of S2 and a time domain OCC sequence having a sequence length of M2, S2<M2, T3≤S2, T4≤M2, and M1 is different from M2; or
the second candidate sequence set comprises T3 sequences, each of the T3 sequences comprises a frequency domain OCC sequence having a sequence length of S2 and a time domain OCC sequence having a sequence length of M2, S2>M2, T3≤S2, and T4≤M2, wherein
S2 and M2 are positive integers.

12. The method according to any one of claims 6 to 11, wherein the frequency domain OCC sequence corresponds to each of N1/S frequency domain resource groups, S adjacent frequency domain units comprised in each frequency domain resource group correspond to S elements comprised in the frequency domain OCC sequence, the N1/S frequency domain resource groups are frequency domain resource groups for repeated transmission of the SRS, N1 is a quantity of frequency domain units occupied by the first SRS resource, S is equal to S1 or S2, and N1 is an integer greater than or equal to S; and
the time domain OCC sequence corresponds to each of R/M time domain resource groups, M consecutive time domain units comprised in each time domain resource group correspond to M elements comprised in the time domain OCC sequence, and the R/M time domain resource groups are time domain resource groups for repeated transmission of the SRS; or
M elements in the time domain OCC sequence correspond to R consecutive time domain units, and the R consecutive time domain units are time domain units for repeated transmission of the SRS,
wherein R is a repetition factor corresponding to the first SRS resource, R is an integer greater than or equal to 2, and M is equal to M1 or M2.

13. The method according to any one of claims 6 to 12, wherein the first SRS resource comprises at least one port, an SRS sequence corresponding to each of the at least one port in an *l*'^{th} time domain unit of N2 time domain units is determined based on a k1^{th} element in the time domain OCC sequence, the frequency domain OCC sequence, and a first SRS sequence corresponding to each port, the first SRS sequence corresponding to each port is determined based on an SRS base sequence and a cyclic shift CS value that correspond to each port, and an *n*^{th} element in the SRS sequence corresponding to the *l*'^{th} time domain unit corresponds to a k2^{th} element in the frequency domain OCC sequence; and
the N2 time domain units are time domain units occupied by each port, k1=*l' mod M, k2=n mod S,* M is equal to M1 or M2, and S is equal to S1 or S2.

14. The method according to any one of claims 6 to 13, wherein the at least one port comprises a port *p*ᵢ, and an SRS sequence *r*^{(*pi*)}(*n, l*') corresponding to the port *pᵢ* in the *l*'^{th} time domain unit is as follows: ${r}^{\left({p}_{i}\right)} \left(n,l′\right) = {w}_{t}^{\left(l′ mod M\right)} {w}_{f}^{\left(n mod S\right)} {r}^{\left({α}_{i}, δ\right)} \left(n\right) , 0 \leq n < {M}_{sc}^{SRS} - 1 ,$ wherein
*n* is an index of an element in the SRS sequence, ${M}_{sc}^{SRS} = {mN}_{sc}^{RB} / {2}^{δ}$*,* m is a quantity of resource blocks RBs occupied for frequency-hopping transmission of the SRS, ${N}_{sc}^{RB}$ is a quantity of subcarriers SCs comprised in one RB, *δ* = log₂(*K*_{TC})*, K*_{TC} is a comb spacing corresponding to the port *pᵢ*, ${w}_{t}^{\left(l′ mod M\right)}$ is an (*l' mod M*)^{th} element in the time domain OCC sequence, ${w}_{f}^{\left(n mod S\right)}$ is an (*n mod S*)^{th} element in the frequency domain OCC sequence, *r*^{*(αi,δ*)}(*n*) is a first SRS sequence corresponding to the port *pᵢ*, *r*^{(*αi,δ*)}=*e^{jαin}r̅*(*n*)*, αᵢ* is a CS value corresponding to the port *pᵢ*, *r̅*(*n*) is an SRS base sequence corresponding to the port *pᵢ*, M is equal to M1 or M2, and S is equal to S1 or S2.

15. The method according to any one of claims 1 to 14, wherein the configuration information comprises index information of the first OCC sequence, and the index information is used to determine the OCC sequence from the at least one candidate sequence set.

16. The method according to claim 15, wherein the first OCC sequence is determined based on a time domain OCC sequence and a frequency domain OCC sequence, and the index information comprises index information of the time domain OCC sequence and/or index information of the frequency domain OCC sequence.

17. The method according to claim 15 or 16, wherein the configuration information further comprises indication information of the at least one candidate sequence set.

18. A communication apparatus, wherein the communication apparatus comprises a module or a unit configured to perform the method according to any one of claims 1, 3 to 5, and 15 to 17, comprises a module or a unit configured to perform the method according to any one of claims 2 to 5 and 15 to 17, comprises a module or a unit configured to perform the method according to any one of claims 6 and 8 to 17, or comprises a module or a unit configured to perform the method according to any one of claims 7 to 17.

19. A communication apparatus, wherein the communication apparatus comprises a processor, and the processor is configured to enable, through a logic circuit and/or by executing instructions, the communication apparatus to perform the method according to any one of claims 1, 3 to 5, and 15 to 17, the communication apparatus to perform the method according to any one of claims 2 to 5 and 15 to 17, the communication apparatus to perform the method according to any one of claims 6 and 8 to 17, or the communication apparatus to perform the method according to any one of claims 7 to 17.

20. The communication apparatus according to claim 19, wherein the communication apparatus further comprises a memory, and the memory is configured to store the instructions.

21. The communication apparatus according to claim 19 or 20, wherein the communication apparatus further comprises a communication interface, and the communication interface is configured to input and/or output signaling and/or data.

22. A computer-readable storage medium, wherein the computer-readable storage medium comprises instructions, and when the instructions are run by a processor, the method according to any one of claims 1, 3 to 5, and 15 to 17 is implemented, the method according to any one of claims 2 to 5 and 15 to 17 is implemented, the method according to any one of claims 6 and 8 to 17 is implemented, or the method according to any one of claims 7 to 17 is implemented.

23. A computer program product, wherein the computer program product comprises instructions, and when the instructions are run on a computer, the computer is enabled to perform the method according to any one of claims 1, 3 to 5, and 15 to 17, the computer is enabled to perform the method according to any one of claims 2 to 5 and 15 to 17, the computer is enabled to perform the method according to any one of claims 6 and 8 to 17, or the computer is enabled to perform the method according to any one of claims 7 to 17.

24. A communication system, wherein the communication system comprises a network apparatus and a terminal apparatus; and the network apparatus is configured to perform the method according to any one of claims 1, 3 to 5, and 15 to 17, and the terminal apparatus is configured to perform the method according to any one of claims 2 to 5 and 15 to 17; or the network apparatus is configured to perform the method according to any one of claims 6 and 8 to 17, and the terminal apparatus is configured to perform the method according to any one of claims 7 to 17.
